(19) **Europäisches Patentamt**
**European Patent Office**
**Office européen des brevets**

(11) **EP 1 909 281 A1**

(12) **EUROPEAN PATENT APPLICATION**
published in accordance with Art. 153(4) EPC

(43) Date of publication:
**09.04.2008 Bulletin 2008/15**

(51) Int Cl.:
*G11B 27/00* (2006.01)     *G11B 20/10* (2006.01)
*G11B 20/12* (2006.01)     *H04N 5/85* (2006.01)
*H04N 5/91* (2006.01)      *H04N 5/93* (2006.01)

(21) Application number: **06781448.3**

(22) Date of filing: **21.07.2006**

(86) International application number:
**PCT/JP2006/314526**

(87) International publication number:
**WO 2007/013378 (01.02.2007 Gazette 2007/05)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **27.07.2005 JP 2005216992
27.09.2005 JP 2005280933
30.09.2005 JP 2005289091
19.10.2005 JP 2005304559
01.11.2005 JP 2005318894
25.05.2006 JP 2006145954**

(71) Applicant: **MATSUSHITA ELECTRIC INDUSTRIAL
CO., LTD.
Osaka 571-8501 (JP)**

(72) Inventors:
• **YAHATA, Hiroshi**
**c/o Matsushita Electr.Ind.**
**Chuo-ku, Osaka-shi, Osaka 540-6207 (JP)**
• **IKEDA, Wataru**
**c/o Matsushita Electr.Ind.**
**Chuo-ku, Osaka-shi, Osaka 540-6207 (JP)**
• **MATSUNAGA, Shigeki**
**c/o Matsushita Electr.Ind.**
**Chuo-ku, Osaka-shi, Osaka 540-6207 (JP)**

(74) Representative: **Pautex Schneider, Nicole
Véronique et al
Novagraaf International SA
25, avenue du Pailly
1220 Les Avanchets - Geneva (CH)**

(54) **INFORMATION RECORDING MEDIUM, RECORDING DEVICE, AND RECORDING METHOD**

(57)     The present invention includes an information recording medium on which a title, which is an AV content constituting a segment corresponding to a part of a digital stream or the entire digital stream, is recorded. The following is stored on said information recording medium: a playlist including information for identifying the title by specifying the position and the order of reproduction of the segment in the digital stream; a program for controlling the reproduction of the title by calling the playlist; "Index" where "TopMenu" for identifying the menu and "ProgramIDRef" for identifying the program are included in an associated manner; and "Extension" where "Top-Menu" and "PlayListID" are included in an associated manner.

FIG. 36

**EP 1 909 281 A1**

**Description**

**Technical Field**

The present invention relates to an information recording medium on which video data is recorded in a format with a menu allowing a user to instruct reproduction of the recorded video data, a recording device and a recording method of the same.

**BACKGROUND ART**

Representative of such information recording medium on which video data is recorded is DVD (hereinafter referred to as "Standard Definition (SD)-DVD"). Conventional DVD is described below.

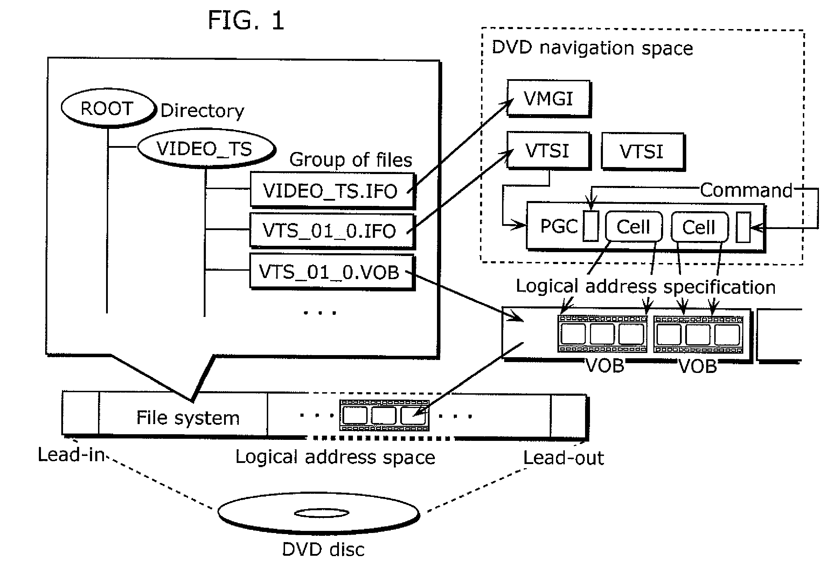

FIG. 1 is a diagram showing the structure of an SD-DVD. As shown in the bottom of FIG. 1, the DVD disc includes a logical address space in between the read-in area and the read-out area. In the logical address space, volume information of the file system is stored at the top, and application data such as video and audio is stored in the subsequent areas.

A file system is a mechanism for managing data established by International Organization for Standardization (ISO) 9660 and standards such as Universal Disc Format (UDF), and it is a mechanism for representing data on a disc by the unit which is referred to as a directory or file.

Even in the case of a personal computer (PC) used every day, data recorded in a file in a directory in a hard disk is represented on a computer using a file system such as File Allocation Tables (FAT) and NT File System (NTFS), which improves usability.

Both of the UDF and ISO 9660 are used in SD-DVDs as their file systems. Both are put together, and it is referred to as "UDF bridge." Data recorded on an SD-DVD can be read out also by the file system driver of either UDF or ISO 9660. In addition, DVDs handled here are ROM discs for the package media, and writing is impossible physically.

Data recorded on a DVD can be viewed as directories or files as shown in the upper left of FIG. 1 through a UDF bridge. Immediately below the root directory ("ROOT" in FIG. 1), a directory called "VIDEO_TS" is placed, where application data of the DVD is stored. Application data is stored as plural files. The following kinds of files are considered as main files.

VIDEO_TS.IFO Disc reproduction control information file
VTS_01_0.IFO Video title set #1 reproduction control information file
VTS_01_0.VOB Video title set #1 stream file

Two extensions as shown in the above example are defined. "IFO" is an extension indicating that reproduction control information is stored in a file with this extension. "VOB" is an extension indicating that an MPEG stream which is AV data is stored in a file with this extension.

The reproduction control information is, for example, information for realizing interactivity (technique for dynamically changing the state of reproduction according to a user operation) employed for the DVD, as well as information, such as metadata, which is attached to AV data. The reproduction control information of the DVD is called navigation information in general.

The reproduction control information files include "VIDEO_TS.IFO" intended for the management of the entire disc, and "VTS_01_0.IFO" which is the reproduction control information of an individual video title set. Note that plural titles, that is, different films and songs can be recorded in a single DVD disc.

Here, "01" in a filename body shows a video title set number. For example, in the case of video title set #2, the filename body is "VTS_02_0.IFO".

The upper right of FIG. 1 shows a DVD navigation space in the application layer of the DVD; that is, a logical structure space where details of the above-described reproduction control information are developed. As for the information in "VIDEO_TS.IFO", the reproduction control information which exists for every "VTS_01_0.IFO" or another video title set, as VIDEO Manager Information (VMGI) is developed in DVD navigation space as Video Title Set Information (VTSI).

Program Chain Information (PGCI) which is information of reproduction sequence referred to as Program Chain (PGC) is described in a VTSI. The PGCI is made up of a group of cells and a kind of programming information called a command.

Cell oneself is information specified as a part of a VOB (which is an abbreviation of Video Object, and which is an MPEG stream) or the entire VOB. Reproducing a cell means reproducing the part of the VOB specified by the cell or the entire VOB.

A command is processed by a DVD virtual machine, and is similar to, for example, Java (registered trademark) Script executed on a browser on which a Webpage is displayed. However, JAVA (registered trademark) script controls a window and a browser (for example, a window of a new browser is opened) in addition to logical operations. Unlike this, a command of DVD is intended only for controlling reproduction of AV titles such as specifying a chapter to be reproduced, in addition to performing logical operations.

A Cell has, as inside information, start and end addresses (logical addresses) of a VOB stored on a disc. A player reads data using the information about the start and end addresses of the VOB described in the Cell, and reproduces the data.

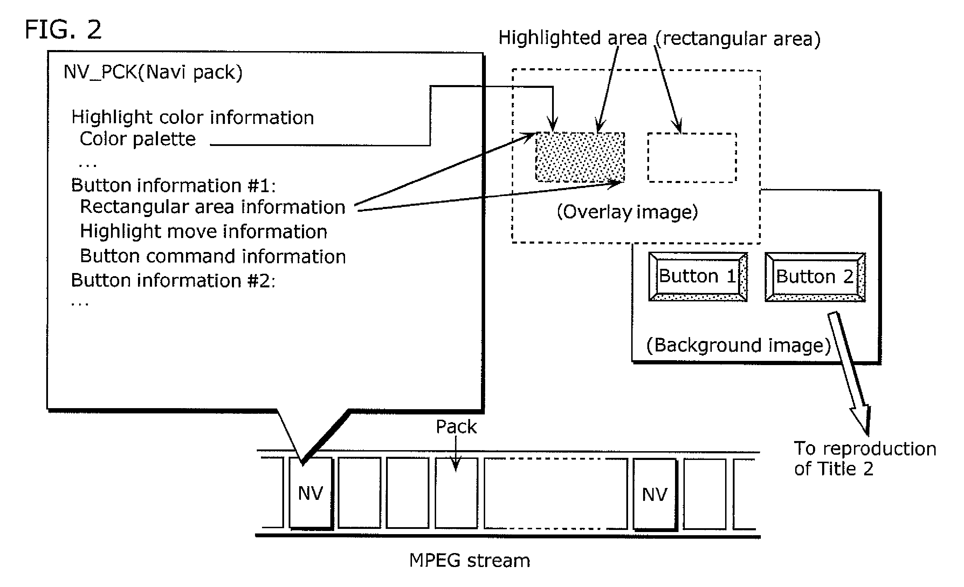

FIG. 2 is a schematic diagram illustrating navigation information embedded in an MPEG stream which is AV data.

Interactivity which is a characteristic of SD-DVDs is realized using not only the navigation information stored on "VIDEO_TS.IFO" and "VTS_01_0.IFO" but also some important information carried in exclusive carriers called navigation packs (also referred to as NV_PCK) multiplexed in a VOB together with video and audio data.

Here, a description is given of a menu screen as a simple example of interactivity. Several buttons appear on a menu screen. For each of the buttons, processing which is executed at the time when the button is selected and entered is defined.

In addition, one button is selected on the menu screen (the button is highlighted by being overlaid with semi-transparent color so as to show a user that the button is being selected), which allows the user to move the highlight indicating a selected button onto any of the buttons positioned upward, downward, leftward, or rightward using the Up, Down, left, or/and Right keys on a remote controller.

Moving the highlight onto the button desired to be selected and entered using the Up, Down, left, or/and Right keys of the remote controller, and entering the button (pressing the enter key) triggers execution of a program of a command associated with the button. In general, the reproduction of a title or a chapter is executed by a command (for example, refer to Patent Reference 1).

The upper left of FIG. 2 shows an overview of the information stored in NV_PCK. NV_PCK includes highlight color information and button information of each button. Highlight color information includes a description of color palette information with which a semi-transparent color used to be overlaid and highlighted in display is specified.

Each button information describes: rectangular area information that is information about the position of each button; move information indicating a move from one button to another button (specification of a destination button corresponding to a user selection of the Up, Down, Right, or/and Left key operation); and button command information (a command which is executed when the button is selected).

As shown in the upper right part of FIG. 2, a highlight on the menu screen is generated as an overlay image. The overlay image is obtained by adding one color in color palette information to rectangular area information of button information. Such overlay image is displayed on the screen, overlaid onto the background image shown in the right part of FIG. 2.

The menu screen of the DVD is obtained in the above-described manner. The reason why a part of navigation data is stored in NV_PCK and embedded in a stream is described below.

One of the reason is to perform the following processing which is likely to cause a problem concerning a synchronization timing without causing the problem: dynamically updating menu information in synchronization with a stream, for example, displaying the menu screen only for 5 to 10 minutes while a movie is being reproduced.

In addition, another important reason is to improve user operability, which is realized by storing information for supporting trick-play in NV_PCK so that AV data can be decoded and reproduced smoothly even in the case of special reproduction such as fast forwarding and rewinding in reproduction of the DVD.

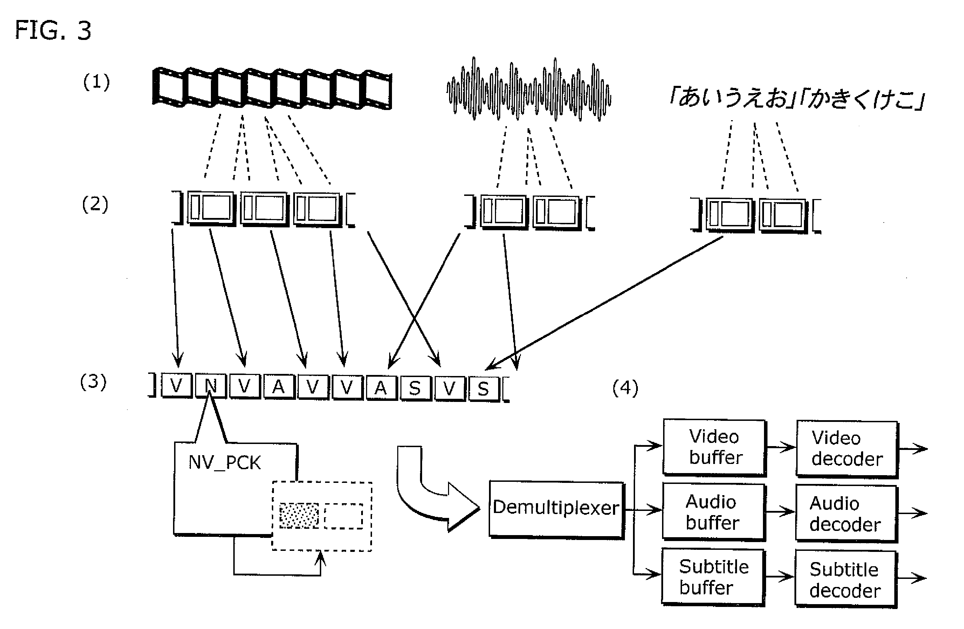

FIG. 3 is a schematic diagram showing the structure of a VOB in a DVD. As shown in the diagram, data such as video, audio, subtitles ((1) of FIG. 3) are stored in packets and packs ((2) of FIG. 3) according to MPEG system (ISO/IEC13818-1) standards, and the respective packets and packs are multiplexed in a single MPEG program stream ((3) of FIG. 3).

NV_PCK including button commands for realizing interactivity is multiplexed together as described above.

Data multiplexed in the MPEG system is characterized in that, while each data which is multiplexed forms a bit string based on the decoding order, the data which is multiplexed; that is, video data, audio data, and subtitle data are not necessarily arranged in the corresponding bit strings in the order of reproduction or decoding.

This is attributable to the fact that a decoder model for MPEG system streams (generally referred to as a "System Target Decoder" or an '"STD" (refer to FIG. 3 (4)) has decoder buffers corresponding to the respective elementary streams obtained by demultiplexing the multiplexed data, and such demultiplexed data are temporarily accumulated in the respective decoder buffers until the time of decoding.

The respective decoder buffers have different sizes for the corresponding elementary streams; 232 kB for video, 4 kB for audio, and 52 kB for subtitles.

Due to this, timings for data entry to the respective decoder buffers vary for individual elementary streams. This generates gaps in the order according to which such bit streams are formed as MPEG system streams and in the timings at which they are displayed (decoded).

In other words, the subtitle data multiplexed together with the video data is not necessarily decoded at the same timing as the timing at which the video data is decoded.

The above-described techniques for DVDs are described in the Patent Reference 2.

Patent Reference 1: Japanese Patent Application No. 8-83478 Publication
Patent Reference 2: Japanese Patent No. 2813245 Publication

## DISCLOSURE OF THE INVENTION

## PROBLEM TO BE SOLVED BY THE INVENTION

At present, many makers produce and widely distribute various video camera recorders (hereinafter simply referred to as "video cameras") which sequentially records digital contents (hereinafter simply referred to as "contents") such as video which has been captured onto a disc which is an information recording medium such as the above-mentioned DVD.

In addition, these video cameras have a function for generating original menu screens and writing something onto discs. These menu screens are referred to as "disc menus" hereinafter.

A user records video onto an information recording medium using a video camera. By reproducing the information recording medium using the player, the user can view a disc menu generated in the video camera. In addition, the user can select a title to be reproduced or the like from the menu.

However, in various video cameras manufactured in various makers, various files in a disc menu have various descriptions or structures.

In other words, it is substantially impossible that a second video camera of another maker interprets a disc menu generated in a first video camera of a certain maker.

Thus, -for example, in the case where a disc on which video has been recorded using the first video camera of the maker is loaded by the second video camera of the maker and a new title is added or the like, the second camera is required to delete the files related to the stored disc menu and generate a new disc menu.

In this case, the second video camera in which the disc has been loaded is required to perform a very difficult analysis operation of searching out the various files related to the stored disc menu by analyzing, for example, a program for controlling reproduction of the disc menu.

It takes a lot of time from when the disc is set to when operations such as recording of video can be started. This causes a problem that the various files cannot be substantially searched out.

In addition, in the case where files related to a disc menu which are now unnecessary but still exist are not deleted when a new disc menu is stored, unnecessary files are accumulated. This results in not only unnecessary occupation of recordable capacity of the disc, but also an increase in the processing load for file management performed in a recording device and a reproducing device which use the disc.

Considering the conventional problem, the present invention aims at providing an information recording medium, a recording device, and a recording method for eliminating intrinsically unnecessary processing load and processing time in a second recording device, in the case where a menu generated in a first recording device is stored onto an information recording medium and the recording medium is set in the second recording device.

## MEANS TO SOLVE THE PROBLEM

In order to achieve the above object, the information recording medium of the present invention is an information recording medium on which a title is recorded. The title is an audio and video (AV) content which constitutes a segment corresponding to a part of a digital stream or the entire digital stream. The following is stored on the information recording medium: a playlist including information for identifying the title by specifying a position and the order of reproduction of the segment in the digital stream; a program for controlling the reproduction of the title by calling the playlist; index information including, in an associated manner, title identification information for identifying the title and program identification information for identifying the program; and extension information including, in an associated manner, the title identification information and the playlist identification information for identifying the playlist.

With this, the recording device which uses the information recording medium of the present invention can easily identify a playlist relating to a menu which is one of the titles recorded on the information recording medium without analyzing a program which controls the reproduction of the menu when deleting the menu.

Thus, for example, in the case where a first video camera which is a recording device deletes a disc menu recorded on a disc by a second video camera, the recording device can identify the playlist relating to the disc menu and delete the playlist.

In addition, in this deletion work, there is no need to perform analysis or the like on the program, and the playlist to be deleted can be easily identified. In other words, intrinsically unnecessary processing load and processing time are not required in the recording device which uses the information recording medium of the present invention.

In addition, the recording device of the present invention records a digital stream onto the information recording medium. On the information recording medium, a title among recorded titles is a menu allowing a user to select a title other than the title which is the menu. The recording device includes: a playlist identifying unit which identifies a playlist which is called by a program which controls reproduction of the menu by using the playlist identification information included in the extension information associated with title identification information of the menu; a menu generating unit which generates a new menu to replace the stored menu and stores the new menu onto the information recording medium; and a deleting unit which deletes the playlist identified by the playlist identifying unit in the case where the new menu is generated by the menu generating unit.

With this, the recording device of the present invention can easily identify the playlist relating to the title and delete the playlist.

Thus, for example, in the case where the recording device of the present invention is implemented as the first video camera, the first video camera can easily delete the playlist relating to a disc menu from an information recording medium such as a DVD or a semiconductor memory on which the disc menu has been recorded by the second video camera made by a different maker.

In other words, the first video camera can generate a new disc menu after deleting the unnecessary file and store the new disc menu onto the information recording medium. In addition, by deleting the unnecessary file, it is possible to avoid unnecessary occupation of the recording capacity of the information recording medium, and avoid an increase in the processing load for file management.

Note that the present invention can be embodied not only as such an information recording device, but also as an integrated circuit having unique units that the information recording device has. These unique units may be implemented as LSIs respectively, or some or all of these may be integrated into a single LSI.

The present invention can also be embodied as a recording method having the steps corresponding to the unique units that the information recording device has, and as a program causing a computer to execute these steps. Such a program can be distributed on storage media such as CD-ROMs, and via transmission media such as the Internet.

The present invention can also be embodied as a reproducing device which reads information from the information recording medium of the present invention and reproduces the information, as a reproducing method having the steps corresponding to the unique units that the reproducing device has, and as a program causing a computer to execute these steps. Such a program can be distributed on storage media such as CD-ROMs, and via transmission media such as the Internet.

**EFFECT OF THE INVENTION**

The present invention enables provision of an information recording medium, a recording device, and a recording method for eliminating intrinsically unnecessary processing load and processing time in a second recording device, in the case where a menu generated in a first recording device is stored onto an information recording medium and the recording medium is set in the second recording device.

**Brief Description of Drawings**

[FIG. 1] FIG. 1 is a diagram showing the structure of an SD-DVD.
[FIG. 2] FIG. 2 is a schematic diagram illustrating navigation information embedded in an MPEG stream which is AV data.
[FIG. 3] FIG. 3 is a schematic diagram showing the structure of a VOB in a DVD.
[FIG. 4] FIG. 4 is a diagram showing a data hierarchy of a BD-ROM.
[FIG. 5] FIG. 5 is a diagram showing the structure of logical data stored on a BD-ROM.
[FIG. 6] FIG. 6 is a schematic diagram showing the basic structure of a BD-ROM player which reproduces a BD-ROM.
[FIG. 7] FIG. 7 is a detailed block diagram showing the structure of the player shown in FIG. 6.
[FIG. 8] FIG. 8 is a diagram showing application space of a BD-ROM.
[FIG. 9] FIG. 9 is a diagram showing the structure of an MPEG stream (VOB).
[FIG. 10] FIG. 10 is a diagram showing the structure of a pack in an MPEG stream.
[FIG. 11] FIG. 11 is a diagram illustrating the relationship between AV data and the structure of a player.
[FIG. 12] FIG. 12 is a diagram illustrating a model for continuous supply of VOB data using a track buffer.
[FIG. 13] FIG. 13 is a diagram showing the internal structure of a VOB management information file.
[FIG. 14] FIG. 14 is a diagram illustrating the details of each VOBU information.
[FIG. 15] FIG. 15 is a diagram illustrating a method for obtaining address information using a time map.
[FIG. 16] FIG. 16 is a diagram showing the structure of a playlist.

[FIG. 17] FIG. 17 is a diagram showing the structure of an event handler table.

[FIG. 18] FIG. 18 is a diagram showing the structure of BD.INFO which is the entire BD-ROM information.

[FIG. 19] FIG. 19 is a diagram showing the structure of an event handler table.

[FIG. 20] FIG. 20 is a diagram showing an example of a time event.

[FIG. 21] FIG. 21 is a diagram showing an example of a user event triggered by menu operation performed by a user.

[FIG. 22] FIG. 22 is a diagram showing an example of a global event.

[FIG. 23] FIG. 23 is a diagram illustrating the functional structure of a program processor.

[FIG. 24] FIG. 24 is a diagram showing a list of system parameters (SPRMs).

[FIG. 25] FIG. 25 is a diagram showing an example of a program in an event handler concerning control of a menu screen having two selection buttons.

[FIG. 26] FIG. 26 is a diagram showing an example of a program in an event handler concerning a user event for menu selection.

[FIG. 27] FIG. 27 is a flowchart showing a flow of basic processing for reproducing AV data in a BD-ROM player.

[FIG. 28] FIG. 28 is a flowchart showing a flow of processing from the start of reproducing a playlist in a BD-ROM player to the end of reproducing VOBs.

[FIG. 29] FIG. 29(A) is a flowchart showing a flow of processing concerning a time event in a BD-ROM player, and FIG. 29(B) is a flowchart showing a flow of processing concerning a user event in the BD-ROM player.

[FIG. 30] FIG. 30 is a flowchart showing a flow of processing subtitle data in a BD-ROM player.

[FIG. 31] FIG. 31 is a diagram showing examples of menus displayed in a recorder and a player which use a disc in a Second Embodiment.

[FIG. 32] FIG. 32 is a diagram showing details of BD.INFO in the Second Embodiment.

[FIG. 33] FIG. 33 is a diagram showing details of BD.PROG in the Second Embodiment.

[FIG. 34] FIG. 34 is a diagram showing an example of transition in display and operations concerning menu display and title reproduction.

[FIG. 35] FIG. 35(A) is a diagram showing how each file such as BD.INFO is handled in update of a disk menu, and FIG. 35(B) is a diagram illustrating the meaning of numbers shown in FIG. 35(A).

[FIG. 36] FIG. 36 is a diagram showing how information for identifying a playlist is stored in "Extension" of BD.INFO.

[FIG. 37] FIG. 37 shows diagrams showing examples of the associations between titles and playlists (contents) before and after update of a disc menu in the Second Embodiment.

[FIG. 38] FIG. 38 is a functional block diagram showing the functional structure of a recorder in the Second Embodiment.

[FIG. 39] FIG. 39 is a flowchart showing the outline of an operation flow for updating a title structure in recording and editing performed in a recorder 400 of the Second Embodiment.

[FIG. 40] FIG. 40 is a diagram showing the structure of a file which stores the entire BD disk management information and Title information in a Third Embodiment.

[FIG. 41] FIG. 41 is a diagram showing the structure of a file which stores Object information storing a program in the Third Embodiment.

[FIG. 42] FIG. 42 is a diagram showing an example of multiplexing in a BD-ROM in the Third Embodiment.

[FIG. 43] FIG. 43 is a diagram showing a data structure of a page having a navigation function in the Third Embodiment.

[FIG. 44] FIG. 44 is a diagram showing the data structure of a button having a navigation function in the Third Embodiment.

[FIG. 45] FIG. 45 is a diagram showing an example of a navigation function in the Third Embodiment.

[FIG. 46] FIG. 46 is a diagram showing an example of the structure of a slideshow function in the Third Embodiment.

[FIG. 47] FIG. 47(A) is a diagram showing an example of a reproduction menu in the Third Embodiment, and FIG. 47(B) is a diagram showing an example of transition in a menu screen in the Third Embodiment.

[FIG. 48] FIG. 48 is a diagram showing an example of a playlist referred to by each Title and an example of metadata storing object information in the Third Embodiment.

[FIG. 49] FIG. 49 is a diagram showing an example in the case of storing metadata in IndexExtentionData() in a Fourth Embodiment.

[FIG. 50] FIG. 50 is a diagram showing the relationships between: a RealPlayList (real scenario information) and VirtaulPlayList (virtual scenario information); and Shot (shots) (a shot is a video unit which has been captured or recorded) in the Fourth Embodiment.

[FIG. 51] FIG. 51 is a diagram showing the relationship between each Mark showing a leading Shot and the image capturing order of shots (Shot) in the Fourth Embodiment.

[FIG. 52] FIG. 52(A) is a diagram showing an example of a data structure of metadata in the Fourth Embodiment, and FIG. 52(B) is a diagram showing an example of a Shot menu generated based on the metadata shown in FIG. 52(A).

[FIG. 53] FIG. 53 is a diagram showing an example in the case of storing part of metadata in IndexExtentionData() in a Fifth Embodiment.

[FIG. 54] FIG. 54 is a diagram showing an example in the case of storing part of metadata in PlayListExtentionData () in the Fifth Embodiment.

[FIG. 55] FIG. 55(A) is a diagram showing an example of a data structure of metadata in the Fifth Embodiment, and FIG. 55(B) is a diagram showing an example of a Shot menu generated based on the metadata shown in FIG. 55(A).

[FIG. 56] FIG. 56 is a diagram showing an example where image-capturing date information is lost by editing video.

[FIG. 57] FIG. 57 is a diagram showing a method, in a Sixth Embodiment, for holding the date of image capturing even in editing using marks (Mark).

[FIG. 58] FIG. 58 is a diagram illustrating the storage position of metadata in a Seventh Embodiment.

[FIG. 59] FIG. 59 is a diagram illustrating the data structure of metadata in the Seventh Embodiment.

[FIG. 60] FIG. 60 is a diagram illustrating the identification information (ID) and type of metadata in the Seventh Embodiment.

[FIG. 61] FIG. 61 is a flowchart showing obtaining processing of metadata in the Seventh Embodiment.

[FIG. 62] FIG. 62 is a diagram illustrating that information of same kind is stored in a DV and an EXIF.

[FIG. 63] FIG. 63 is a diagram illustrating recording rules in the case where information of same kind is stored.

[FIG. 64] FIG. 64 is a diagram illustrating data structure of a stream recorded on a BD-ROM disc.

[FIG. 65] FIG. 65 is a diagram illustrating a data structure concerning a conventional slideshow.

[FIG. 66] FIG. 66 is a diagram illustrating a data structure concerning a slideshow in the Eighth Embodiment.

[FIG. 67] FIG. 67 is a diagram illustrating a data structure of a Still Unit in the Eighth Embodiment.

[FIG. 68] FIG. 68 is a diagram illustrating a still-image slideshow using a sub-image in the Eighth Embodiment.

[FIG. 69] FIG. 69 is a flowchart showing a flow of processing for generating a still-image slideshow using a sub-image in the Eighth Embodiment.

## DENOTATION OF REFERENCE NUMERALS

| | |
|---|---|
| 1 | BD-ROM player |
| 2 | Audio Player |
| 104 | BD-ROM |
| 105 | Disc |
| 202 | Optical pickup |
| 203 | Program storage memory |
| 204 | Management information storage memory |
| 205 | AV storage memory |
| 206 | Program processing unit |
| 207 | Management information processing unit |
| 208 | Presentation processing unit |
| 209 | Image plane |
| 210 | Video plane |
| 211 | Overlay processing unit |
| 302 | Program processor |
| 303 | UO manager |
| 305 | Scenario processor |
| 306 | Presentation controller |
| 307 | Clock |
| 308 | Image memory |
| 309 | Track buffer |
| 310 | Demultiplexer |
| 311 | Image processor |
| 312 | Video processor |
| 313 | Sound processor |
| 317 | Drive controller |
| 400 | Recorder |
| 401 | Playlist identifying unit |
| 402 | Deleting unit |
| 403 | Menu generating unit |
| 404 | Maker judging unit |

405 Receiving unit
406 Editing unit
407 Number reading unit
408 Image capturing unit
409 Display unit
S801 Recording and editing starting step
S802 BD.INFO, BD.PROG reading step
S803 Title number obtaining step
S804 Related file update step
S805 New title number assigning step
S806 Dummy data assigning step
S807 Updated BD.INFO and updated BD.PROG writing step

**Best Mode for Carrying Out the Invention**

A preferred embodiment for carrying out the present invention will be described below with reference to the attached drawings.

The Second Embodiment is the embodiment closest to the invention of Claim 1 of the present application. However, for easier understanding, the First Embodiment having basic structures of an information recording medium in the Second Embodiment will be described first.

(First Embodiment)

First, the basic structures and operations of a BD (Blu-ray Disc)-ROM and a BD (Blu-ray Disc)-ROM player which reproduces the BD-ROM are described with reference to FIG. 1 to FIG. 30.

(Logical Data Structure on Disc)

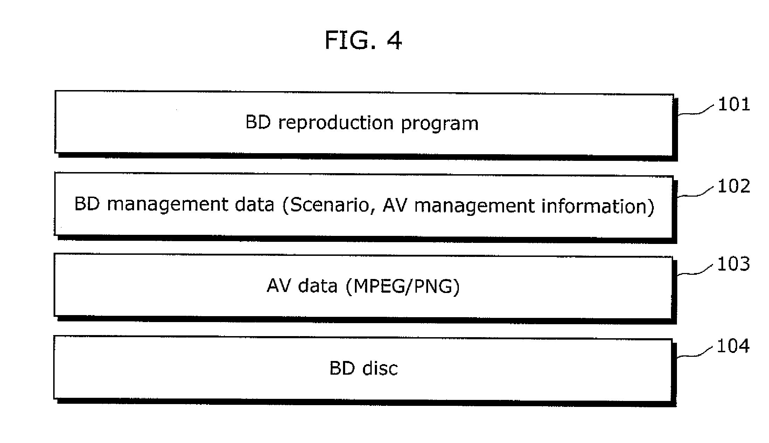

FIG. 4 is a diagram showing a data hierarchy of a BD-ROM.

As shown in FIG. 4, stored on the BD-ROM 104 are: AV data 103; BD management information 102 including AV data management information, an AV reproduction sequence, and the like; and a BD reproduction program 101 for realizing interactivity.

Note that entity data of each title exists as AV data 103, and scenario control description data (hereinafter simply referred to as a "scenario") of each title exists as BD management information 102.

A description is given of the BD-ROM focusing on an AV application for reproducing AV contents such as movies in this embodiment, but it should be noted that it is possible to use the BD-ROM as a recording medium for computers as well as a CD-ROM and a DVD-ROM.

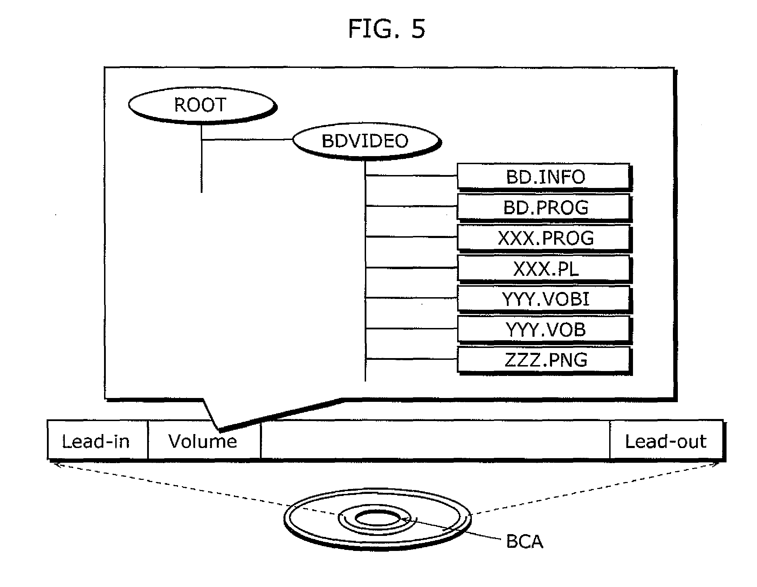

FIG. 5 is a diagram showing the structure of logical data stored on the BD-ROM 104. As in the case of other optical discs such as DVDs and CDs, the BD-ROM 104 has storage areas that are spirally formed in a direction from the inner radius toward the outer radius, as well as a logical address space for storing logical data in between the read-in area at the inner radius and the read-out area at the outer radius.

In addition, the inward of read-in includes a special area that can be read only by a drive as referred to as Burst Cutting Area (BCA). Since this area cannot be read from an application, it is used, for example, for copyright protection technique.

In the logical address space, file system information (volume) is stored at the top of the space, and application data such as video data is stored in the subsequent areas. The file system is a mechanism for managing data specified according to standards such as the UDF and the ISO 9660, as described in the BACKGROUND ART. With the mechanism, it is possible to read logical data stored in the same way as a normal PC using a directory and a file structure.

In this embodiment, according to the structures of the directories and files on the BD-ROM 104, a BDVIDEO directory is located immediately below the root directory (ROOT). Recorded in this directory are: AV data and data such as management information data recorded onto the BD-ROM (BD reproduction program 101, BD management information 102, and AV data 103 which are shown in FIG. 4).

Seven types of files described below are stored under the BDVIDEO directory.

BD.INFO (fixed file name)

The file, which forms a part of the "BD management information", is a file on which information related to the entire BD-ROM is stored. This is the first file which is read out by a BD-ROM player.

BD.PROG (fixed file name)

The file, which forms a part of the "BD reproduction program", is a file on which information related to the entire BD-ROM is stored.

XXX.PL (variable "XXX" with fixed extender "PL")

The file, which forms a part of the "BD management information", is a file on which playlist (PlayList) information storing a scenario is stored. This file is included in each playlist.

XXX.PROG (variable "XXX" with fixed extender "PROG")

The file, which forms a part of the "BD reproduction program", is a file on which a program for each playlist is stored. The association with the playlist is identified by the file body name (including the same "XXX".)

YYY.VOB (variable "YYY" with fixed extender "VOB")

The file, which forms a part of the "AV data", is a file on which the VOB (which is the same as the one described in "BACKGROUND OF THE INVENTION") is stored. One VOB corresponds to one file.

YYY.VOBI (variable "YYY" with fixed extender "VOBI")

The file, which forms a part of the "BD management information", is a file on which management information related to a VOB which is AV data is stored The association with VOB is identified by the file body name (including the same "YYY")

ZZZ.PNG (variable "ZZZ" with fixed extender "PNG")

The file, which forms a part of the "AV data", is an image file having a PNG format for constructing subtitles and a menu screen (the PNG is an image format standardized by the World Wide Web Consortium (W3C), and is pronounced "ping".) One PNG image corresponds to one file.

(Structure of Player)

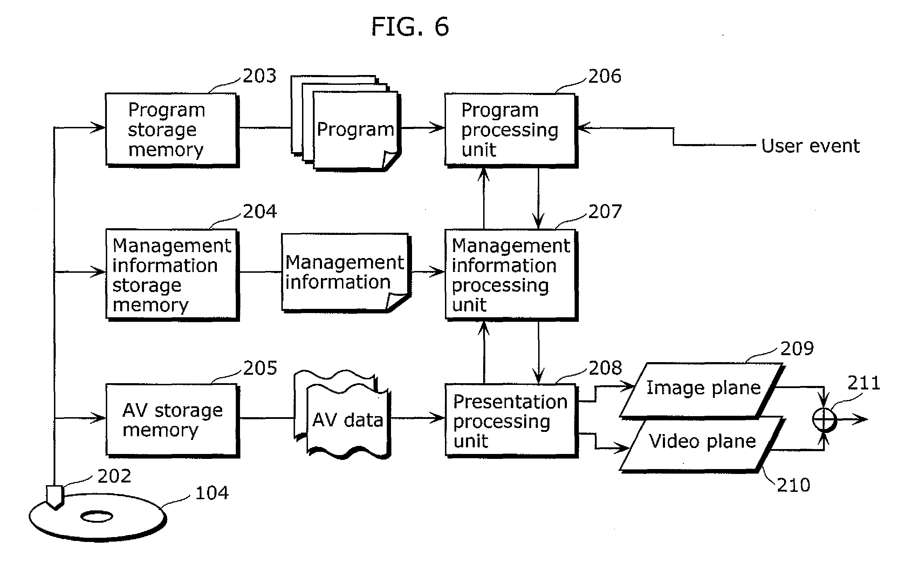

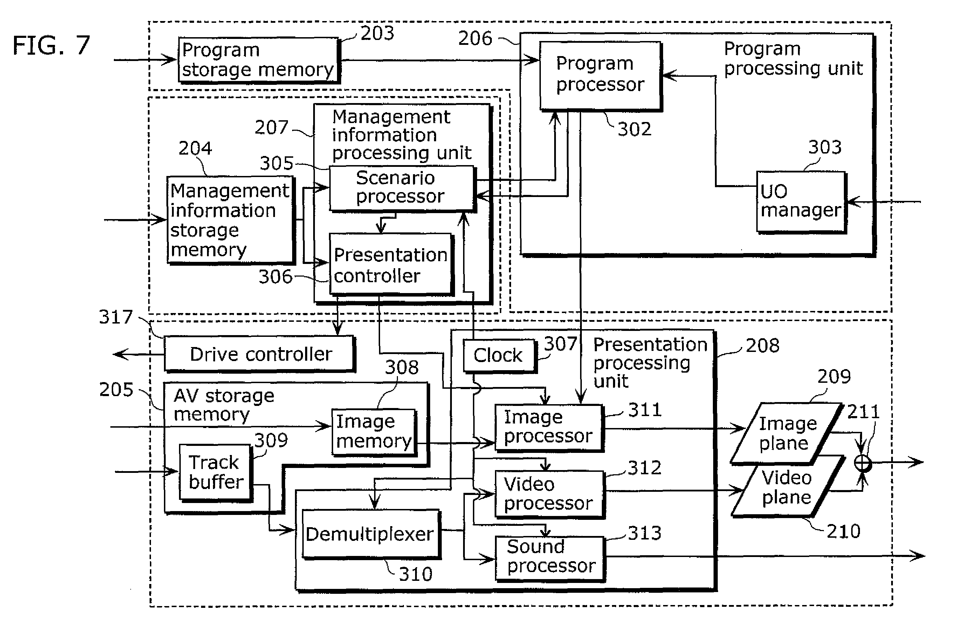

Next, a description is given of the structure of a player which reproduces the above-described BD-ROM 104 with reference to FIG. 6 and FIG. 7.
FIG. 6 is a schematic diagram showing the basic structure of a BD-ROM player which reproduces a BD-ROM 104.
In the BD-ROM player shown in FIG. 6, data in the BD-ROM 104 is read through an optical pickup 202. Each read data is recorded in an exclusive memory depending on the type of such data.
The BD reproduction program ("BD.PROG" or an "XXX.PROG" file) is stored in a program storage memory 203, the BD management information (a "BD.INFO", "XXX.PL" or "YYY.VOBI" file) is stored in a management information storage memory 204, and AV data (a "YYY.VOB" or "ZZZ.PNG" file) is stored in an AV storage memory 205.
The BD reproduction program stored in the program storage memory 203 is processed by a program processing unit 206. The BD management information stored in the management information storage memory 204 is processed by a management information processing unit 207.
The AV data stored in the AV storage memory 205 is processed by a presentation processing unit 208.
The program processing unit 206 receives, from the management information processing unit 207, information about a playlist to be reproduced and event information such as timing for executing a program, and then executes the program. In addition, it is possible to dynamically exchange playlists to be reproduced by a program. Such exchange can be achieved by transmitting an instruction for reproducing a playlist to be reproduced to the management information processing unit 207.
The program processing unit 206 receives an event from the user; that is, a request made by the user using a remote controller, and if there is the program corresponding to such event from the user, executes the program.
The management information processing unit 207 receives an instruction from the program processing unit 206, and analyzes the corresponding playlist and management information of a VOB corresponding to the playlist. Furthermore, the management information processing unit 207 instructs the presentation processing unit 208 to reproduce AV data to be reproduced.
Furthermore, the management information processing unit 207 receives reference time information from the presentation processing unit 208, and instructs the presentation processing unit 208 to end the reproduction of the AV data based on the reference time information. Further, the management information processing unit 207 generates an event, used to give an instruction to the program processing unit 206, indicating the timing for executing the program.

The presentation processing unit 208, which has decoders corresponding to video, audio, and subtitles respectively, decodes and outputs the AV data according to an instruction from the management information processing unit 207. Video data and subtitle data are decoded and drawn in the plains for exclusive use of the respective data.

More specifically, video data is drawn in a video plane 210, and image data such as subtitle data is drawn in an image plane 209. The images drawn onto the video plane 210 and image plane 209 are overlaid by an overlay processing unit 211, and the overlay images are outputted to a display device such as a television.

As shown in FIG. 6, a BD-ROM player is structured in accordance with the structure of the data stored in a BD-ROM 104 shown in FIG. 4.

FIG. 7 is a block diagram showing in detail the structure of the player shown in FIG. 6. The associations between structural parts shown in FIG. 6 and the structural parts shown in FIG. 7 are shown below.

The AV storage memory 205 corresponds to an image memory 308 and a track buffer 309. The program processing unit 206 corresponds to a program processor 302 and a User Operation (UO) manager 303. The management information processing unit 207 corresponds to a scenario processor 305 and a presentation controller 306. The presentation processing unit 208 corresponds to a clock 307, a demultiplexer 310, an image processor 311, a video processor 312, and a sound processor 313.

The VOB data (MPEG stream) read from the BD-ROM 104 is recorded in the track buffer 309 and image data (PNG) is recorded in the image memory 308.

The demultiplexer 310 extracts the VOB data stored in the track buffer 309 based on the time indicated by the clock 307. Further, the demultiplexer 310 sends the video data included in the VOB data to the video processor 312, and sends the audio data to the sound processor 313.

The video processor 312 and the sound processor 313 are each structured with a decoder buffer and a decoder, as defined by the MPEG system standard. In other words, the video data and audio data inputted from the demultiplexer 310 are temporarily stored in the respective decoder buffers and decoded by the respectively corresponding decoders according to the time indicated by the clock 307.

The PNG data stored in the image memory 308 is processed using two methods described below. First, in the case where the PNG data is subtitle data, the presentation controller 306 gives an instruction about decoding timing. A scenario processor 305 temporarily receives time information from a clock 307, and at the (starting and ending) time of displaying subtitles, it instructs the presentation controller 306 to start or end display of subtitles so that subtitles are displayed appropriately.

The image processor 311, upon receipt of an instruction from the presentation controller 306 to decode and display the image data, reads out the corresponding PNG data from the image memory 308, decodes it, and draws the decoded data onto the image plane 209.

In addition, in the case where the PNG data is for menu screen, the program processor 302 gives an instruction about decoding timing. Timing at which the program processor 302 gives an instruction to decode the image data depends on BD program processed by the program processor 302, and thus it is not simply determined.

As described with reference to FIG. 6, the image data and video data are decoded and drawn respectively onto the image plane 209 and the video plane 210, and are overlaid by the overlay processing unit 211 and outputted.

Management information (a scenario, AV management information) read by the BD-ROM 104 is stored in a management information storage memory 204, but scenario information ("BD.INFO" and "XXX.PL") is read and processed by the scenario processor 305. In addition, AV management information (a "YYY.VOBI" file) is read and processed by the presentation controller 306.

The scenario processor 305 analyzes information of a playlist, indicates, to the presentation controller 306, the VOB referred to using the playlist and the reproduction position of the VOB. The presentation controller 306 analyzes management information ("YYY.VOBI") of the current VOB to be reproduced, and instructs the drive controller 317 to read the current VOB.

According to the instruction from the presentation controller 306, the drive controller 317 reads out the current AV data by moving the optical pick-up. The read AV data is stored into the image memory 308 or the track buffer 309, as described above.

The scenario processor 305 monitors the time indicated by the clock 307, and outputs, to the program processor 302, an event at the timing which is set in the management information.

The BD program ("BD.PROG" or "XXX.PROG") stored in the program storage memory 203 is processed by the program processor 302. The program processor 302 processes the BD program in the case where an event is sent from the scenario processor 305 or where an event is sent from the UO manager 303.

The UO manager 303 generates an event corresponding to the request and sends it to the program processor 302 in the case where a request is sent from the user using a remote control key.

The respective structural units operate in this way in the reproduction of a BD-ROM.

(Application Space)

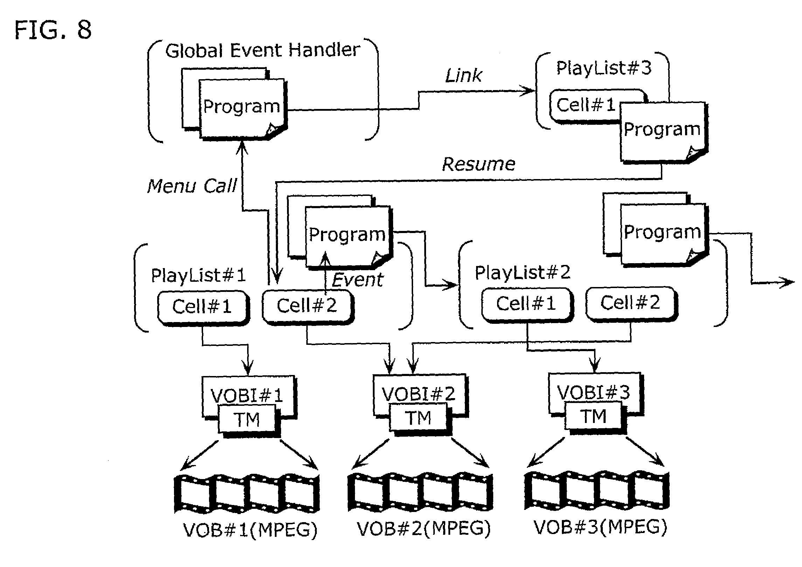

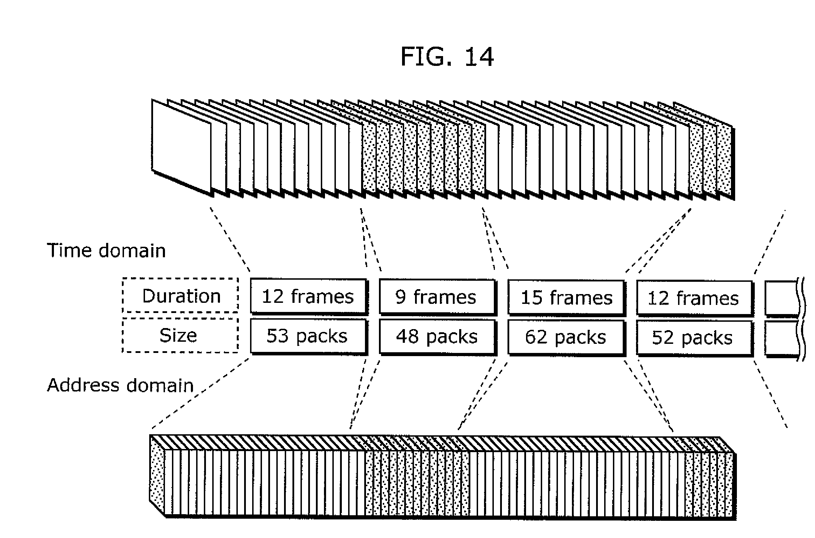

FIG. 8 is a diagram showing application space of a BD-ROM.
In the application space on the BD-ROM, a playlist (PLayList) serves as a unit of reproduction. Each playlist includes a static scenario structured with a reproduction sequence of cells (Cell) and a dynamic scenario described by the program.
As far as no dynamic scenario described by the program is present, the respective cells in the playlist are reproduced in sequence, and the reproduction of the cells in the playlist ends at the time when all the cells are reproduced.
In contrast, such program makes it possible to dynamically change descriptions for reproduction in playlists irrespective of playlists, and the object to be reproduced depending on selections made by users or statuses of players. Typical examples include dynamic modification of an object to be reproduced through a menu screen. In the case of a BD-ROM, a menu is a scenario to be reproduced through selection made by a user; that is, one of the functional elements for dynamically selecting a playlist.
The program here refers to an event handler that is executed by a time event or a user event.
Time events are generated based on time information embedded in a playlist. Time events includes an event sent from the scenario processor 305 to the program processor 302 as described with reference to FIG. 7. When a time event is issued, the program processor 302 executes an event handler associated with the corresponding identifier (ID).
As described above, a program to be executed can indicate reproduction of another playlist. In this case, the reproduction of the playlist which is currently being reproduced is stopped and instead, a transition is made to reproduce the indicated playlist.
User events are generated through remote key operations by the user. Such user events are categorized roughly into two types. User events of a first type are menu selection events that are generated by operating cursor keys (the Up, Down, Right, Left keys and the "Determination" key).
Event handlers corresponding to menu selection events are effective only during a limited time duration indicated in a playlist. In other words, as information of a playlist, effective time duration of an individual event handler is set. When the Up, Down, Right, Left keys and the "Determination" key on the remote controller are pressed, a search is made for an effective event handler. In the case where an effective event handler exists, the event handler is executed. In the case where there is no effective event handler, this menu selection event is ignored.
User events of a second type are menu call events that are generated by operating the "Menu" key. When a menu screen call event is generated, a global event handler is called.
The global event handler is always effective without depending on any playlists. With this function, it is possible to implement a menu call of a DVD. Implementation of this menu call makes it possible to call audio data or subtitle data during the reproduction of a title, and resume the reproduction of the title at the point where the audio data or subtitle data is suspended and changed, after the change.
A cell (Cell), which is a unit constituting a static scenario in a playlist, represents a part of the reproduction segments in a VOB (MPEG stream) or the entire reproduction segments. Each cell includes the reproduction segments in a VOB as information about reproduction start time and reproduction end time. VOB management information (VOBI) paired with an individual VOB has a time map (TimeMap or TM) which makes it possible to derive reading start address and reading end address within a VOB (that is, within "YYY.VOB" which is a current file to be reproduced) based on the time map. Time map is described in detail later with reference to FIG. 14.

(Details about VOB)

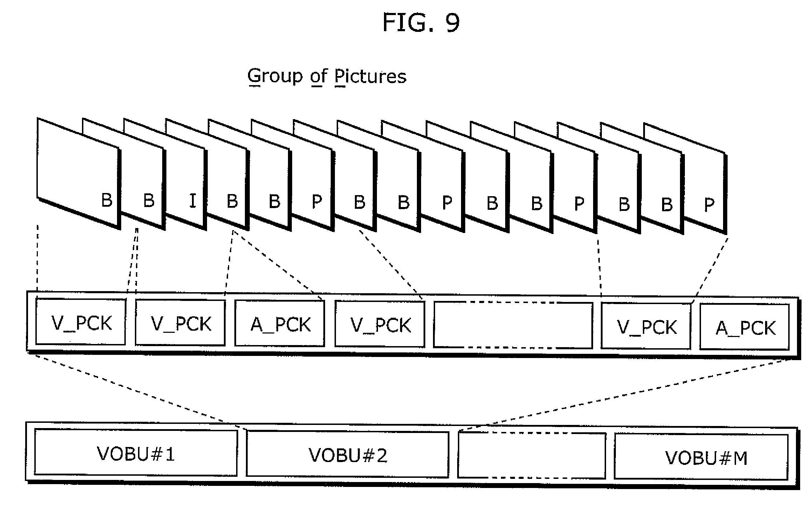

FIG. 9 is a diagram showing the structure of an MPEG stream (VOB) in this embodiment. As shown in FIG. 9, a VOB is structured with plural Video Object Units (VOBUs). VOBU is a unit based on Group Of Pictures (GOP) in an MPEG video stream, and it is one reproduction unit as a multiplexed stream in which audio data is included.
The reproduction time of a VOBU may be 0.4 to 1.0 second, and usually, it is 0.5 second. This is because the structure of a GOP in MPEG is usually 15 frames per second (in the case of NTSC).
Each VOBU includes video packs (V_PCK) which is video data and audio packs (A_PCK) which is audio data. Each pack is structured with one sector, and in this embodiment, it has a data size of 2 kB.

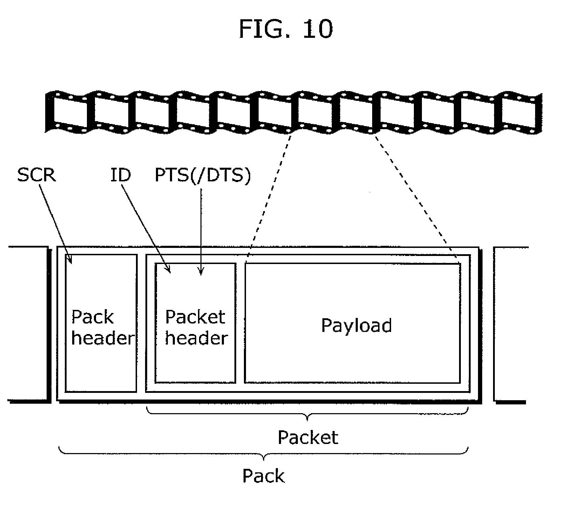

FIG. 10 is a diagram showing the structure of a pack in an MPEG stream.
As shown in FIG. 10, elementary data such as video data and audio data are inputted in a data storage area, of a packet, which is referred to as payload sequentially from the top. A packet header is attached to a payload to form a packet.
Recorded in the header of a packet includes: information indicating the stream to which the data stored in the payload of the packet belongs; information indicating whether the data is video data or audio data; and in the case where video data and audio data are stored in plural streams, an ID (stream_id) for identifying the stream to which the data belongs, and Decode Time Stamp (DTS) and Presentation Time Stamp (PTS) which are time stamps indicating decoding and display time information of the payload.

Not all packet headers include a PTS and a DTS, and a rule for recording a PTS and DTS is defined in the MPEG standard. Details of such rule are described in the MPEG system (ISO/IEC 13818-1) standard, and therefore no description is given.

The packet, when further added with a header (Pack Header), makes up a pack. Stored in such header is a System Clock Reference (SCR) which is a time stamp indicating when such pack passes through the demultiplexer and are inputted to a decoder buffer corresponding to an elementary stream.

(Interleaved Storage of VOB)

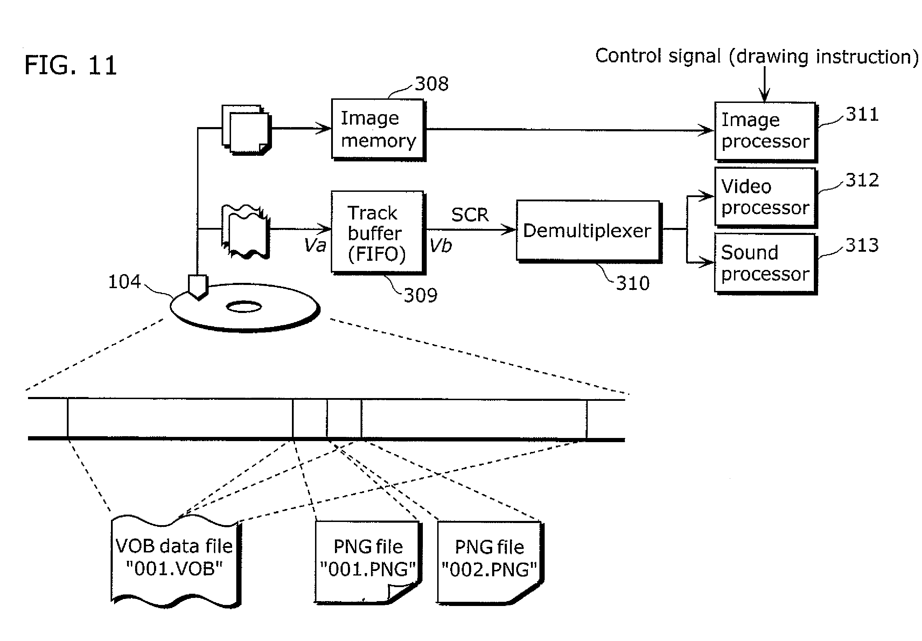

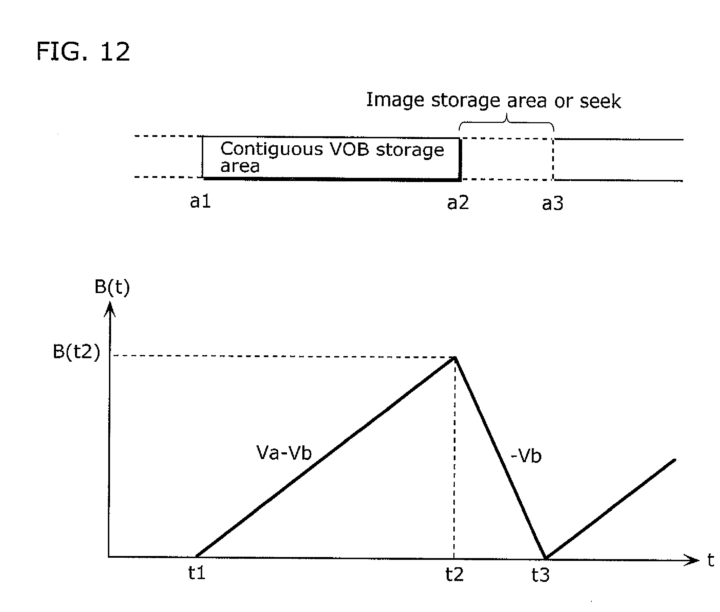

Next, a description is given of interleaved storage of a VOB file with reference to FIG. 11 and FIG. 12.

FIG. 11 is a diagram illustrating the relationship between AV data and the structure of a BD-ROM player.

The upper part of FIG. 11 shows a part of the structure of the player described in FIG. 7. As shown in the diagram, a VOB which is an MPEG stream recorded on a BD-ROM is inputted to the track buffer 309 through an optical pickup, and a PNG which is an image data recorded on the BD-ROM is inputted to the image memory 308.

The track buffer 309 is for First-In First-Out (FIFO), and thus inputted VOB data are sent to a demultiplexer 310 in the input order. At this time, each pack is extracted from the track buffer 309 according to the SCR described above, and then sent to the video processor 312 or the sound processor 313 through the demultiplexer 310.

Meanwhile, in the case of image data, which image to be drawn is instructed by the presentation controller 306 (refer to FIG. 7). In addition, when image data for subtitles are used for drawing, the image data is deleted from the image memory 308 at the same time of use, but when image data for menus are used for drawing, the image data is retained in the image memory 308 without being deleted.

This is because menus are used for drawing depending on user operations, and thus the same image may be used for drawing several times.

The bottom part of FIG. 11 shows the interleaved storage of a VOB file and PNG files on the BD disc.

In general, on a ROM such as a CD-ROM and a DVD-ROM, AV data which is a series of reproduction units to be sequentially reproduced, are stored contiguously. As long as the data are stored contiguously, the drive reads out the data sequentially and gives the read data to the reading players.

However, a seek operation is performed between reproduction of individual consecutive segments in the case where AV data to be reproduced sequentially is separated and discretely placed on the disc, and thus, data reading is stopped during the seek operation. In other words, data supply may stop.

In the case of a BD-ROM, it is desirable that VOB files are recorded in consecutive areas of the BD-ROM. This is because some data such as subtitle data must be reproduced in synchronization with video data recorded in a VOB, and in this case, such subtitle data must be read out from the BD-ROM using some method as well as reading of the VOB file.

The methods of reading out subtitle data include a method of collectively reading out the entire subtitle image data (PNG files) before starting the reproduction of a VOB. However, the method is impractical because a large amount of memory for temporary recording is necessary.

In view of this, the present embodiment employs a method in which a VOB file is divided into several blocks, and the blocks are stored by being interleaved with image data.

The bottom part of FIG. 11 illustrates such interleaved storage. By appropriately placing divided VOB file data and image data in an interleaved manner, it becomes possible to store image data into the image memory at a required timing without a temporary memory having a large capacity as described above.

Note that the reading of VOB data is suspended during the reading of image data, as a matter of course.

FIG. 12 is a diagram illustrating a model for continuous supply of VOB data using a track buffer 309 which solves the problem in the interleaved storage.

As has been described above, VOB data is temporarily accumulated into the track buffer 309. In the case where the rate at which data is inputted to the track buffer 309 is made higher than the rate at which the data is outputted from the track buffer 309, the amount of data accumulated in the track buffer 309 keeps increasing, as long as the data is being read out from the BD-ROM.

Here, the rate of input into the track buffer 309 is Va, and the rate of output from the track buffer is Vb. Assume, as shown in the upper part of FIG. 12, that a contiguous VOB storage area starts with the logical address "a1" and ends with the logical address "a2". Assume that image data is stored in an area between the logical addresses "a2" and "a3", and no VOB data is read out from such area.

The lower part of FIG. 12 illustrates the amount of data accumulated in the track buffer 309. The lateral axis indicates time, and the vertical axis indicates the amount of data accumulated in the track buffer 309. Time "t1" indicates the start time of reading the data stored in a location specified by "a1" which is the start point of the contiguous VOB storage area.

After the time point, data is to be accumulated into the track buffer 309 at the rate of Va - Vb. This rate is a difference between an input rate and an output rate of a track buffer. Time "t2" indicates the reading time of data stored in a position specified by "a2" which is the end point of the contiguous storage area.

In other words, in the track buffer, the amount of data increases during the time duration between time "t1" and time"t2" at a rate Va - Vb, and B(t2) which is the amount of accumulated data at time "t2"can be obtained using the following Expression 1.

$$B(t2) = (Va - Vb) \times (t2 - t1) \quad (\text{Expression 1}).$$

In the address up to an address "a3" on a BD-ROM, image data is stored consecutively. Since there is no input of data into the track buffer, the amount of data accumulated in the track buffer decreases at an output rate of "- Vb". Such decrease in the amount of data continues to a reading position "a3" corresponding to time "t3".

What is important here is that there is a possibility that the reproduction of the VOB stops if the amount of data accumulated in the track buffer becomes 0 before the time "t3", since it means that there is no VOB data to be supplied to the decoders.

In other words, the reproduction of VOBs continues without stopping when there remains data in the track buffer at the time "t3".

The condition under which the reproduction of VOBs continues without stopping can be shown using the following Expression 2.

$$B(t2) \geq Vb \times (t3 - t2) \quad (\text{Expression 2})$$

In other words, the position of each image data should be determined so that Equation 2 is satisfied.

(Structure of Navigation Data)

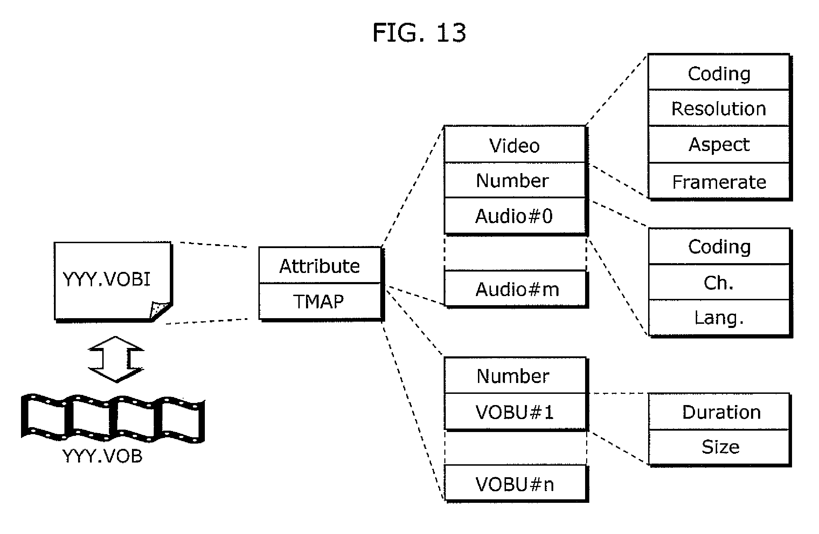

A description is given of the structure of the navigation data (BD management information) on the BD-ROM with reference to FIG. 13 to FIG. 19.

FIG. 13 is a diagram showing an internal structure of a VOB management information file ("YYY.VOBI").

The VOB management information includes stream attribute information (Attribute) of the VOB, and a time map (TMAP). The stream attribute information includes a video attribute (Video) and audio attributes (Audio#0 to Audio#m). Especially in the case of audio streams, a single VOB can include plural audio streams at the same time, and thus the number of audio streams (Number) indicates the number of data fields for audio attributes.

The following lists fields included in the video attribute (Video) and possible values included in the respective fields.

Compression mode (Coding):

MPEG-1
MPEG-2
MPEG-4

Resolution (Resolution):

1920 × 1080
1280 × 720
720 × 480
720 × 565

Aspect ratio (Aspect):

4:3

16:9

Frame rate (Framerate):

60
59. 94
50
30
29. 97
25
24

The following lists fields included in the audio attribute (Audio) and possible values included in the respective fields.

Compression mode (Coding):

AC3
MPEG-1
MPEG-2
LPCM

The number of channels (Ch.):

1 to 8

Linguistic attribute (Language):

JPN, ENG,...

The time map (TMAP), which is a table holding information for each VOBU, includes the number of VOBUs (Number) in the VOB, and VOBU information of each of such VOBUs (VOBU#1 to VOBU#n).

Each VOBU information includes the reproduction duration (Duration) of the VOBU, and the data size (Size) of the VOBU.

FIG. 14 is a diagram illustrating the details of each VOBU information.

As known widely, an MPEG stream is represented as two physical quantities of time and data size. For example, in Audio Code number 3 (AC3) which is an audio compression standard, compression is performed at a fixed bit rate, and thus the relationship between time and an address can be obtained using a linear equation.

The display duration of each frame in MPEG video data is fixed. For example, the display duration of one frame in MPEG video data for NTSC is 1/29. 97 seconds, but the data sizes of frames after compression greatly differ from frame to frame depending on the pictorial features, the picture types, that is, I, P, B pictures, and the like of the respective frames.

Accordingly, in the case of MPEG video data, it is impossible to represent a relationship between duration and each address by a general expression.

As a matter of course, it is impossible to represent a relationship between duration and each data size by a general expression in the case of an MPEG stream, that is, a VOB, in which MPEG video data is multiplexed.

Instead of this, a time map (TMAP) relates each address to time in a VOB. As shown in FIG. 14, a time map (TMAP) holds, as its entry, the number of frames in a VOBU and the number of packs in the VOBU on a per VOBU basis.

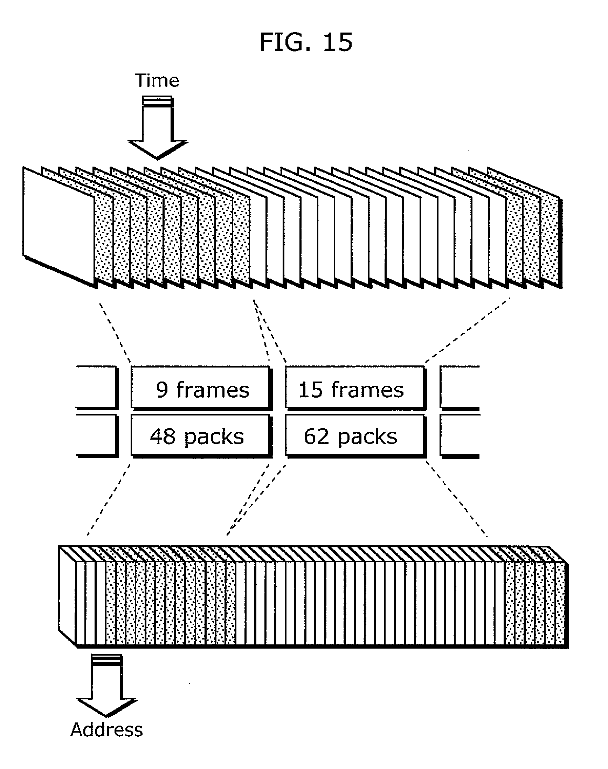

A description is given of a time map (TMAP) with reference to FIG. 15.

FIG. 15 is a diagram illustrating a method for obtaining address information using a time map.

As shown in FIG. 15, when time information (Time) is provided, first, the one of the VOBUs to which the time belongs is searched for. More specifically, the number of frames for each VOBU in a time map is added to determine the VOBU corresponding to the time which is the VOBU having a total number of frames which exceeds or matches the value obtained by calculating the time corresponding to the number of frames.

Next, the size of each VOBU immediately before the above-determined VOBU in the time map is added to obtain the value indicating the start address (Address) of a pack to be read out in order to reproduce the frame including the time point corresponding to the value.

In this way, in an MPEG stream, the address corresponding to given time information can be obtained.

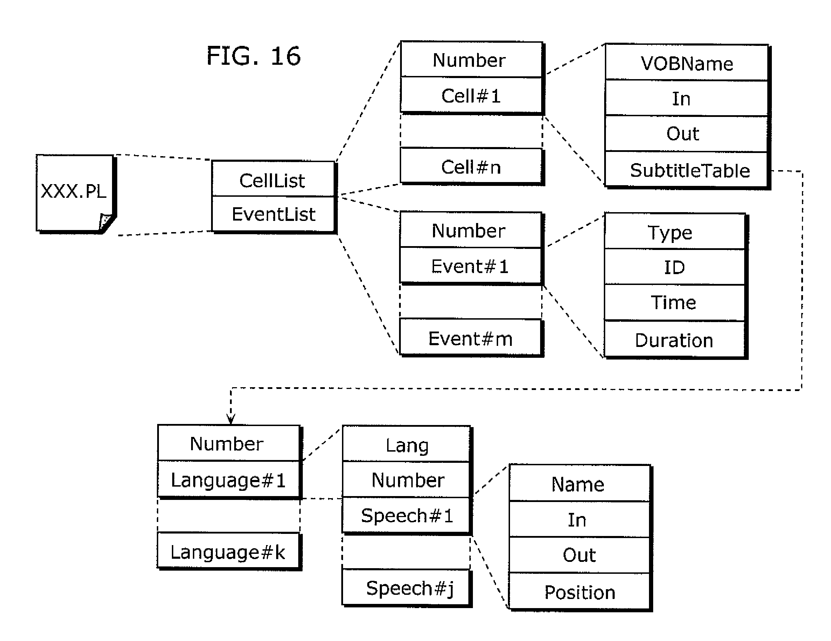

Next, a description is given of the internal structure of playlist information ("XXX.PL") with reference to FIG. 16.

FIG. 16 is a diagram showing the structure of a playlist.

The playlist is structured with a cell list (CellList) and an event list (EventList).

The cell list (CellList) is information indicating a sequence of cells to be reproduced in the playlist, and the cells are reproduced in the order of description in the cell list.

The cell list (CellList) is structured with the number of cells (Number) and cell information of each of such cells (Cell#1 to Cell#n).

Each cell information (Cell#1 to Cell#n) includes a VOB filename (VOBName), valid segment start time (In) and valid segment end time (Out) in the VOB, and a subtitle table (SubtitleTable).

The valid segment start time (In) and the valid segment end time (Out) are each represented by a frame number in the VOB, and it is possible to obtain the address of VOB data necessary for reproduction, using the above-described time map (TMAP).

The subtitle table (SubtitleTable) is a table holding information about subtitles to be reproduced in synchronization with the VOB. Since the VOB can have subtitles in plural languages as in the case of audio, the subtitle table (SubtitleTable) includes the number of languages (Number), which is followed by tables for the respective languages (Language#1 to Language#k).

Each language table (Language#1 to Language#k) includes language information (Language), the number of pieces of subtitle information about subtitles to be displayed (Number), and subtitle information about subtitles to be displayed (Speech#1 to Speech#j). Each subtitle information (Speech#1 to Speech#j) includes corresponding image data file name (Name), subtitle display start time (In) and subtitle display end time (Out), and the display position of the subtitles (Position).

The event list (EventList) is a table that defines events that occur in the playlist. The event list includes the individual events (Event#1 to Event#m) following the number of events. Each of the event (Event#1 to Event#m) includes an event type (Type), an event ID (ID), an event generation time (Time), and a valid duration (Duration).

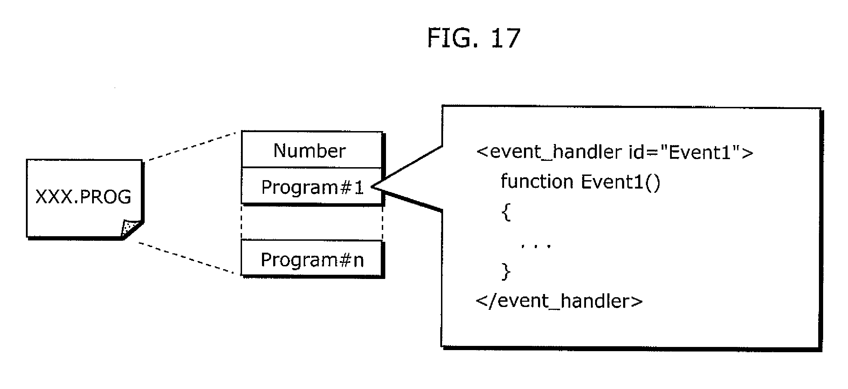

FIG. 17 is a diagram showing an event handler table ("XXX.PROG") that holds event handlers (for time event and user event for menu selection) of each playlist.

The event handler table holds the number of event handlers which is programs defined (Number), and individual event handlers which is programs (Program#1 to Program#n).

The description of each event handler which is program (Program#1 to Program#n) includes the definition about the start of the event handler (<event_handler> tag) and the event handler ID (event_handler_id) paired with the event ID. Between this and "{"and"}" following "function", the program is described.

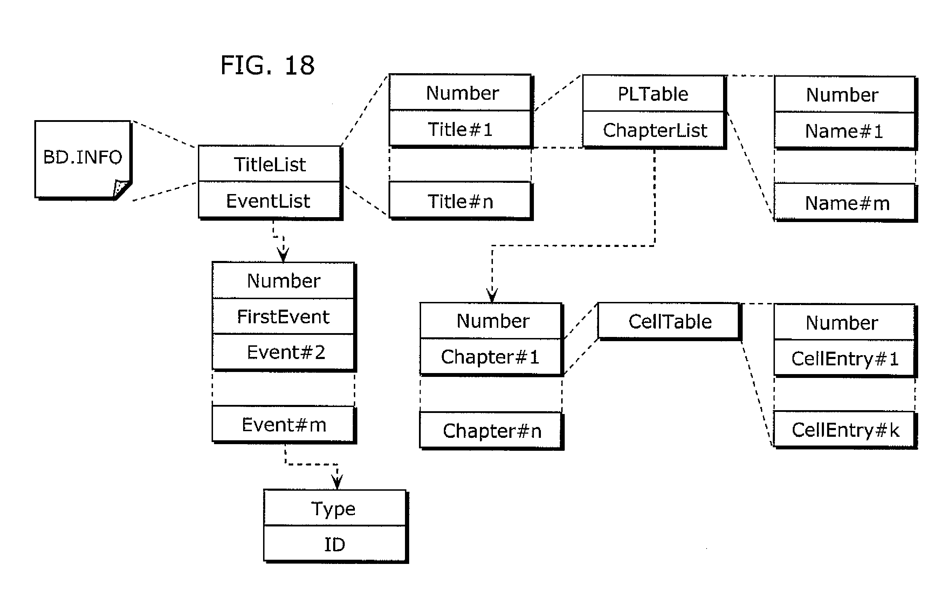

Next, a description is given of the internal structure of information related to the entire BD disc ("BD.INFO") with reference to FIG. 18.

FIG. 18 is a diagram showing the structure of BD.INFO which is the entire BD-ROM information.

The information related to the entire BD disc is structured with a title list (TitleList) and an event table (EventList) for global events.

The title list (TitleList) includes the number of titles in the disc (Number), which is followed by title information of each of such titles (Title#1 to Title#n).

Each of the title information (Title#1 to Title#n) includes a playlist table (PLTable) holding playlists in the title and a chapter list (Chapterlist) holding chapters in the title. The playlist table (PLTable) includes the number of playlists in the title (Number) and the playlist names (Name), that is, the filenames of the respective playlists.

The chapter list (ChapterList) includes the number of chapters (Number) included in the titles and each of chapter information (Chapter#1 to Chapter#n). Each chapter information (Chapter#1 to Chapter#n) includes a cell table holding cells included in the chapter (CellTable). The cell table (CellTable) includes the number of cells (Number) and entry information of each cell (CellEntry#1 to CellEntry#k).

Each of the cell entry information (CellEntry#1 to CellEntry#k) is described using the name of the playlist including the cell, and the cell number in the playlist.

The event list (EventList) includes the number of global events (Number), and information about each of such global events (Event#1 to Event#m). What should be noted here is that the first defined global event is referred to as a first event (FirstEvent), and such event is first executed when a BD-ROM is inserted into a player.

Information (one or more Event# Event#m) of each global event includes only the event type (Type) and event ID (ID).

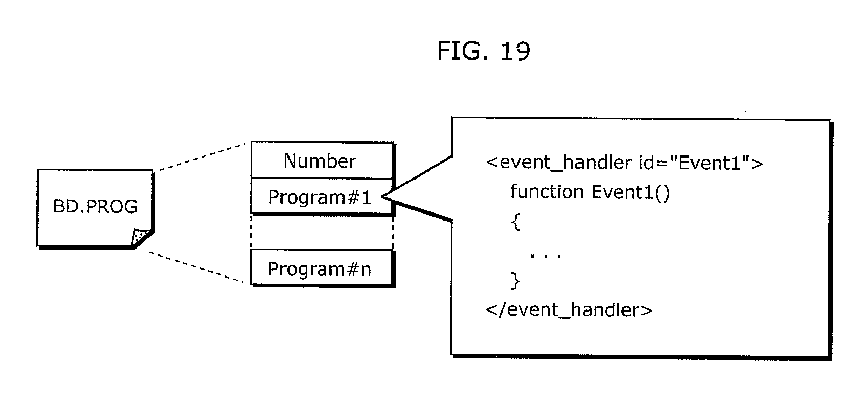

FIG. 19 is a diagram showing the structure of a global event handler table ("BD.PROG"). This table has the same content as the event handler table illustrated in FIG. 17, and the description is omitted.

(Mechanism of Event Occurrence)

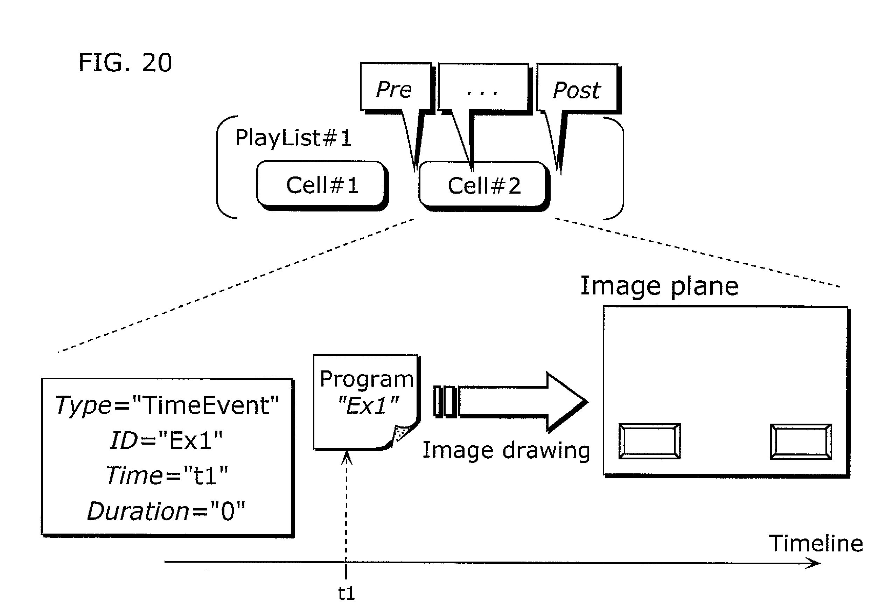

A description is given of a mechanism of event occurrence with reference to FIG. 20 to FIG. 22.

FIG. 20 is a diagram showing an example of a time event.

As described above, a time event is defined in the event list (EventList) in playlist information ("XXX.PL").

In the case where an event is defined as a time event; that is, an event whose event type (Type) is "TimeEvent", a time event with the identifier "Ex1" is outputted to the program processor 302 from the scenario processor 305 at the event generation time ("t1").

The program processor 302 searches for an event handler with the event identifier "EX1", and executes such target event handler. For example, an event such as the drawing or the like of two button images can be executed in the present embodiment.

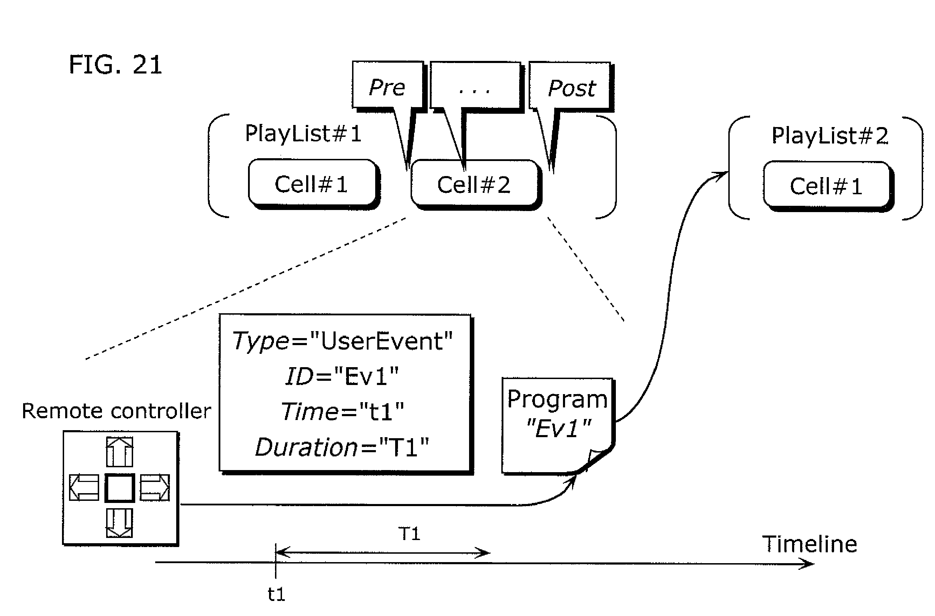

FIG. 21 is a diagram showing an example of a user event triggered by menu operation performed by a user.

As described above, a user event for menu operation is also defined in the event list (EventList) in playlist information ("XXX.PL").

In the case where an event is defined as a user event; that is, an event whose event type (Type) is "UserEvent", such user event becomes ready at the event generation time ("t1"). At this time, the event itself has not been generated yet.

This event is in the ready state during the time duration (T1) indicated by its validity specification information (Duration).

As shown in FIG. 21, when the user presses the Up, Down, Right, or/and Left keys or/and the "Determination" key on the remote controller, the UO manager 303 first generates a UO event, and outputs it to the program processor 302.

The program processor 302 sends the UO event to the scenario processor 305, and the scenario processor 305 searches for a user event valid at the time of receiving the UO event.

When the target user event is searched out, the scenario processor 305 generates the user event and outputs it to the program processor 302.

In the case of an example shown in FIG. 21, the program processor 302 searches for an event ID such as the event handler with the event identifier "Ev1", and executes such target event handler. In this case, the reproduction of the playlist#2 is started.

The generated user event does not include information for identifying which one of the remote control keys has been pressed by the user. Information about the selected remote control key is notified to the program processor 302 by the UO event, and stored into the register of the virtual player.

The program of the event handler is capable of checking out the value of the register and executing branch processing.

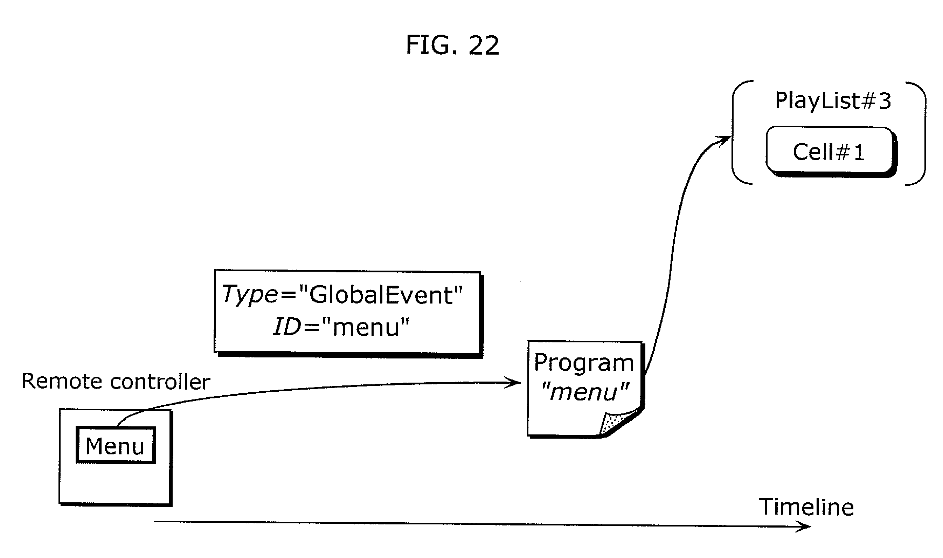

FIG. 22 is a diagram showing an example of a global event.

As described above, a global event is defined in the event list (EventList) in information about the entire BD-ROM disc ("BD.INFO").

In the case where an event is defined as a global event; that is, an event whose event type (Type) is "GlobalEvent", such event is generated only when the user has performed a remote control key operation.

When the user presses the "Menu" key, the UO manager 303 first generates a UO event, and outputs it to the program processor 302. The program processor 302 outputs such UO event to the scenario processor 305.

The scenario processor 305 generates corresponding global event and sends it to the program processor 302. The program processor 302 searches out an event handler with the event identifier "menu", and executes such target event handler. For example, in the case shown in FIG. 22, the reproduction of the playlist#3 is started.

The menu keys referred to in this embodiment may be menu keys as those on a remote controller of a player which reproduces DVDs. Appropriate processing associated with each menu key can be executed on condition that the ID of each menu key is defined.

(Virtual Player Machine)

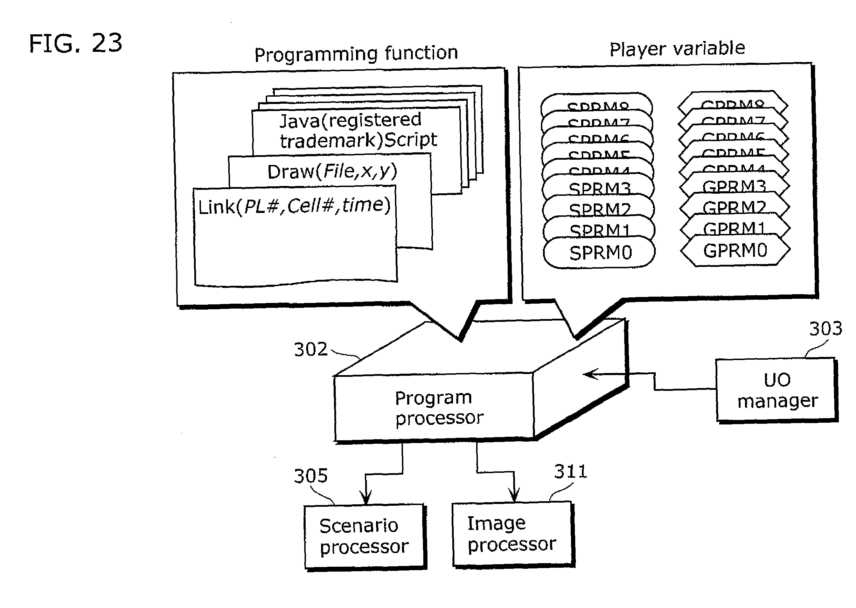

FIG. 23 is a diagram illustrating the functional structure of a program processor.

A description is given of the functional structure of the program processor 302 with reference to FIG. 23.

The program processor 302 is a processing module having a virtual player machine inside. The virtual player machine is a function model defined as a BD-ROM and does not depend on the type of BD-ROM player. In other words, the virtual player machine is guaranteed to execute the same function regardless of the type of the BD-ROM player.

The virtual player machine has two main functions. These functions are programming functions and player variables (registers).

In the programming functions, three properties described below are defined as BD-ROM eigen functions based on Java (registered trademark) Script.

Link function: Link function is for stopping the current reproduction, and starting the reproduction starting with a specified playlist or cell, or at a specified time.

Link (PL#, Cell#, time)
PL#: Playlist name

Cell#: Cell number
time: Reproduction start time in the cell
PNG drawing function:

a PNG drawing function is for drawing specified PNG data onto the image plane

Draw (File, X, Y)
File: PNG filename
X: Position on the X coordinate
Y: Position on the Y coordinate
Image plane clear function is for clearing a specified area on the image plane.
Clear (X, Y, W, H)
X: Position on the X coordinate
Y: Position on the Y coordinate
W: Width in the X direction
H: Width in the Y direction

Player variables include system parameters (SPRMs) indicating the status of the player, and general parameters (GPRMs) that can be used for general purposes.

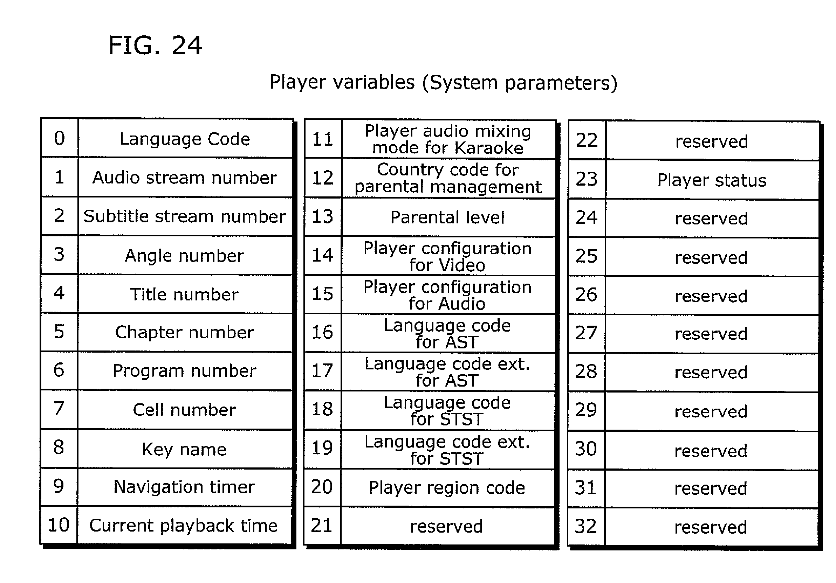

FIG. 24 is a diagram showing a list of system parameters (SPRMs).

SPRM (0): Language code
SPRM (1): Audio stream number
SPRM (2): Subtitle stream number
SPRM (3): Angle number
SPRM (4): Title number
SPRM (5): Chapter number
SPRM (6): Program number
SPRM (7): Cell number
SPRM (8): Key name
SPRM (9): Navigation timer
SPRM (10): Current playback timer
SPRM (11): Player audio mixing mode for Karaoke
SPRM (12): Country code for parental control
SPRM (13): Parental level
SPRM (14): Player configuration for Video
SPRM (15): Player configuration for Audio
SPRM (16): Language code for AST
SPRM (17): Language code ext. for AST
SPRM (18): Language code for STST
SPRM (19): Language code ext. for STST
SPRM (20): Player region code
SPRM (21): reserved
SPRM (22): reserved
SPRM (23): Player status
SPRM (24): reserved
SPRM (25): reserved
SPRM (26): reserved
SPRM (27): reserved
SPRM (28): reserved
SPRM (29): reserved
SPRM (30): reserved
SPRM (31): reserved

Note that the programming functions of the virtual player are defined in the present embodiment based on Java (registered trademark) Script, but these programming functions may be defined based on B-Shell and Perl Script used in UNIX (registered trademark) OSs. In other words, the program language used in the present invention is not limited to Java (registered trademark) Script.

(Example of Program)

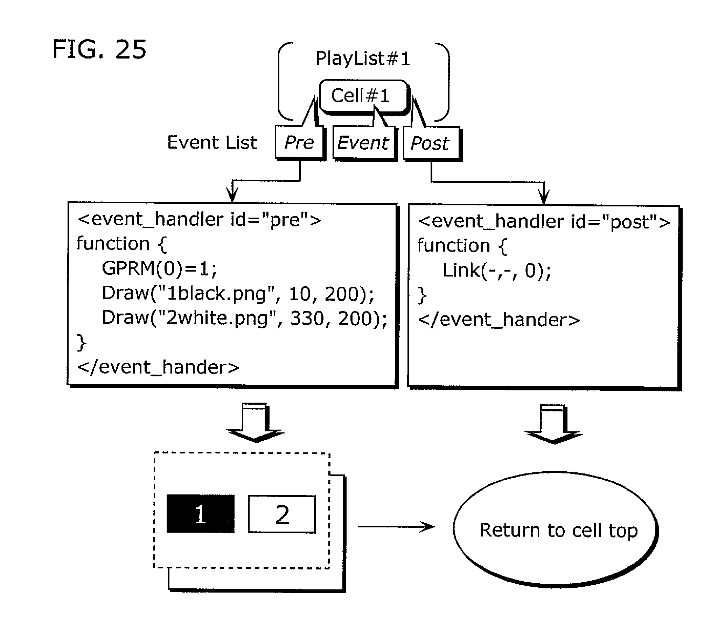

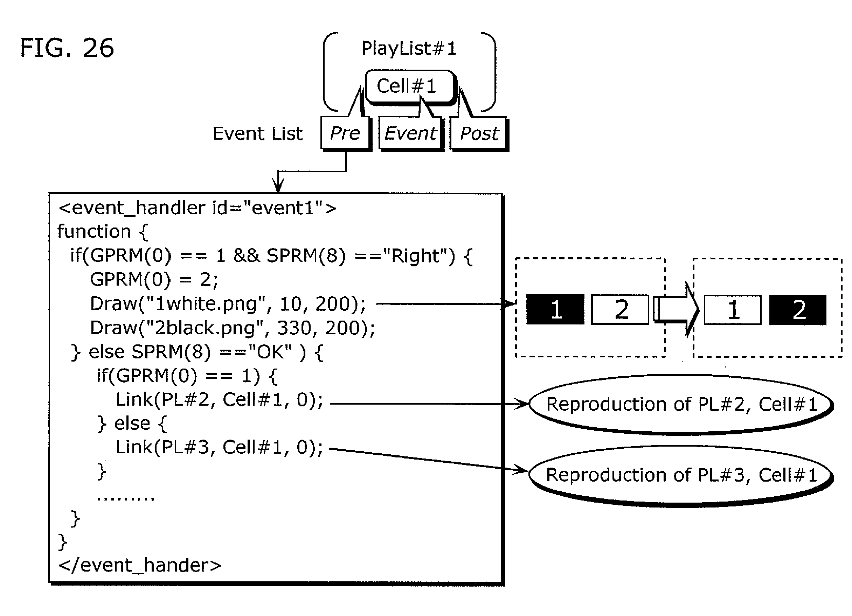

FIG. 25 and FIG. 26 are diagrams showing examples of programs as event handlers.

FIG. 25 is a diagram showing an example of a program in an event handler concerning control of a menu screen having two selection buttons.

The program illustrated on the left of FIG. 25 is executed based on the top time event of the cell (PlayList#1. Cell#1). Here, "1" is first set to one of the general parameters GPRM (0). GPRM(0) is used in the program to identify the selected button. The initial value held in the original status shows the status where a button 1 positioned at the left side is selected.

Next, using a drawing function "Draw", the PNG image of each of the button 1 and button 2 is drawn. The button 1 is formed by drawing the PNG image "1black. png" in an area that extends from the coordinates (10, 200) as the starting point (upper left corner). The button 2 is formed by drawing the PNG image "2white. png" in an area that extends from the coordinates (330, 200) as the starting point (upper left corner).

Then, the program illustrated on the right of FIG. 25 is executed based on the last time event of the current cell. Here, it is specified, using a Link function, that the cell should be reproduced from the top again.

FIG. 26 is a diagram showing an example of a program in an event handler concerning a user event for menu selection.

Programs corresponding to the respective keys, in the case where the "Left" key, "Right" key, and "Determination" key are pressed, are described in the event handler. As described with reference to FIG. 21, when the user presses a remote control key, a user event is generated, and then the event handler shown in FIG. 26 is activated.

In this event handler, branch processing is performed using the value of GPRM (0) for identifying the selected button and using SPRM (8) for identifying the selected remote control key.

Condition 1) when button 1 is currently selected and "Right" key is selected, GPRM(0) is reset to "2" so as to change the currently selected button to the button 2 on the right. The images of the respective button 1 and button 2 are re-drawn.

Condition 2) when the "Determination (OK)" key is selected, and the button 1 is selected, the reproduction of playlist#2 is started.

Condition 3) when the "Determination (OK)" key is selected, and the button 2 is selected, the reproduction of playlist#3 is started.

The program shown in FIG. 26 is interpreted as above, and it is executed.

(Flow of Player Processes)

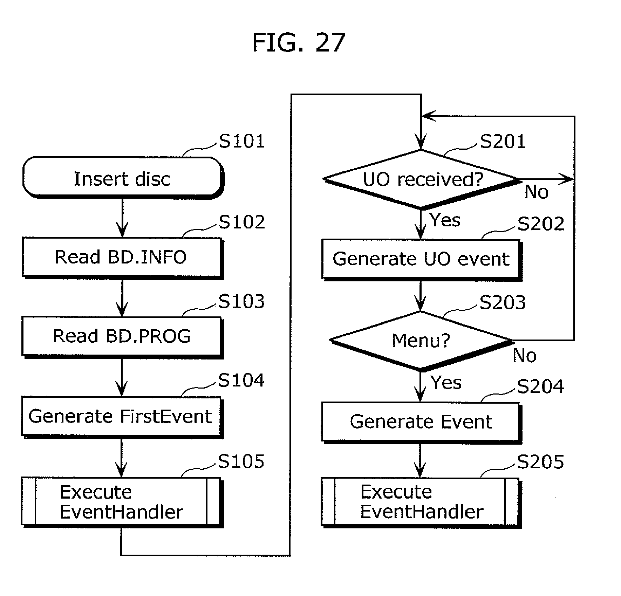

Next, a description is given of the flow of processes performed by the player with reference to FIG. 27 to FIG. 30.

FIG. 27 is a flowchart showing a flow of basic processing for reproducing AV data in a BD-ROM player.

When the BD-ROM is inserted (S101), the BD-ROM player reads and analyzes the "BD.INFO" file (S102), and then reads the "BD.PROG" file (S103). The "BD.INFO" file and "BD.PROG" file are both stored into the management information storage memory 204 once, and analyzed by the scenario processor 305.

Next, the scenario processor 305 generates the first event based on the first event (FirstEvent) information in the "BD.INFO" file (S104). The program processor 302 receives the generated first event, and executes an event handler corresponding to such event (S105).

It is expected that the playlist information that should be reproduced first is stored in the event handler corresponding to the first event. If there is no instruction to reproduce a playlist, the player keeps waiting for a user event without reproducing anything (No in S201).

When a UO manager 303 accepts remote controller operation from a user (Yes in S201), a UO event for the program processor 302 is generated (S202).

The program processor 302 judges whether or not such UO event is a menu key event (S203). In the case of a menu key event (Yes in S203), the program processor 302 outputs the UO event to the scenario processor 305, and the scenario processor 305 generates a user event (S204). The program processor 302 executes an event handler corresponding to such generated user event (S205).

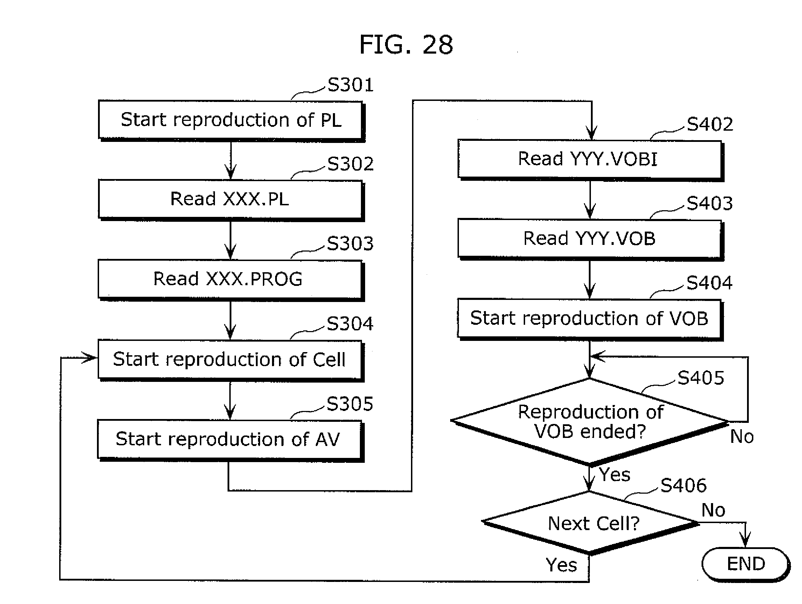

FIG. 28 is a flowchart showing a flow of processing from the start of reproducing a playlist in a BD-ROM player to the end of reproducing VOBs.

As described above, the reproduction of the playlist is started by a first event handler or a global event handler (S301). The scenario processor 305 reads and analyzes the playlist information "XXX.PL" as information required to reproduce the target playlist (S302), and reads the program information "XXX.PROG" corresponding to such playlist (S303).

Then, the scenario processor 305 starts the reproduction of a cell based on the cell information registered in the playlist (S304). Since the reproduction of the cell means that there is a request from the scenario processor to the presentation controller 306, the presentation controller 306 starts the reproduction of the AV data (S305).

When the reproduction of the AV data starts, the presentation controller 306 reads and analyzes the information file (XXX.VOBI) of the VOB corresponding to the cell to be reproduced (S402). With reference to the time map, the presentation controller 306 identifies the VOBU to be reproduced and the address of such VOBU, and notifies such address to the drive controller 317. The drive controller 317 reads out the target VOB data "YYY.VOB" (S403).

Accordingly, the read VOB data is sent to the decoders, and the reproduction of such data starts (S404). The reproduction of the VOB continues until the end of the reproduction segments of such VOB is reached (S405). In the case where a next cell exists when the reproduction ends (Yes, in S406), the reproduction of the next cell starts (S304). In addition, processing concerning reproduction ends when there is no next cell (No in S406).

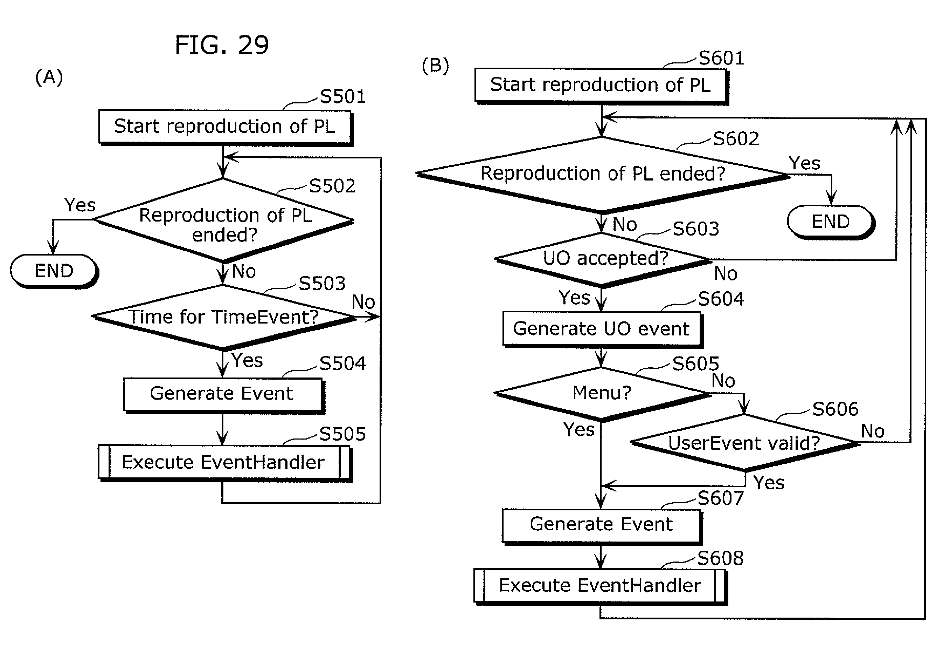

FIG. 29(A) and 29(B) each is a flowchart showing the flow of event processing after the start of the reproduction of AV data.

FIG. 29(A) is a flowchart showing the flow of processing concerning a time event in a BD-ROM player.

The BD-ROM player is an event-driven player. When the reproduction of a playlist starts, event processes for time events, user events, and subtitle display are respectively activated, and executed in parallel.

After the reproduction of the playlist starts in the BD-ROM player (S501), that the reproduction of the playlist has not yet ended is checked out (No in S502), the scenario processor 305 checks whether or not it is the time for event occurrence.

When it is the time of event occurrence (Yes in S503), the scenario processor 305 generates a time event (S504). The program processor 302 receives the time event, and executes the corresponding event handler (S505).

In addition, when it is before the time of event occurrence (No in S503), and when the execution of the event handler ends, the processing after the check of the reproduction of the playlist (S502) is repeated.

Meanwhile, in the case where the check in Step S502 shows that the reproduction of the playlist has ended, the time event processes are forcefully terminated.

FIG. 29(B) is a flowchart showing the flow of processing concerning a user event in a BD-ROM player.

After the reproduction of the playlist starts in the BD-ROM player 1 (S601), that the reproduction of the playlist has not yet ended is checked out (No in S602), the UO manager 303 checks whether or not a UO has been received.

When the UO has been received, the UO manager 303 generates a UO event (S604). The program processor 302 receives a UO event, and checks whether or not the UO event is a menu call.

In the case where the UO event is a menu call (Yes in S605), the program processor 302 causes the scenario processor 305 to generate an event (S607), and the program processor 302 executes the corresponding event handler (S608).

In the case where the check in Step S605 shows that the UO event is not a menu call (No in S605), it indicates that the UO event is an event that is generated by operating a cursor key or the "Determination" key. In this case, the scenario processor 305 determines whether the current time is within the valid duration of the user event. When the current time is within the valid duration (Yes in S606), the scenario processor 305 generates a user event (S607), and the program processor 302 executes the target event handler (S608).

In addition, when no UO has been received (No in S603), when the current time is not within the valid duration of the user event (No in S606), and when the execution of the event handler has ended, the processing after the check of the reproduction of the playlist (S602) is repeated.

Meanwhile, in the case where the check in Step S602 shows that the reproduction of the playlist has ended, the user event processes are forcefully terminated.

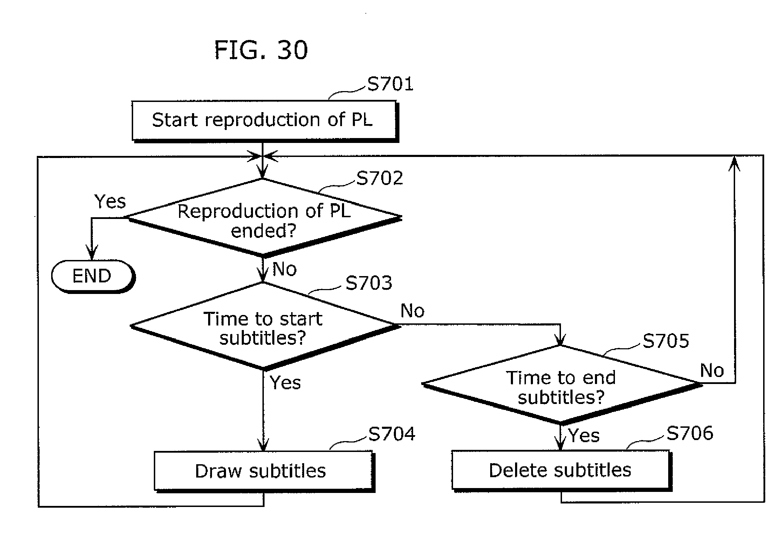

FIG. 30 is a flowchart showing the flow of processing subtitle data in a BD-ROM player.

After the reproduction of the playlist starts in the BD-ROM player, that the reproduction of the playlist has not yet ended is checked out (No in S702), the scenario processor 305 checks whether or not the start time at which subtitles are drawn has been reached. In the case where the current time is the time to start the drawing of subtitles (Yes in S703), the scenario processor 305 instructs the presentation controller 306 to draw subtitles, and the presentation controller 306 instructs the image processor 311 to draw subtitles. The image processor 311 draws subtitles in an image plane 209 according to the instruction (S704).

In addition, when the start time at which subtitles are drawn has not yet been reached (No in S703), whether the current time is the time to end drawing subtitles is checked. When it is judged that the current time is the time to end drawing subtitles (Yes in S705), the presentation controller 306 instructs the image processor 311 to delete the subtitles.

The image processor 311 deletes the drawn subtitles in the image plane 209 according to the instruction (S706).

In addition, when the drawing of subtitles by the image processor 311 ends (S704), when the deletion of the subtitles by the image processor 311 ends (S706), and it is judged that the current time is not the time to end drawing subtitles (No in S705), the processing after the check of the reproduction of the playlist (S702) is repeated.

Meanwhile, in the case where the check in Step S702 shows that the reproduction of the playlist has ended, the subtitle processes are forcefully terminated.

By the above-described operations, the BD-ROM player executes basic processing of reproducing a BD-ROM based on an instruction from a user or BD management information or the like recorded on the BD-ROM.

(Second Embodiment)

Next, a description is given of a Second Embodiment.

The Second Embodiment is basically based on the First Embodiment, and thus extended or different parts will be mainly described below.

Note that, in the Second Embodiment, a description is given of the data structure concerning a disc menu which is a characteristic of the present invention, using a disc having a data structure described in the First Embodiment as its basic data structure.

In addition, assuming that a recording device which records information onto the disc and edits the recorded information is a video camera, the structure and operations of the video camera are described.

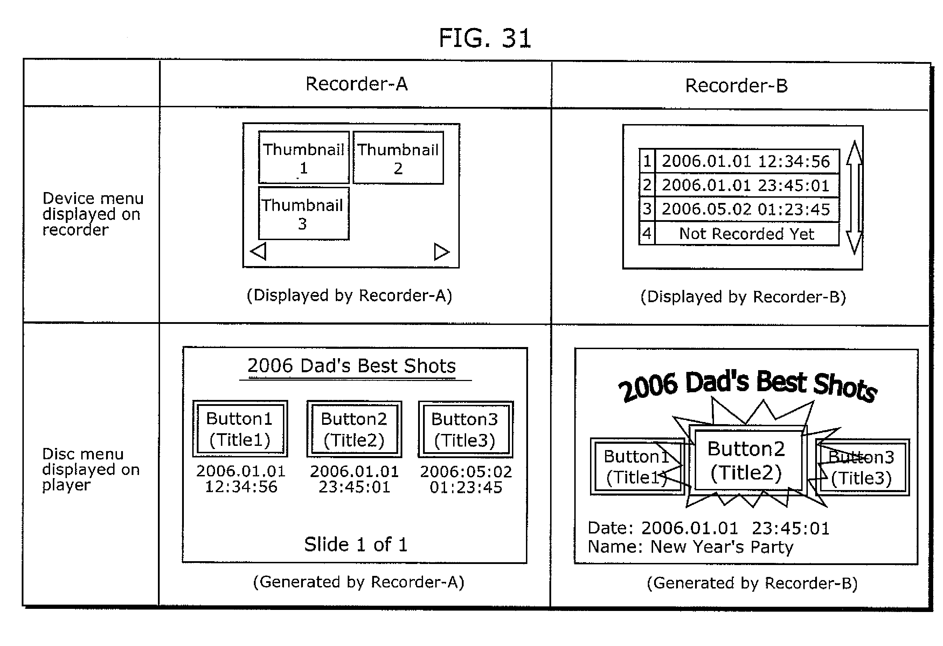

FIG. 31 is a diagram showing examples of menus displayed in a recorder and a player which use a disc in the Second Embodiment.

A Recorder-A and a Recorder-B shown in FIG. 31 are recorders of campany A and campany B. In addition, a disc on which plural contents are recorded is set in each recorder.

The upper columns in FIG. 31 show examples of the device menus which the respective recorders display.

A device menu is a simple menu with which the device itself displays titles and so on recorded on the disc set in the device itself on a display unit of the device and a display device connected to the device.

Note that a "title" is AV contents structured in a segment which is a part or all of a digital stream. In addition, the title is identified using a playlist relating to the title where the position of the segment in a digital stream such as an MPEG stream and the reproduction order is specified. For example, one video contents shot by a user is recorded onto a disc as one title.

As shown in the diagram, in the device menu which the Recorder-A displays, plural thumbnails of the titles recorded on the disc are arranged.

In addition, in the device menu which the Recorder-B displays, the recording dates and time of the contents recorded on a disc are displayed in list form.

The reasons why the menu generated by the device using thumbnails in this way are as described below. First, displaying the dates of recording or image capturing and thumbnails (JPEG) requires a small amount of processing time, and thus a good user response is obtained. Second, appropriate menus can be displayed on a device which only has a small display device such as a video camera.

These recorders each has functions of generating disc menus and recording the disc menus on a disc, in addition to generating and displaying a device menu.

The lower columns of FIG. 31 show examples of disc menus generated and recorded by the respective recorders. These disc menus are not reproduced by the respective recorders. These disc menus are reproduced by players for reproducing the disc and presented to a user.

The disc menu is a kind of "title" and is intended for allowing a user to select a title other than the device itself. In addition, the disc menu is generated by a recorder and recorded on an information recording medium such as a disc in this way.

More specifically, the disc menu is structured with functions provided in form of BD.INFO or BC.PROG described in the First Embodiment, and is assumed to be reproduced by a player connected to a TV.

The disc menu is designed to display various information on a big display screen, and in some cases, animation effects, a hierarchical logical structure, and the like are used for it and looks good, unlike the earlier-mentioned device menu.

As shown in the diagram, disc menu designs are different for the respective recorders. Thus, even when recording and image capturing are performed in the same way, disc menus having different display formats (designs) as shown in the lower columns in the diagram are generated.

As described above, disc menus of the recorder Recorder-A of company A are different from those of the recorder Recorder-B of company B. This is because packaging of a disc menu is left to every maker's discretion.

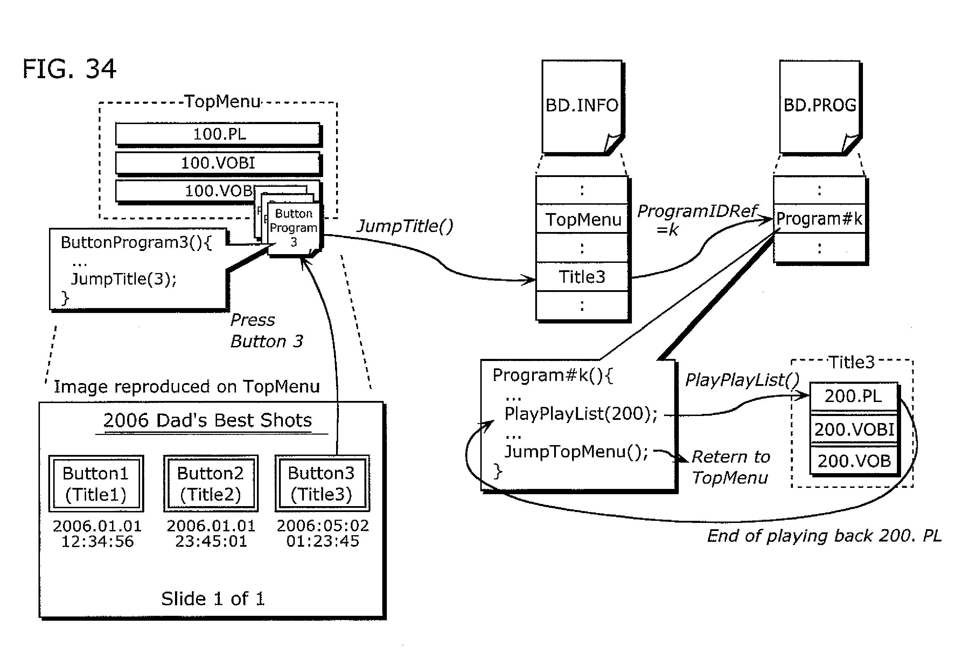

Thus, in the case where a disc on which a disc menu of a device of a second maker is set in a device such as a recorder and a video camera, the disc menu cannot be interpreted. This causes a problem that processing time increases because disc menu needs to be deleted as described above. This problem will be described in detail later with reference to FIG. 34.

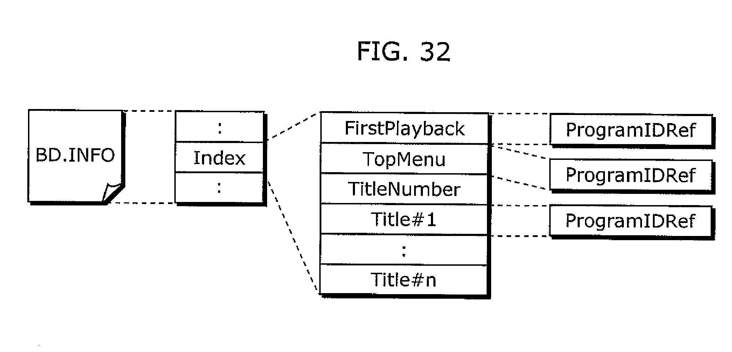

FIG. 32 is a diagram showing details of BD.INFO in the Second Embodiment. As shown in the diagram, BD.INFO includes an "Index" which is an area in which a group of information identifying a title recorded on a disc is recorded. A player for reproducing the disc performs reproduction and the like of the title based on information stored in this "Index".

Note that the information stored in the "Index" is an example of index information in the information recording medium of the present invention.

In addition, only the following is described in the "Index": "FirstPlayback", "TopMenu", and numerical references (ProgramIDRef) of a program controlling reproduction of the titles such as "Title#1".

ProgramIDRef is an example of program identification information in an information recording medium of the present invention, and each program is identified by these ProgramIDRef. In addition, the identified program controls reproduction of a title by calling a playlist.

Note that "FirstPlayback" indicates, for example, the title to be reproduced first at the time when a disc is inserted, and in the "FirstPlayback", the reference numeral of a program for reproducing the title is stored as information.

In addition, "TopMenu" indicates a disc menu which is a title to be selected when a menu button on a remote controller is pressed, and in the "TopMenu", the reference numeral of a program for reproducing the disc menu is stored as information.

In addition, each of the "FirstPlayback", "TopMenu", and "Title#1" and so on stored in "Index" in BD.INFO shown in FIG. 32 is an example of title identification information recorded in an information recording medium of the present invention.

In addition, title identification information of the title, other than the disc menu, such as the video contents captured by a user are represented as a form "Title" + "# title number". The title number will be described later.

More specifically, a program specified by the number shown in ProgramIDRef stored in "FirstPlayback" is automatically executed at the time of loading the disc. In addition, when a user presses a menu key on a remote controller, the program specified by the number of ProgramIDRef registered in the "TopMenu" is executed.

Normal operations of a player are as follows: directly jumping to the "TopMenu" or jumping to the "TopMenu" after reproducing an opening video at the time when the disc is loaded according to the program referred to by the "FirstPlayback"; and displaying the disc menu defined by the "TopMenu".

In addition, recorded in each of the respective "Title#1" to "Title#n" is only ProgramIDRef specifying the program for controlling reproduction of the video contents captured and recorded by the user.

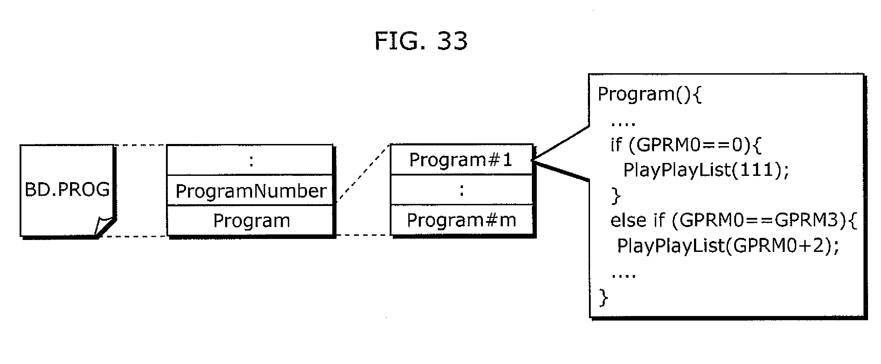

FIG. 33 is a diagram showing the details of BD.PROG in the Second Embodiment. The number of ProgramIDRef referred to in the BD.INFO indicates the arrangement order of Programs in the BD.PROG.

As shown in the diagram, for example, Program#1 is described to execute some processing, judge whether the value of GPRM0 is 0, reproduce: 111. PL when GPRM0 is 0; or the PL having the number corresponding to the value obtained by adding 2 to the GPRM0 when GPRM0 equals to GPRM3, and execute the subsequent processes.

As described above, a program can be arbitrarily described to include in combination the following: a conditional branch (if), a calculation processing in which a GPRM (general parameter) which is a kind of player variables is used, and a command such as reproduction instruction (PlayPlayList) of a playlist).

FIG. 34 is a diagram showing an example of transition in display and operations concerning menu display and title reproduction.

More specifically, FIG. 34 illustrates a sequence of processing of the player starting with the reproduction of the menu by the BD.INFO and BD.PROG, the reproduction of the title which is the video contents recorded by the user performed according to the user instruction, and ending with a return to the menu.

In FIG. 34, the transition of display and operations starts with the bottom left disc menu displayed on TV as a TopMenu.

When a user selects and enters the most right button (Button 3) in this TopMenu using a remote controller, the button program (ButtonProgram3) multiplexed in a stream (100.VOB) specified by 100.PL which is a playlist relating to the TopMenu is executed.

In the button program (ButtonProgram3), a command (JumpTitle(3)) intended for reproduction of the Title3 is described, and triggered by the execution of the command, the reproduction transits to the reproduction of the Title3.

More specifically, the value of the field of ProgramIDRef shown in the "Title3" described in the BD.INFO is k, and thus k-th program in the BD.PROG (Program#k) is executed.

The program (Program#k) includes a reproduction instruction of a playlist (200.PL), and thus the playlist (200.PL) is reproduced, and after the reproduction is completed, the subsequent commands are processed in sequence.

A command for returning to the TopMenu (JumpTopMenu()) is executed at the last part of the program (Program#k), and thus the TopMenu is displayed again.

The mechanism for reproducing TopMenu and Title has been described above in view of data structure.

The transition of the display and operations are triggered when the player performs processing according to the description in, for example, the playlist relating to the disc menu. Thus, no problem occurs depending on the maker of the disc menu.

However, in the case where a disc is moved between video cameras of different makers, there is a problem that video cameras, that is, recoding device for generating the disc menu and recording it onto a disc are not compatible with each other.

In other words, there is no problem as long as only the Recorder-A records and edits it onto the disc. However, in the case where the disc onto which the Recorder-A has recorded the disc menu is set in the Recorder-B which is a product of a second maker and recording or editing is performed in the Recorder-B, the Recorder-B cannot identify the design policy of the disc menu generated by the Recorder-A.

Because of this, there is a problem that it is impossible to add some information according to details of editing while retaining the existing part of the disc menu.

This is because the BD.PROG Program enables conditional branches in which player variables changing according to reproduction statuses are used.

Even if a predetermined Program is considered, it is impossible to find out how the program functions because the program is related to other elements, and further, the Recorder-B cannot identify the policy of the materials (selection of the background or button images) used for the disc menu generated by the Recorder-A.

For example, it is assumed that whether reproduction of a Title1 has been completed is managed using a GPRM100 value which is a player variable, and that the program is structured to start reproduction of a Title 2 starting with the middle of the Title 2 in the case where the Title 1 has been reproduced, or otherwise, start reproduction of the Title2 starting with the starting point of the Title2.

In this case, in order to verify that the GPRM 100 is information indicating reproduction history of the Title1 and is designed to control the reproduction of the Title2, and that the GPRM 100 is not affected by elements other than this, it is necessary to simulate reproduction based on all the possible reproduction patterns.

Thus, there is a need to obtain and analyze all of the BD.PROG programs (Program) and the button programs (ButtonProgram) multiplexed in a stream and to identify the meanings set for player variables. Therefore, a large amount of time is needed to read and analyze such data.

Thus, it is substantially impossible to succeed a disc menu from the Recorder-A to the Recorder-B.

As for the disc menu generated by the Recorder-A and recorded on a disc, the surest and simplest method for making all the data consistent in the entire disc in the case where the Recorder-B performs recording and editing on the disc is to delete all of the various kinds of files relating to the disc menu and re-generate such files.

In addition, it is conceivable to generate a new disc menu without deleting such various kinds of files relating to an existing disc menu. In this case, however, unnecessary files are to be accumulated. This results in not only unnecessary occupation of recordable capacity of the disc, but also in an increase in the processing load for file management performed in a device which loads the disc.

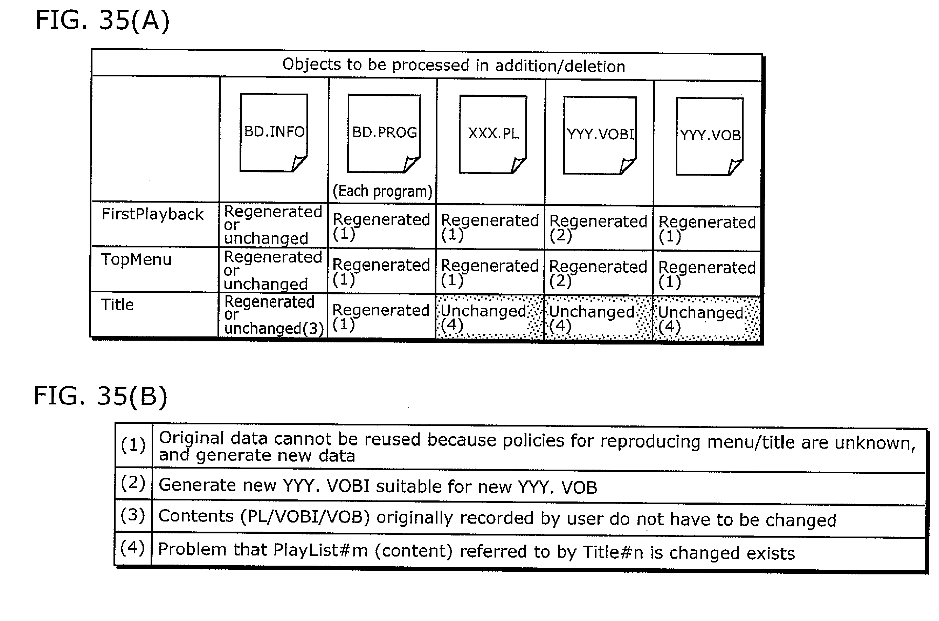

FIG. 35(A) and 35(B) each is a diagram showing a rule in updating of a disc menu in the case where a disc is moved between recorders of different makers.

FIG. 35(A) is a diagram showing how each file such as BD.INFO is handled in update of a disk menu, and FIG. 35(B) is a diagram illustrating the meaning of numbers shown in FIG. 35(A).

For example, in the case where the Recorder-B performs recording and editing on a disc on which contents have been recorded by the Recorder-A, addition or deletion of the contents in the editing must be reflected in the disc menu.

As described above, in the case where the Recorder-B performs recording and editing of the contents in the disc on which the disc menu has been recorded, and needs to update the disc menu, the Recorder-B changes all of the part relating to FirstPlayback and TopMenu (the part in BD.INFO, the part in BD.PROG, all of XXX.PL files, all of YYY.VOBI files, and all of YYY.VOB files). Note that "changing" includes deleting the data and generating a new one". This is true of in the following description.

In order to change the definitions of the Title consistent with the new FirstPlayback and TopMenu and Program for the Title, the Recorder-B further changes all the parts relating to the Title (the part in BD.INFO, and the part in BD.PROG).

In other words, only the playlist on which video captured by a user is stored and the data subsequent to the playlist remain after the update of the disc menu.

In addition, it is important not to include ButtonProgram which affects menu operations in a stream (YYY.VOB) used for Title so as to enable update of the menu only by the change.

According to the rule, it is possible to update the disc menu while maintaining the data consistency in the entire disc even when the disc is moved between recorders of different makers.

However, according to this rule, it is necessary to identify a playlist used by FirstPlayback and TopMenu, but such identification is substantially impossible as described earlier. Thus, there is a problem that the XXX.PL file which should be deleted in updating the disc menu remains unknown.

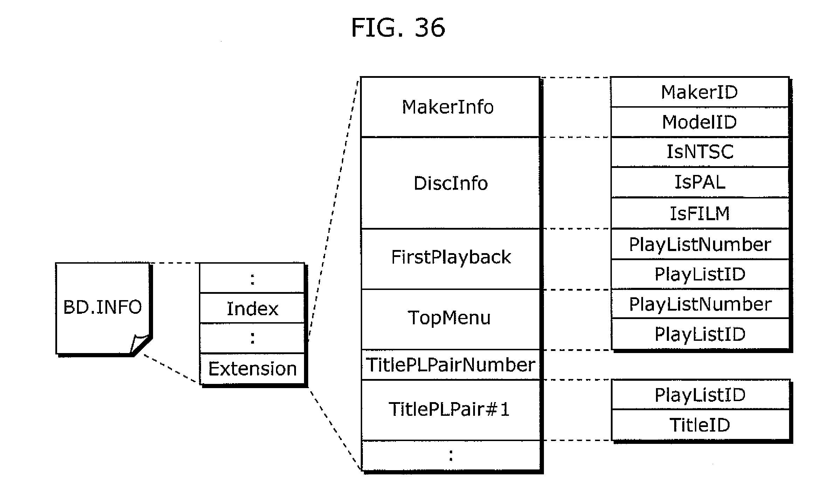

Thus, as shown in FIG. 36, it is effective to store the following information in the "Extension" of BD.INFO.

FIG. 36 is a diagram showing how information for identifying a playlist is stored in the "Extension" of the BD.INFO.

The "Extension" is an extended area which is provided at the end of the BD.INFO, and stores information which is not defined in a standard. In addition, a player does not have to read information from the "Extension", and thus there is no possibility that the player is affected even when the information which is not defined in a standard is stored.

Note that the information stored in the "Extension" is an example of extension information in the information recording medium of the present invention.

A description is given of information stored in the "Extension" below.

(1) "MakerInfo" is an example of maker identification information in an information recording medium of the present invention. "MakerInfo" is information including an identifier "ModelID" identifying the device which recorded this BD.INFO and an identifier "MakerID" identifying the maker of the device.

(2) "DiscInfo" is information identifying a frame rate of video which is recordable on the disc or which has been recorded, and includes each of the following information.

"IsNTSC" is information showing whether video coding at a frame rate of 29.97/59.94 Hz is allowed, or information showing whether video having the frame rate has already been recorded.

"IsPAL" is information showing whether video coding at a frame rate of 25/50 Hz is allowed, or information showing whether video having the frame rate has already been recorded.

"IsFILM" shows whether video coding at a frame rate of 23. 97/24 Hz is allowed, or whether video having the frame rate has already been recorded.

Note that it is prohibited that "IsNTSC" and "IsPAL" coexist in a disc. This is because such coexistence may disable reproduction of some contents.

However, "IsFILM" can coexist with any of "IsNTSC" and "IsPAL". For example, in the case where a recorder codes video at a frame rate of 29. 97/59. 94 Hz and records the video, the recorder checks whether "IsNTSC=1" is obtained in advance.

In the case where "IsNTSC=0" is obtained, the recorder checks whether "IsPAL=0" is obtained, writes "IsNTSC=1" and records it. Otherwise, the recorder is capable of writing "IsNTSC=1" and "IsPAL=0" and recording them after checking out that there is no video having a frame rate of 25/50 Hz on the disc even when "IsNTSC=0" and "IsPAL=1" are obtained. By simply doing this, it becomes possible to prevent NTSC and PAL from being mixed in a stream recorded on the disc without checking the rates of all frames in the stream.

(3) "FirstPlayback" is information including: "PlayListNumber" showing the total number of playlists to be called by a program specified by "FirstPlayback" included in "Index" in the BD.INFO; and "PlayListID" indicating the playlist number.

Note that PlayListID is an example of playlist identification information in an information recording medium of the present invention.

(4) "TopMenu" is information including: "PlayListNumber" indicating the total number of playlists which may be called by a program specified by "TopMenu" included in "Index" in the BD.INFO; and "PlayListID" indicating the playlist number.

(5) "TitlePLPairNumber" is information showing the total number of "TitlePLPair" shown below.

(6) "TitlePLPair" is information including "PlayListID" showing a playlist number and "TitleID" showing the title number of the title identified by the playlist (it is assumed that Title#n and XXX.PL are used one-to-one).

A title number is a numeral represented as "n" in "Title#n" which is title identification information as described above. In other words, a title number is a numeral corresponding to title identification information.

As described above, with the information shown in "MakerInfo" described in an "Extension" which is an extended area of a BD.INFO, a recorder such as a video camera can obtain information identifying a device and information identifying the maker of the recorder which has generated the menu recorded in this disc.

In the case where the recorder which has set a disc identifies the disc on which the recorder itself has recorded a disc menu, the recorder does not need to generate a new disc menu (FirstPlayback/TopMenu) while update of specific difference information is necessary. Thus, the recorder can reduce the time to update the menu.

In addition, the recorder into which the disc has been set is capable of judging whether the disc is the disc with a disc menu recorded by the recorder of a different maker, and when the disc is judged to be the disc with the disc menu recorded by the recorder of the different maker, the recorder update the disc menu by generating a new disc menu.

Further, with information shown in "FirstPlayback" described in "Extension" which is an extended area of the BD.INFO and information shown in "TopMenu", the recorder can easily identify a playlist (XXX.PL) used in the disc menu. Thus, the recorder can identify a YYY.VOBI and a YYY.VOB to be used by analyzing the playlist.

In other words, the recorder can easily identify all the XXX.PL file, YYY.VOBI file, and YYY.VOB file relating to the disc menu, and delete these files.

More specifically, the recorder can delete the playlist relating to the title to be deleted, the management information of the title, and segments, in a digital stream, which are specified in the playlist.

As described above, by storing, in a disc, information with which a playlist relating to a disc menu can be easily identified, it becomes possible to easily identify various kinds of files relating to the disc menu, delete them, and generate a new disc menu.

In this way, the recorder is capable of deleting various kinds of files relating to a disc menu and generating a new disc menu even when a disc is moved between devices of different makers.

In other words, a recording device in any maker can easily update a disc menu recorded in an information recording medium on which the above information is recorded while maintaining data consistency of the entire disc and without generating unnecessary processing load and time.

Next, a description is given of holding of a title number in updating a disc menu.

As shown in many published documents and the First Embodiment, a player which reproduces an information recording medium such as DVD-Videos and BD-ROMs provides contents to a user using two levels in a hierarchical structure which are titles and chapters.

A general player mounts a title search function. With this function, a user can specify a title number by directly using a numeric key of a remote controller without using a disc menu of a Graphical User Interface (GUI) and start reproduction starting with the title.

Note that a title number means a loop order of a Title represented in the Index part of the BD.INFO, and thus the Title1 means the Title at the top in the loop.

Here, in the future, it is likely that information indicating the title number and the details of contents (such as the date of recording, the channel of a broadcasting station, and thumbnail video) may be printed on the label of a disc.

As known from the fact that combinations of a tune number and a tune name are printed on a label of a disc on which audio contents such as Compact Disc Digital Audio (CD-DA) are recorded, it is very important for a user who uses a recording device of the present invention to find out the relationship between the title and the contents because the user can use the title search function.

Here, the relationship between a content and the title number assigned to the content; that is, the relationship between a playlist relating to the content and the title number associated with the playlist cannot be changed in a package media (Read Only Media), and thus there is no need to consider such relationships.

However, when a disc menu which a recorder of a maker has generated in an information recording medium in which information can be recorded and edited is updated in a recorder of a different maker, the relationship between the content and the title number is not maintained.

Hence, for example, the title number "1" of a content in a disc on which the Recorder-A has recorded video contents may be changed to "3" unintentionally when the disc menu is updated by the Recorder-B.

As a matter of course, if it is possible to easily find out the association between a content, that is, a title and a playlist, in other words, the playlist referred to in finding out a content or a title before updating a disc menu, it is possible to obtain the title number assigned to the content before the update and maintain it during the update.

However, in order to find out the association between a title and a playlist, there is a need to analyze each of programs (Program) which are Title#1...Title#n shown in FIG. 32 stored in a BD.PROG file. As described earlier, such analysis is very difficult.

For this reason, in this embodiment, "TitlePLPair" which is information including a title number (TitleID) and a playlist number (PlayListID) is described in the "Extension" of the BD.INFO file as shown in FIG. 36.

In addition, title numbers and playlist numbers are additionally recorded in sequence. In other words, the order of descriptions in a TitlePLPair is the order of the recording dates and time of playlists (playlists identified as playlist IDs (PlayListID).

With this, it becomes possible to update the menu without affecting the former relationship between the title number and the content (that is, the playlist), and a user can prevent the association between each title number and the corresponding content from being unintentionally changed.

Note that, in the case where a title recorded in a disc is deleted, the title number is determined according to the order in a loop in the Index of the BD.INFO, and that a dummy playlist may be assigned instead of the deleted title.

Furthermore, a content such as video "Deleted Title" and the like and making a user recognize that the contents relating to the title have been deleted is associated with the deleted title. By doing so, the other title numbers are not affected.

In addition, the content showing the deletion is implemented so that the content can be reproduced only in a title search operation and cannot be selected in a disc menu.

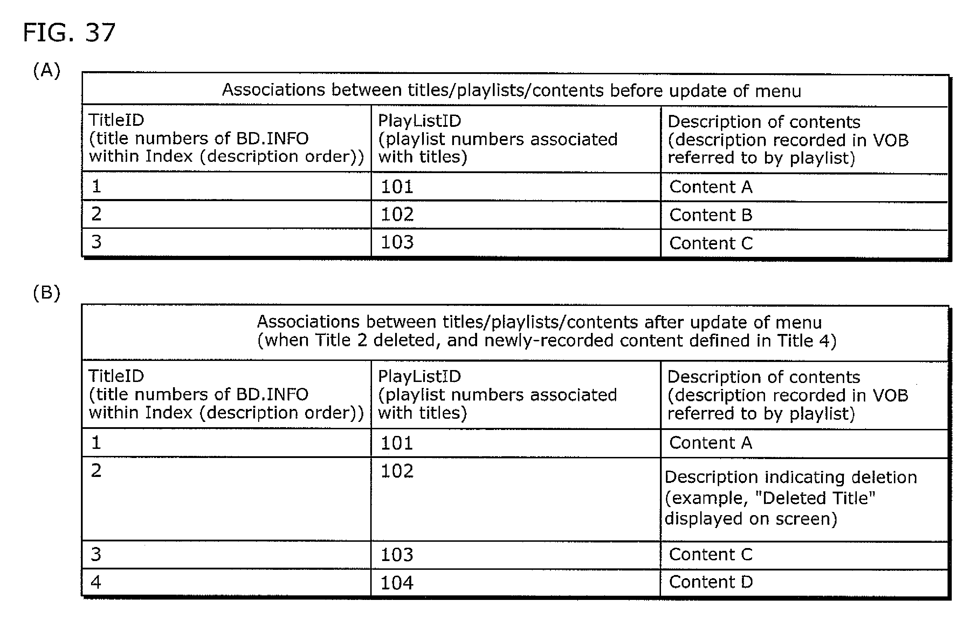

FIG. 37(A) and FIG. 37(B) are diagrams showing examples of the association between titles and playlists (contents) before and after update of a disc menu in the Second Embodiment.

As shown in FIG. 37(A), it is assumed that three titles are recorded on a certain disc at a time point, and that each of these titles is associated with one of playlists 101.PL, 102.PL, and 103.PL. In addition, assume that the respective playlists are associated with contents A, B, and C in the above order.

In the case where a recorder deletes Title 2 entirely and newly records a content D under the assumption, the relationships between the titles and the playlists (contents) are partly changed as shown in FIG. 37(B).

More specifically, the deleted Title2 is maintained without being deleted from the Index of the BD.INFO, and an AV stream (YYY.VOB) referred to by the playlist 102.PL of the Title2 is replaced with video or audio information indicating that the Title2 has been deleted by a user editing operation.

In addition, as for Title1 and Title3, the relationships between title numbers and playlists (contents) are maintained. In other words, the title numbers assigned to the titles are not changed.

In addition, the newly-recorded contents D is added at the end of the TitlePLPair shown in FIG. 36.

In other words, the order of descriptions in a TitlePLPair shows the order of recording date and time of a playlist (a playlist identified as PlayListID), which is helpful when displaying the menu according to the order of recording date and time.

Next, a description is given of the structure and operations of a recorder which updates the menu and processes various kinds of information as described earlier, in the disc having a data structure shown in FIG. 32, FIG. 33, and FIG. 36.

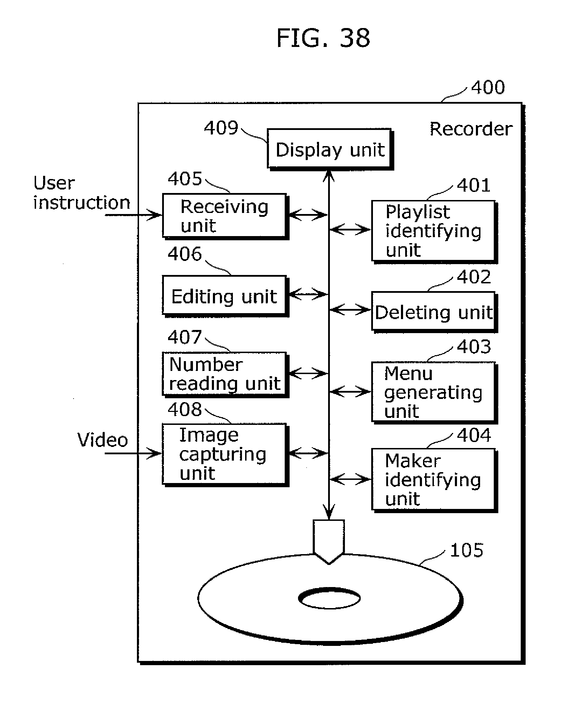

FIG. 38 is a functional block diagram showing the functional structure of a recorder in the Second Embodiment.

A recorder 400 shown in FIG. 38 is an example of a recording device of the present invention, and can be implemented as, for example, a video camera which records video as a digital stream.

Note that the recorder 400 includes other structural elements such as an encoder which is naturally included in a recording device for recording digital streams. However, these other structural elements are not shown and described in order to clearly distinguish the features of the present invention.

As shown in FIG. 38, the recorder 400 includes a playlist identifying unit 401, a deleting unit 402, a menu generating unit 403, a maker judging unit 404, a receiving unit 405, an editing unit 406, a number reading unit 407, an image capturing unit 408 and a display unit 409.

In addition, as an information recording medium, a disc 105 having a data structure shown in FIG. 32, FIG. 33 and FIG. 36 is used.

The playlist identifying unit 401 is a processing unit which identifies, using a PlayListID shown in FIG. 36, a playlist called by a program such as a disc menu which controls reproduction of a title, that is, a playlist relating to the title to be processed.

The menu generating unit 403 is a processing unit which generates a new menu which substitutes for a menu recorded in the disc 105 and records it onto the disc 105.

The deleting unit 402 is a processing unit which deletes a playlist relating to the menu recorded on the disc 105 in the case where the new menu has been generated by the menu generating unit 403. Note that the playlist to be deleted is identified by the playlist identifying unit 401.

The maker judging unit 404 is a processing unit which identifies whether a maker shown in the MakerInfo included in the Extension shown in FIG. 36 matches the maker of the recorder 400.

The receiving unit 405 is a processing unit which receives an instruction, to the recorder, which is inputted by the user or a device connected to the recorder 400.

The editing unit 406 is a processing unit which edits a title recorded on the disc 105.

The number reading unit 407 is a processing unit which reads a title number, that is, TitleID included in the "Extension" from the disc 105.

The image capturing unit 408 is a processing unit which records video to the disc 105 as a digital stream.

The display unit 409 is a small liquid-crystal device or the like included in the recorder 400. On the display unit 409, a simple device menu shown in the upper column of FIG. 31 is displayed.

The following is the outline of the basic operations of the recorder 400 structured in this way. It is assumed here that the disc menu generated by the recorder of a maker different from the maker of the recorder 400 has already been recorded in the disc 105.

When this disc 105 is set to the recorder 400, the playlist identifying unit 401 identifies, using a PlayListID which is included in the "Extension" and associated with a "TopMenu", the playlist relating to the disc menu recorded in the disc.

The menu generating unit 403 generates a new disc menu and records it in the disc 105. In addition, the deleting unit 402 deletes various kinds of files which relate to the disc menu generated by the recorder of the different maker such as the playlist identified by the playlist identifying unit 401.

In this way, the recorder 400 is capable of deleting the disc menu generated by the recorder of the different maker and recording the new disc menu onto the disc.

Next, a description is given of the flow of operations at the time when the recorder 400 updates a title structure in the disc 105.

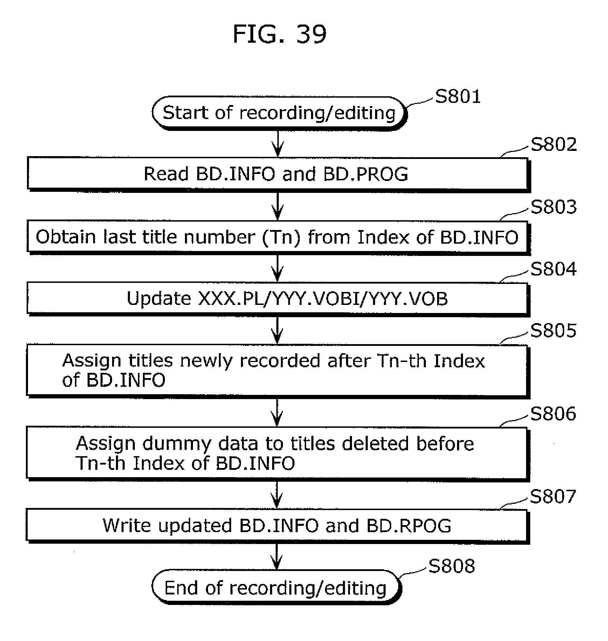

FIG. 39 is a flowchart showing the outline of an operation flow for updating a title structure in recording and editing performed in the recorder 400 of the Second Embodiment.

When recording of a new title or editing of an existing title is started according to a user instruction or the like (S801), the editing unit 406 reads BD.INFO and BD.PROG from the disc 105 (S802). Further, the number reading unit 407 obtains the last number among the title numbers recorded in the disc 105.

More specifically, the number reading unit 407 obtains the last title number (Tn) from the title information which exist in sequence starting with the "Title#1" included in the "Index" of BD.INFO (S803).

For example, in the case where "Title#1", "Title#2", and "Title#3" exist in the "Index", "3" is obtained.

Subsequently, the editing unit 406 updates XXX.PL, YYY.VOBI and YYY.VOB, if necessary (S804). In the case where a new title is recorded, the newly-recorded title is assigned to the number subsequent to the Tn, and the number and the title are recorded in the read-out BD.INFO (S805).

For example, in the case where Tn is "3", when a new title is recorded, a title number "4" is assign to the title.

In this case, the editing unit 406 adds "Title#4" to the "Index" of the BD.INFO, and further, associates "4" which is the TitleID and the PlayListID of the playlist relating to the Title4, and adds them to the "Extension".

In addition, in the case where there is a deleted title having a title number preceding the Tn, the editing unit 406 replaces the segment, in a digital stream, which is shown in the playlist relating to the title number with a dummy digital stream having a content indicating that the title has been deleted, instead of deleting the title number of the deleted title. In other words, such dummy digital stream is assigned to replace the deleted title (S806).

A dummy digital stream is data of video such as "Deleted Title" as described earlier.

More specifically, at the time of the deletion, the playlist identifying unit 401 identifies the playlist relating to the deleted title based on the title number of the deleted title, that is, the PlayListID associated with the TitleID.

By this operation, for example, in the case where the title of the title number "2" is deleted, the title number "2" is not deleted but is associated with data such as video named "Deleted Title".

In this way, the updated BD.INFO, BD.PROG and the like are written in the disc 105 (S807). This is the end of a sequence of recording and editing operations.

By updating the BD.INFO without affecting the relationship between the title number and the content (the associated playlist number), it becomes possible to prevent the relationship between the title number and the content from being changed each time the disc menu is updated even when reproduction of the content is performed by directly performing a title search instead of by using the disc menu, and to improve userfriendliness.

In addition, by structuring this so that any deleted title cannot be selected by using the disc menu (the deleted title never be displayed), it becomes possible to prevent a user who controls reproduction of the content through the disc menu for which a GUI is employed from affecting the Title2 remaining as a dummy.

In this embodiment, a disc is used as an information recording medium having a data structure shown in FIG. 32 and the like. However, note that a medium other than discs such as a BD and a DVD may be used on condition that the medium is the medium on which information can be recorded. For example, the medium may be a semiconductor memory such as a flash memory.

In the case where the content (VOB file) relating to the "FirstPlayback" and "TopMenu" is referred to also from the "Title", it should be noted that, when the disc menu is deleted, the playlist registered as the "FirstPlayback" and "TopMenu" and the content (VOB file) referred to by the playlist are deleted. This causes a trouble in reproduction of the title. Thus, this should be prohibited.

In the case of this embodiment, it is prohibited that the playlist of the "Title" described in the "Extension" of the BD.INFO refers to the content (XXX.VOB) referred to by the playlist of the "FirstPlayback" and the "TopMenu" described in the "Extension" of the BD.INFO.

That the disc menu (FirstPlayback/TopMenu) and the title recorded in the disc do not refer to the same VOB is necessary to update the disc menu quickly; that is, to identify and delete the file relating to the disc menu.

Even in the case where there is no information illustrated as "Extension" in the BD.INFO, it is possible to immediately identify the playlist file which needs to be updated in order to update the disc menu by separating: the file number of the playlist referred to by the "FirstPlayback" and "TopMenu"; and the file number of the playlist referred to by the "Title".

In addition, the following countermeasure may be taken in deleting a playlist: deleting the playlist after checking out that the playlist has no relation to any other titles by using the "PlayListID" included in the "TitlePLPair" shown in FIG. 36.

(Third Embodiment)

Next, a description is given of a Third Embodiment of the present invention.

The Third Embodiment is basically based on the First Embodiment, and thus extended or different parts will be mainly described below.

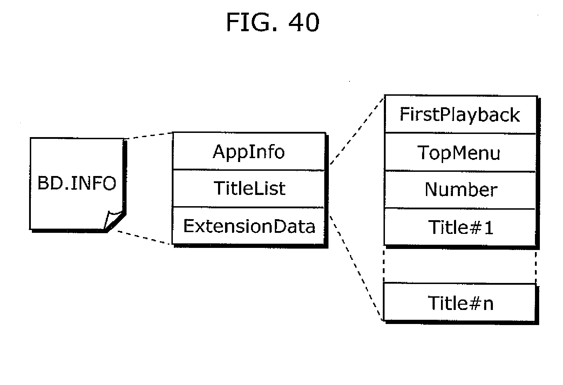

In the First Embodiment of the present invention, an example of "BD.INFO" which is one of the BD management information and which manages the information of the entire disc has been illustrated with reference to FIG. 18. In this embodiment, the format of FIG. 40 is employed.

Only a single BD.INFO exists on a disc, and the BD.INFO is read first at the time when the disc is inserted. The BD.INFO in FIG. 40 includes AppInfo, TitleList, and ExtensionData. In the AppInfo, information about the entire disc is stored.

Note that the "TitleList" and the "ExtensionData" shown in FIG. 40 are information areas corresponding to the "Index" and "Extension" in the Second Embodiment shown in FIG. 36 respectively.

The TitleList stores information of Title stored in the disc, and includes: two special Titles of FirstPlayback and TopMenu; and normal Titles. The number of normal Titles is stored in the Number below the TitleList. The FirstPlayback, TopMenu, and each Title have link information (Object ID) to an Object described later which should be executed at the time of selecting each title. FirstPlayback is a title selected first at the time of disc insertion, and is a title for reproduction menu which is selected when a menu button is pressed by remote control.

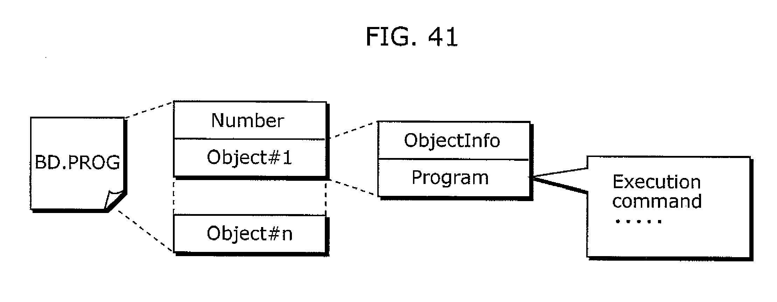

Next, a description is given of a "BD.PROG" in which information relating to the Object is stored with reference to FIG. 41. An Object is a group of programs including plural navigational commands. When the Object is executed, the navigation commands are executed one-by-one.

As shown in FIG. 41, the "BD.PROG" includes Number showing the total number of stored Objects and the entry of each Object. The numerals (such as #1) of the Objects in the diagram are IDs of the respective Objects, and these Objects are assumed to be arranged in the order of the IDs.

As described earlier, a title refers to an Object to be executed at the time of title selection by using the Object ID. Each Object includes an ObjectInfo area and a Program area. Stored in the ObjectInfo area is setting information of the Object. Stored in the Program area, a group of navigational commands which are executed one-by-one at the time when the Object is executed.

Note that "BD.PROG" shown in FIG. 41 substitutes "BD.PROG" illustrated in the First Embodiment with reference to FIG. 18, and "XXX.PROG" illustrated with reference to FIG. 17 is abolished.

In addition, an event illustrated in the First Embodiment is substituted by another function. For example, a time event illustrated with reference to FIG. 20 and a user event illustrated with reference to FIG. 21 are substituted by buttons corresponding to navigational commands embedded in a stream as will be described in detail later.

In addition, as for a global event illustrated with reference to FIG. 22, an execution operation of a player is defined for each key operation on a remote controller.

For example, it is defined that, when a Menu key on the remote controller is pressed as illustrated with reference to FIG. 22, a TopMenu which is one of the titles defined in the BD.INFO is automatically selected. Consequently, an Object linked from the TopMenu is selected, and a group of commands stored in the Program area of the Object in the BD.PROG is executed.

Next, a description is given of a button and a page each of which is one of the navigational functions in this embodiment.

In the First Embodiment, a description has been given of an example of button drawing triggered by an event with reference to FIG. 20 and FIG. 21. In the BD-ROM standard, as well as the earlier-described NV_PCK of a DVD, it is possible to embed a navigational command in form of a page and a button (NV_DS) in a stream of an MPEG-TS format, together with a video elementary stream (V_PES) and an audio elementary stream (A_PES).

A description is given of a structure for embedding a navigational function for implementing interactivity in a stream so that the navigational function is multiplexed with AV data such as video, audio, and subtitles in the stream.

Note that, in the First Embodiment of the present invention, an AV stream which is recorded in a BD-ROM Disc is assumed to be an MPEG-PS. In this embodiment, such AV stream is assumed to be an MPEG-TS.

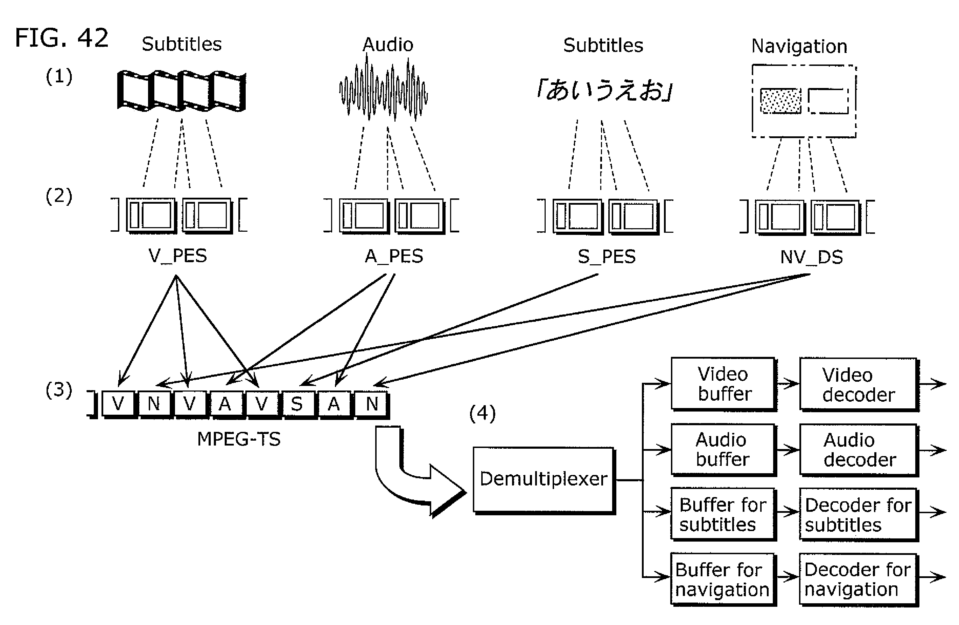

The AV stream in this embodiment is illustrated with reference to FIG. 42.

As shown in FIG. 42, each of elementary streams ((1) of FIG. 42) of video, audio, subtitles, and further a navigation for implementing interactivity is made into a PES ((2) of FIG. 42), and the respective PESs are multiplexed in a single MPEG-TS ((3) of FIG. 42).

Note that multiplexing in the MPEG-TS is characterized in that, plural data in each of bit streams before multiplexing is arranged in the decoding order, but after the multiplexing, the plural data in the respective bit strings of video data, audio data, subtitle data, and a navigation are not necessarily arranged in the bit string in the order of reproduction, that is, decoding.

A decoder model ((4) of FIG. 42) for MPEG TSs has decoder buffers corresponding to the respective elementary streams obtained by demultiplexing the multiplexed data, and such demultiplexed data are temporarily accumulated in the respective decoder buffers until the time of decoding.

Next, a detailed description is given of a page and a button in the BD-ROM.

A navigation function in the BD-ROM provides two concepts of a page and a button.

A button is a unit for performing an actual operation according to a user operation, and a page is a unit for managing a group of buttons.

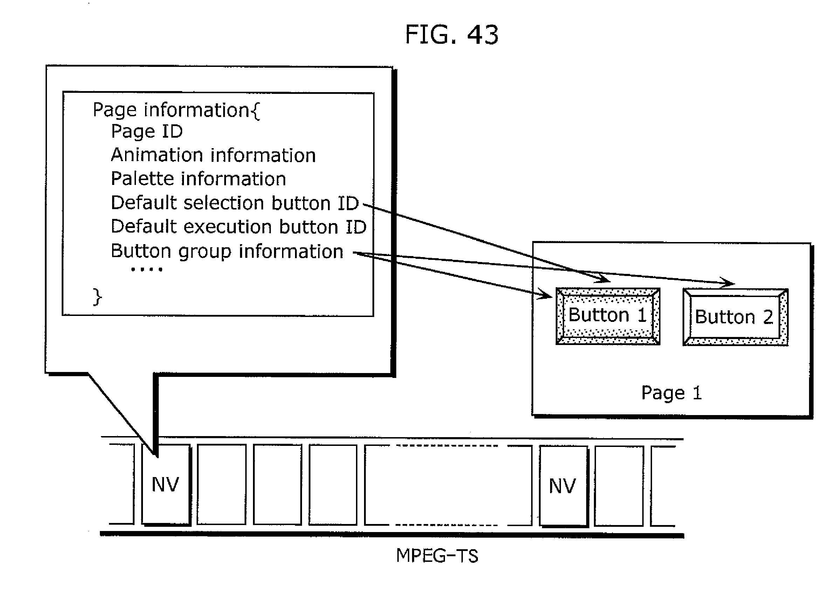

A detailed description is given of what kind of information the page contains as a display set (NV_DS) and how the page is multiplexed in an MPEG-TS with reference to FIG. 43.

As shown in FIG. 43, the following information for a page is included in an NV_DS and multiplexed in an MPEG-TS as illustrated earlier with reference to FIG. 42: a "page ID" of the page itself, "animation information" including settings for animation effects used at the time of page transition, "palette information" including settings for drawing a palette in the page, a "default selection button ID" including settings for a button ID of a button for calling selection status at the time when the page is turned on, a "default execution button ID" including settings for a button ID of a button which is executed at the time when the page is turned on, and "button group information" including settings of information about a group of buttons belonging to the page.

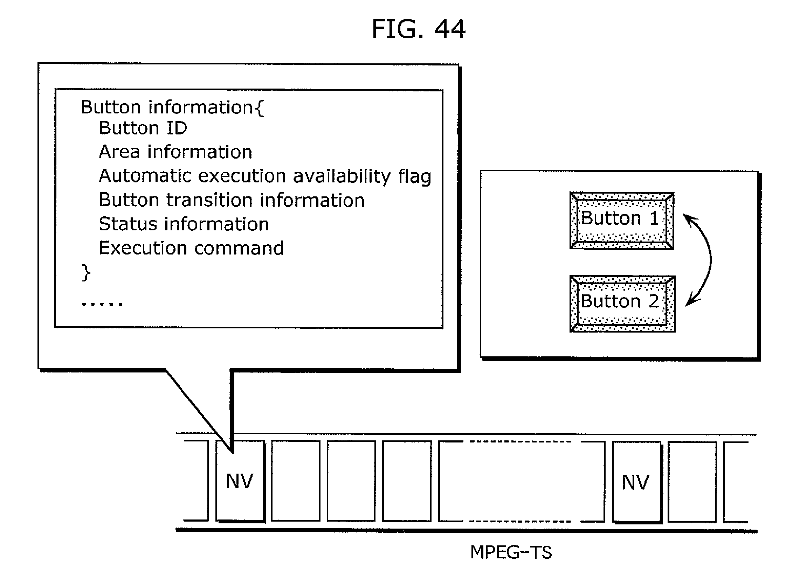

Next, a description is given of what kind of information the button contains as a display set and how the page is multiplexed in the MPEG-TS with reference to FIG. 44.

As shown in FIG. 44, the following information for a button is included in an NV_DS and multiplexed in an MPEG-TS as illustrated earlier with reference to FIG. 42: a "button ID" of the button itself, "area information" indicating the size of the button itself and a drawing object as a button image, "automatic execution availability flag" indicating whether the navigation command set for the button itself should be automatically executed at the time when the button is selected, "button transition information" including settings as to the button to which a transition is made at the time when a user operates a key (Up, Down, Left, or Right) on a remote controller while the button is currently being selected, "status information" including settings for sound effects and animation effects executed at the time when the status of the button is changed, for example, when the button is selected or pressed, and "execution commands" including settings of a group of navigation commands which are executed at the time when the button is made effective, for example, when the button is pressed.

The page and the button each of which is one of the navigational functions has been illustrated up to this point. The time event and the user event are implemented by the page and button.

For example, as for a time event, by embedding a button in a stream so that the button is reproduced at a desired position and setting the "automatic execution availability flag", the "execution command" which has been set in the button is executed at a predetermined time during the reproduction of the stream.

In addition, a user event can be executed by multiplexing the "button transition information" and the button including settings of the "execution command" in a stream so that a desired operation is executed.

In addition, the use of a page and a button makes it possible to implement an interactive user interface such as a reproduction menu which reproduces captured video.

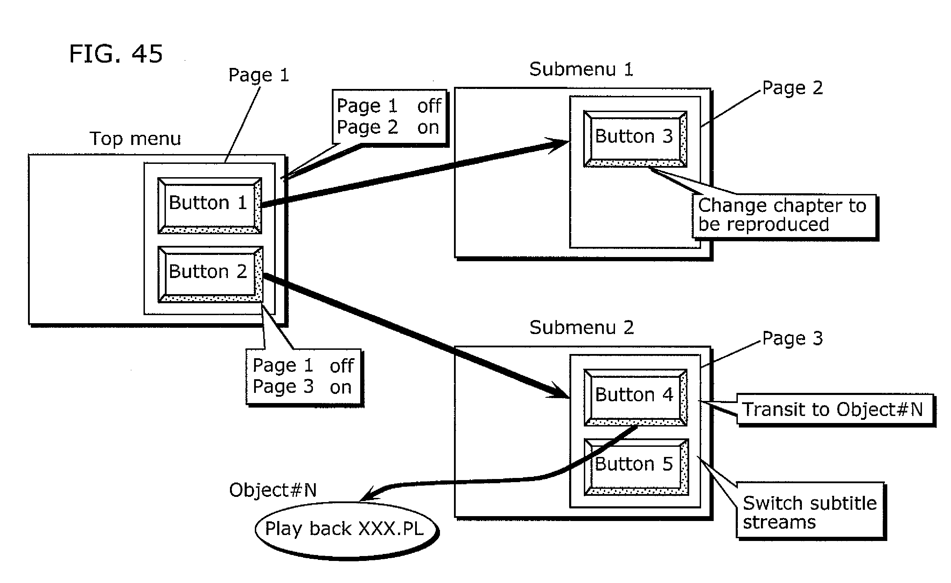

For example, in the case where a hierarchical menu is implemented as shown in FIG. 45, a page for grouping buttons to be displayed on each of a top menu and sub-menu is prepared. The top menu is provided with a page 1 for grouping buttons 1 and 2, a sub-menu 1 is provided with a page 2 for displaying a button 3, a sub-menu 2 is provided with a page 3 for grouping buttons 4 and 5, and these pages are multiplexed in the stream as described above.

Buttons for menu transition like the buttons 1 and 2 are prepared for transition from the top menu to each sub-menu, and each of these buttons is set so as to be switched at the time when the button is pressed. For example, set in the execution command area in the button 1 is a navigation command for turning off the page 1 and turning on the page 2 when the button 1 is pressed to transit from the top menu to the sub-menu 1.

In addition, set in the execution command area in the button 2 is a navigation command for turning off the page 1 and turning on the page 2 when the button 2 is pressed to transit from the top menu to the sub-menu 2.

In addition, as a navigation command which can be specified in the execution command area, it is possible to specify various kinds of commands other than the page transition command. For example, it is possible to set, for a button 3, a navigation command for switching chapters during reproduction of a playlist, and set for a button 5, a navigation command for switching subtitle streams to be displayed.

Here, it is defined that such navigation command for starting reproduction of the playlist cannot be specified in the execution command area in each button, and thus such specification can be performed only in the Program area in the Object.

Thus, in the case where a playlist XXX.PL is desired to be reproduced at the time when the button 4 is pressed, it is necessary to make a transition, by using the button, to the Object (Object#N in the diagram) in which the navigation command for reproducing the playlist XXX.PL is described, and to execute the navigation command for reproducing the desired playlist (XXX.PL in the diagram) by the Object.

As described above, in the case where a reproduction menu is generated using pages and buttons, it is required to prepare another Object which is a transit destination from a button and with which a navigation command which cannot be executed by the button is executed, in addition to pages and buttons. The relationship between a Title and an Object has been illustrated with reference to FIG. 40 and FIG. 41. However, possible Objects include an Object referred to by a button, in addition to the Object referred to by the Title as described earlier.

As illustrated above, it is possible to easily achieve an interactive user interface by a combination of a page and a button.

Note that it is also possible to utilize a slideshow function of a BD-ROM for GUI drawing in an interactive user interface such as a reproduction menu.

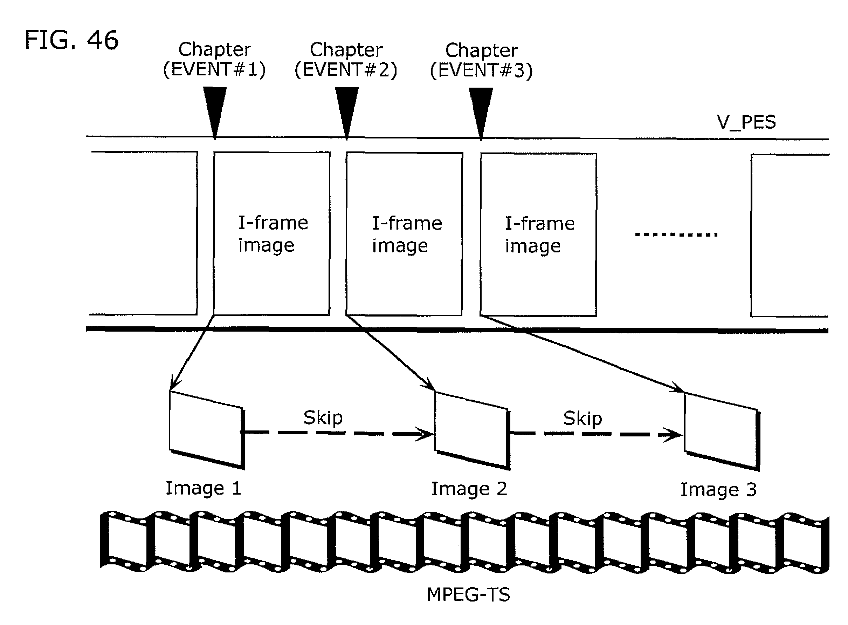

First, a description is given of a slideshow function in a V_PES with reference to FIG. 46. It is assumed here that whether the V_PES represents a slideshow or not is set in, for example, a VOB management information file VOBI of an AV data in which the V_PES is included.

For example, V_PES which represents a slideshow is made up of I-frames (I-pictures) only, and each still picture of a display screen displayed as a slideshow is embedded in a V_PES as an I-frame. At the same time, a chapter event is set in a playlist in a top of the I-frames.

In addition, as the display time of each I-frame, infinite time or a fixed time is set. When the set time is elapsed or when a chapter skip or back is executed, a next or previous still picture is displayed. As described above, a slideshow function is achieved by an I-frame and a chapter.

Here, it is possible to describe drawing descriptions of a button in the display set (NV_DS) as described earlier with reference to FIG. 44, it is also possible to implement a button for which drawing information is not set. In addition, by utilizing an execution command area of a button, it is possible to implement a button for executing a chapter skip or chapter back.

Thus, it is possible to use both a page and buttons, and a slideshow function to execute GUI drawing of a menu by using a slideshow as an I-frame image and to execute a menu control such as a menu transition or a navigation command execution by user operation in which a page and buttons are used.

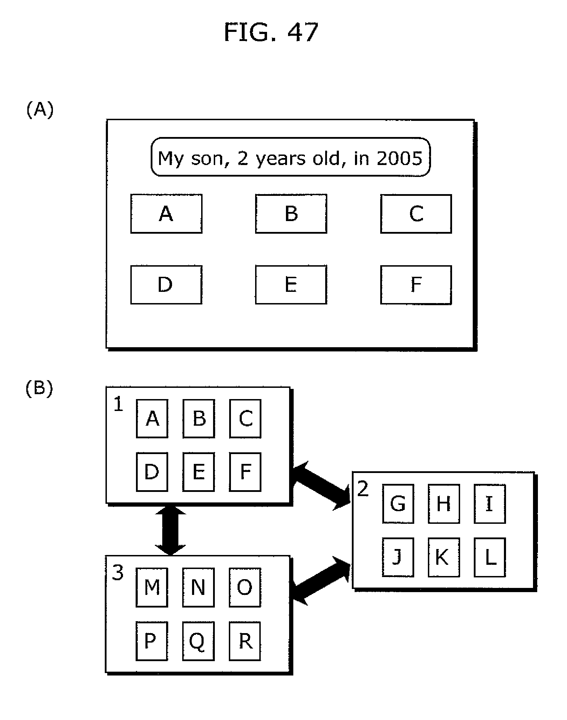

For example, the following description is given with reference to FIG. 47. First, as shown in FIG. 47(A), each of menu screen images which constitute a menu as shown in FIG. 47(A) is embedded in a V_PES as an I-frame image to form a slideshow.

Next, menu screen transitions and operations executed at the time when buttons are pressed can be implemented by using pages, buttons and an Object which is a transition destination from a button. More specifically, for example, in order to switch menu screens when a right button of a remote controller is pressed at the time when a thumbnail F is being selected, it is preferable to set, for a button, a navigation command for chapter change.

In addition, in the case of reproducing a moving picture corresponding to a thumbnail A when the thumbnail A is pressed, it is preferable to structure a button so as to enable transition to an Object for reproducing a moving picture corresponding to the thumbnail A when the button is pressed.

As discussed above, a menu can be implemented by utilizing a slideshow, and a page and buttons. Such menu is multiplexed in a single MPEG-TS as described earlier with reference to FIG. 42.

A description is given of a method for setting a reproduction menu in a disc for recording in a BD-ROM format. As described earlier, since a TopMenu in a BD.INFO is a Title for a menu only, an MPEG-TS for implementing the menu needs to be automatically executed at the time when the TopMenu title is selected.

Thus, it is preferable to generate an Object referred to by the TopMenu, register the Object in a BD.PROG, and to set a navigation command for reproducing a playlist for reproducing the MPEG-TS for implementing the menu.

In addition, in order to automatically display a reproduction menu at the time when a disc is inserted, it is preferable to generate an Object referred to by a FirstPlayback and register the Object in the BD.PROG, and to set a navigation command for executing a title transition to the TopMenu in the Program area of the Object.

Here, it is assumed that, a first device additionally writes video onto a disc on which video has been recorded by a second device. In this case, it is necessary to reflect navigation information for reproducing the additionally written video and the thumbnail of the video in the reproduction menu to be executed from the TopMenu.

However, each company employs a reproduction menu having a different structure, and it is difficult to determine the status of the Program area of the Object referred to from the TopMenu.

Thus, the device deletes the reproduction menu and generate a new one. However, in this case, as shown in the Second Embodiment, the device can find out a FirstPlayBack defined in the BD.INFO and an Object referred to from a TopMenu when deleting the reproduction menu, but the device needs to analyze the Program areas of the Object one-by-one in order to determine the PlayList (PlayList which reproduces an MPEG-TS which constitutes the reproduction menu illustrated in FIG. 47) to be reproduced.

In addition, as described earlier, in order to reproduce the PlayList from a button in the reproduction menu, there is a need to execute a transition from the button to the Object for reproducing PlayList and reproduce the PlayList from the Object.

In order to identify the Object referred to from such button only, there is a need to demultiplex the MPEG-TS which constitutes the reproduction menu, analyze the NV_DS of the buttons one-by-one, and analyze the IDs of the Objects which are transition destinations of the buttons. This requires a heavy workload.

Thus, it is assumed that the ID of the Object which is a transition destination from the NV_DS is recorded, as metadata, in the Title for reproducing the stream including the NV_DS such as a FirstPlayback and a TopMenu.

In addition, it is assumed that the metadata stores in the ExtensionData of the BD.INFO in FIG. 40.

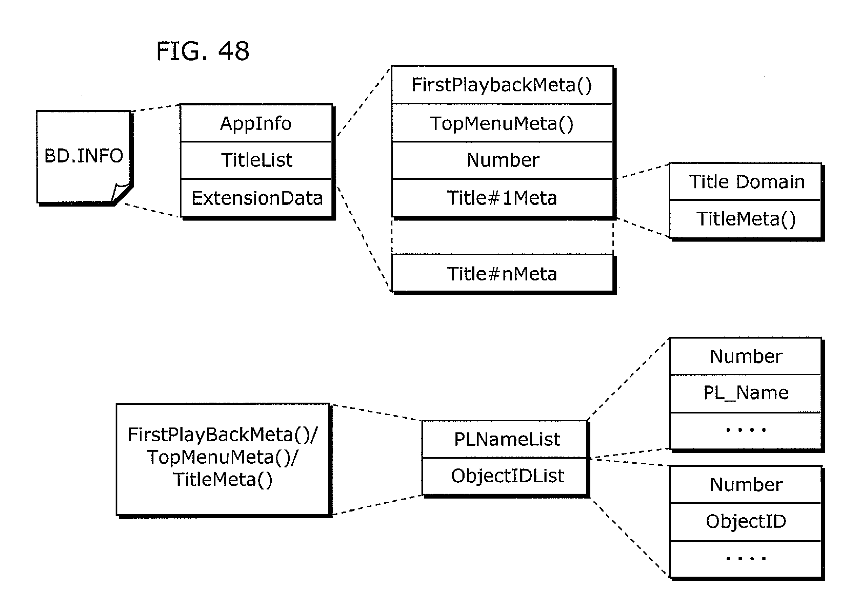

FIG. 48 shows an example of metadata in this embodiment.

As shown in FIG. 48, the ExtensionData area of the BD.INFO includes a FirstPlaybackMeta() area in which the metadata of a FirstPlayback is stored and a TopMenuMeta() in which the metadata of a TopMenu is stored. The ExtensionData area further includes a TitleDomain area showing the attribute of each Title and a TitleMeta() area for storing the metadata of each Title.

A Title Domain shows one of the four attributes (Domains) of a Menu, Real, Virtual, and SlideShow.

A Menu Domain is the attribute of a reproduction menu for allowing a user to select video and reproducing the video, or a Title for implementing automatic reproduction sequence control and the like at the time of disc insertion, in addition to the FirstPlayback and TopMenu, such as the Title which is a transition destination from the FirstPlayBack and TopMenu.

A Real Domain is the attribute of the Title for only sequentially reproducing video which has been actually captured and recorded.

A Virtual Domain is the attribute of the Title for only reproducing the playlist generated when a user has edited the video captured or recorded.

A Slideshow Domain is the attribute of a Title for reproducing a slideshow.

The FirstPlaybackMeta(), TopMenuMeta(), and TitleMeta() are the same in structure. More specifically, each of these is structured to include a FirstPlayback, a TopMenu, a PLNameList area which is a file name list of a PlayList referred to by each Title, and an ObjectIDList area which is a list of IDs of the Objects to be referred to.

Note that, in order to store recording order information of the PlayList in each TitleMeta(), the file names in the PlayList recorded in the PLNameList area may be arranged in the generation order of the PlayList.

An example of metadata in this embodiment has been described up to this point. With the metadata in this embodiment, it becomes possible to identify the data (a PlayList, a digital stream referred to from the PlayList, and an Object which is a group of programs) without analyzing an Object referred to by each Title or a stream which is reproduced from the Object.

In particular, by analyzing a FirstPlaybackMeta(), a TopMenuMeta(), and a TitleMeta() of a Title having Menu as the TitleDomain, it is possible to identify data (the PlayList and a digital stream referred to from the PlayList, and the Object which is the group of programs) which constitutes the reproduction menu in the disc.

Thus, even in the case of a reproduction menu generated by the second device, it is easy to delete such reproduction menu. In particular, even in the case where a button (NV_DS) is included in the stream for implementing the reproduction menu, and where an Object is referred to from the button, it is easy to identify and delete such reproduction menu.

In the case where an Object or a PlayList referred to from a Topmenu for example, are referred to in an arbitrary Title#A, note that a trouble may occur in an operation of the Title#A when the Object or the PlayList referred to from the TopMenu is deleted or edited based on the metadata.

In this case, a standard may prohibit that the Object or Playlist generated at the same time of generation of a first Title is referred to by any Title generated after the generation of the first Title.

In addition, in the deletion or editing of the Object or PlayList, the following countermeasure may be taken: deleting an Object or Playlist after checking out that the Object or PlayList is referred to from another Title based on the metadata illustrated with reference to FIG. 48.

The following countermeasure may also be taken: storing back reference information of the Title which refers to the PlayList or Object.

The Third Embodiment of the present invention has been described up to this point. The recording method and data structure of this embodiment is applicable to: an information recording medium on which a PlayList and an Object metadata are placed below each Title; a recording device which records the same; a recording method; a recording program; and a semiconductor which executes the recording method of this embodiment.

(Fourth Embodiment)

There is no conventional method for holding a recording order of video having a BD-ROM format for commercial video data of a next generation optical disc in the case of recording video captured by a video camera onto a disc one-by-one.

Here, as a Fourth Embodiment, a description is given of a recording method for arranging a recording order of metadata which is recorded in an extension area of a BD-ROM and prohibiting that the order is modified by editing.

Even in the case where the video captured by the video camera is recorded in BD-ROM format using this recording method, it is possible to retain the capturing order of the video images and arrange thumbnails of the captured video images in the order desired by a user in a reproduction menu or the like.

It should be noted in this embodiment that the AV stream on which the captured video is recorded is a stream having an MPEG-TS format (refer to FIG. 42), as in the case of the Third Embodiment.

In this embodiment, a description is given of a method which is executed in a video camera or a fixed video recorder to record video which is captured or recorded in a BD-ROM format.

First, the relationship between a basic capturing unit and BD management information is described.

The captured video and audio each is recorded in a stream having an MPEG-TS format in form of a V_PES and A_PES as shown in FIG. 42. Here, a Shot refers to the basic capturing unit starting from the point at which a capturing start button is pressed and ending with the point at which the button is released or a capturing pause button is pressed. A shot may be recorded as a single stream, or several shots may be stored in a single stream.

Here, each of Shots is associated with a playlist (PlayList), solely or in group based on the capturing date. Subsequently, the respective shots (Shot) are associated with a Title managed in a BD.INFO which is the BD management information, in each PlayList or on a PlayList basis.

A playlist "XXX.PL" is described in FIG. 16 in detail. In a stream captured in a video camera described in this embodiment, it is assumed that each shot which is a basic capturing unit is provided with an EVENT (Mark) for management in the playlist.

As described earlier, a Shot which is a basic capturing unit is associated one-to-one with a Mark in the playlist. Thus, by managing the capturing dates of the Shots and data relating to the Shots such as the thumbnails of the Shots on the Mark basis, the relationship between each Shot and the data relating to the Shot is made clear, and reference and management of the same becomes easy.

The relationship between each Shot which is a basic capturing unit and a Mark in the BD management information has been described up to this point. However, the BD-ROM format is intended for recording and distributing video which has been edited in advance.

Thus, some information such as the capturing dates and thumbnails of the Shots cannot be recorded in the BD management information when the captured video is recorded.

In this embodiment, such information that cannot be recorded in the BD management information is separately managed as metadata.

It may be assumed that metadata is stored in a file other than the file in which BD management information is stored or that the metadata is stored in each extension area of the BD management information.

An extension area of the BD management information is an area corresponding to the "Extension" described in the Second Embodiment.

In FIG. 18, as an example, a detailed description is given of the BD.INFO which is the BD management information read first by the BD-Player when the disc recorded in BD-ROM format is inserted. In addition to the structure illustrated with reference to FIG. 18, another structure has an IndexExtentionData() as an extension area in the end of the data.

Thus, it is assumed in this embodiment that information which cannot be defined in the BD-ROM is defined in this IndexExtentionData(). As a matter of course, the metadata may be stored separately in the extension areas of the PlayLists and VOB management files (ClipInformation).

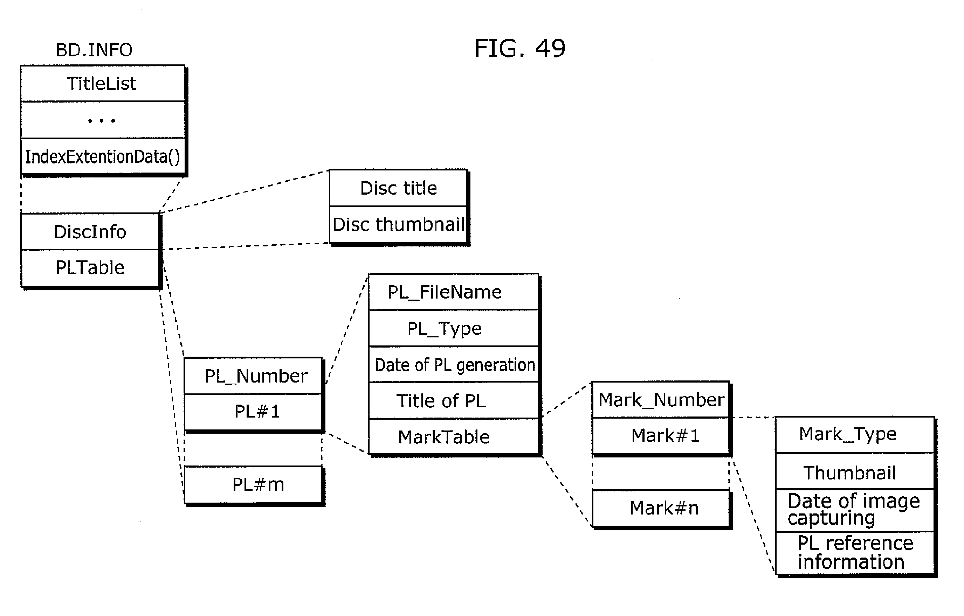

FIG. 49 shows an example of IndexExtentionData() defined in this embodiment.

FIG. 49 is a diagram showing an example in the case of storing metadata defined in this embodiment in the IndexExtentionData() which is an extension area of the BD.INFO.

Note that this embodiment is not limited to this example. For example, the metadata having the structure and the data shown in FIG. 49 may be stored in a file other than the file in which the BD.INFO is stored, and the metadata shown in FIG. 49 may be stored separately in each file of the BD management information.

First, two areas of a "DiscInfo" area and a "PLTable" area are prepared in the IndexExtentionData() which is present in the end of the BD management information "BD.INFO".

The "DiscInfo" area is an area in which metadata about the entire disc is stored. For example, the title information of a disc is stored in a "Title of Disc", and information about a thumbnail image selected from the disc is stored in the "Disc thumbnail".

The "PLTable" area is an area for storing metadata about each PlayList which is one of the BD management information, and includes a "PL_Number" area and metadata areas ("PL#1" to "PL#m" in the diagram) of the PlayList.

The "PL_Number" indicates the total number of the playlists "XXX.PL". The metadata of the playlists (Playlist "XXX.PL") are stored starting with the "PL#1" in order.

For example, the metadata of each PlayList is structured with five areas of a "PL_FileName" area, a "PL_Type" area, a "PL generation date" area, a "PL title" area, and a "MarkTable" area.

The "PL_FileName" area is information indicating the PlayList metadata stored in each of the metadata areas ("PL#1" to "PL#m"), and for example, a file body "XXX" of the PlayList file "XXX.PL" is stored therein.

In addition, in the "PL_Type" area, the type of the PlayList is stored. All Videos in a BD-ROM have been subjected to authoring in advance. Thus, there is no need to define PlayList types, but PlayLists are roughly classified into two in the case where video which is captured or recorded are stored in BD-ROM format.

One is a PlayList in which a scenario for reproducing, from the top, an original video captured or recorded is stored, and the PlayList is referred to as RealPlayList hereinafter in this embodiment.

Another is a PlayList which stores a scenario describing that a user has performed editing such as modification on the reproduction order and specification of a reproduction part on the original video images. The PlayList is referred to as VirtualPlayList hereinafter in this embodiment.

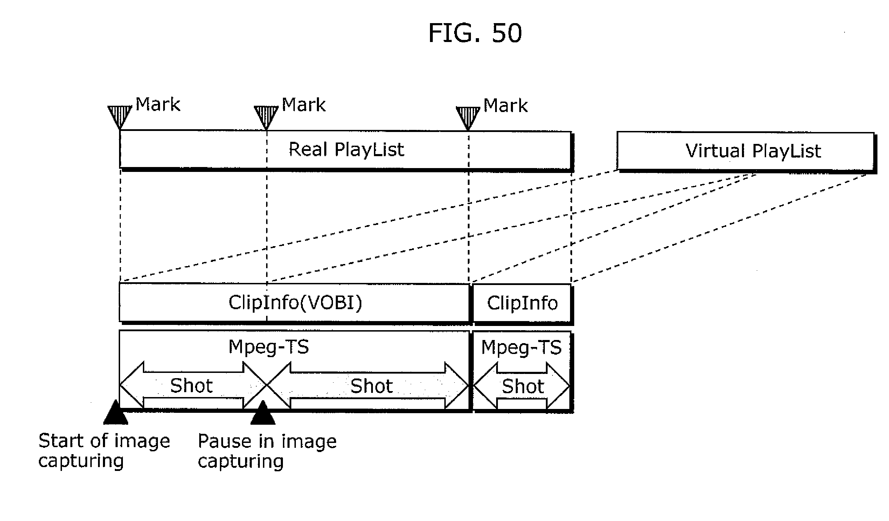

Here, FIG. 50 shows the relationship between: a Shot which is a basic unit of video images captured or recorded; and a RealPlayList and a VirtualPlayList.

As shown in FIG. 50, the RealPlayList is for reproducing the captured Shots in a stream, and basically, it is generated together with stream information when the stream is recorded.

In addition, a RealPlayLists is added or modified, for example, after a Shot is captured.

On the other hand, a VirtualPlayList is for reproducing a part of video recorded as a result of video editing by the user according to a desired order, and it is generated at the time of editing processing by the user.

As described above, a stream captured or recorded may be referred to by plural PlayLists. Thus, in the case where a stream referred to by a PlayList is deleted at the same time when the PlayList is deleted, the PlayList which refers to non-existent stream may remain.

Since a stream is referred to by at least one RealPlayList, the following may be assumed. In the case of deleting a VirtualPlayList, the referred stream and stream information of the VirtualPlayList are not deleted. In the case of deleting a RealPlayList, the referred stream and stream information of the RealPlayList are deleted, and the VirtualPlayList which refers to the stream is modified.

It is assumed that identification information of the RealPlayList and VirtualPlayList described above is stored in the "PL_Type".

Note that, in order to facilitate determining which stream is the stream for menu, information indicating that the PlayList refers to the stream for menu may be stored in the "PL_Type", or metadata for the Mark or metadata of stream information which will be described later.

In addition, information indicating that the PlayList refers to the stream (InteractiveGraphics(IG) Stream) on which the program described in the illustration of FIG. 34 is multiplexed may be stored in the "PL_Type", or the metadata for the Mark or the metadata of stream information which will be described later.

For example, in the case of PlayList which represents a slideshow, the stream may include buttons for page feeding and returning and button commands (IG Stream).

In this case, for example, when a first device generates a slideshow and a second device modifies the slideshow, the second device can judge whether the slideshow can simply be edited, or whether the slideshow includes an IG Stream and needs to be edited accordingly.

For example, in the case where the identifier specified in the PL_Type indicates that the PlayList is a RealPlayList including IG streams (IG Stream), the identifier allows the second device to detect the IG streams (IG Stream) first, delete all the detected IG Streams, and edit the slideshow.

Note that information about what device has recorded a disc may be stored in, for example, a "DiscInfo" in the metadata of this embodiment, although it is not shown.

This allows the recording device to determine whether the stream including the IG streams (IG Stream) has been generated by the device.

For example, when it is judged, based on the PL_Type, that the PlayList is a PlayList including IG streams (IG Stream) and that the PlayList has been generated by the device, the PlayList may be directly modified.

A description of FIG. 49 is continued below.

The date and time at which the PlayList was generated is recorded in a "PL generation date and time" area.

The title name of the PlayList is recorded in a "PL title" area.

A "MarkTable" area is an area in which the metadata of each Mark managed by the PlayList referred to by the PlayList metadata is stored, and includes a "Mark_Number" area and the metadata area of each Mark ("Mark#1" to "Mark#n" in the diagram).

In the example shown in FIG. 49, the "Mark_Number" indicates the same number as the number of marks (Mark) managed by the PlayList, and the metadata of each Mark is stored starting with the "Mark#1" according to the order managed by the PlayList.

Note that it is assumed in this embodiment that the Mark managed by the PlayList is associated one-to-one with the Mark managed by the metadata, but association of the same is not limited to this.

For example, a Mark which cannot be defined in the BD management information such as a Mark indicating the position at which the reproduction is paused may be managed only in metadata.

In this case, it is necessary to provide an area for storing, for example, the following information in the metadata of the Mark shown in FIG. 49: information indicating whether the Mark defined in the BD management information is referred to; and when it is referred to, the ID of the Mark or when it is not referred to, the positional information of the stream specified by the Mark managed by the metadata.

For example, the metadata of each Mark includes four areas of a "Mark_Type" area, a "Thumbnail" area, a "Capturing date and time" area, and a "PL reference information" area.

The "Mark_Type" area records the type of the Mark managed in the PlayList, and in this embodiment, the "Mark_Type" indicates whether the Mark is a Mark (Shot-Mark) indicating the top of a Shot.

In this case, in the characteristics of the functions of a Mark, only the RealPlayList manages the Mark indicating the top of the Shot.

In addition, it is assumed in this embodiment that the stream position corresponding to a thumbnail representing the PlayList is managed as a Mark.

More specifically, it is assumed that information for identifying whether the Mark is the Mark (PL-Mark) indicating a representative thumbnail of the PlayList is stored in the "Mark_Type" area. In addition, whether the information is a BookMark which is added by a user may be defined.

Next, the "Thumbnail" area specifies an image in the stream position specified by the Mark as a thumbnail.

Note that, in the case where the Mark is a Mark showing the top of a Shot, the image in the top of the Shot is basically set as a thumbnail. However, in order that the thumbnail which is a representative Shot is referred to, the following image may be set: the image which has been extracted through a user setting or automatic judgment and is positioned at a position different from the stream position specified by the Mark, instead of the image at the stream position specified by the Mark.

Note that, in the case where the Mark is a Mark showing the top of a Shot, the capturing date and time of the Shot is recorded in a "capturing date and time" area.

It is assumed that the "PL reference information" area is set only when the Mark is a Mark showing the top of the Shot, and the reference information of the PlayList which refers to the Shot is stored.

This PL reference information is added in order to easily search a PlayList which needs to be modified at the time when the Shot is referred to when the Shot or a stream including the Shot is deleted as described earlier.

Note that, when one of the Shot and the Real PlayList which manages the Shot which are related to each other is deleted, the other one is automatically deleted at the same time. Accordingly, as for the reference information to be stored in the "PL reference information", only the reference information for a Virtual PlayList may be stored.

It is also conceivable that the playlist file numbers of playlists (Real PlayList and Virtual PlayList) are defined separately in advance in order to efficiently identify the Virtual PlayList to be updated at the time when the Real PlayList is edited or deleted. By doing so, it is possible to instantly identify a playlist file having contents to be checked out at the time when the Real PlayList is edited. In this case, special information such as the Extension of a BD.INFO is not required.

The type of metadata and the storage method in this embodiment have been described above. Displaying the thumbnails of shots (Shot) in the order of capturing or recording when the shots (Shot) are displayed as a menu list allows a user to easily understand the relationship between each Shot and the thumbnail. This improves userfriendliness.

In this Embodiment, in the metadata shown in FIG. 49, the metadata ("PL#1" to "PL#m" in the diagram) of playlists (PlayList) are stored in the order of recording in order to facilitate sorting and menu display in the order of capturing or recording.

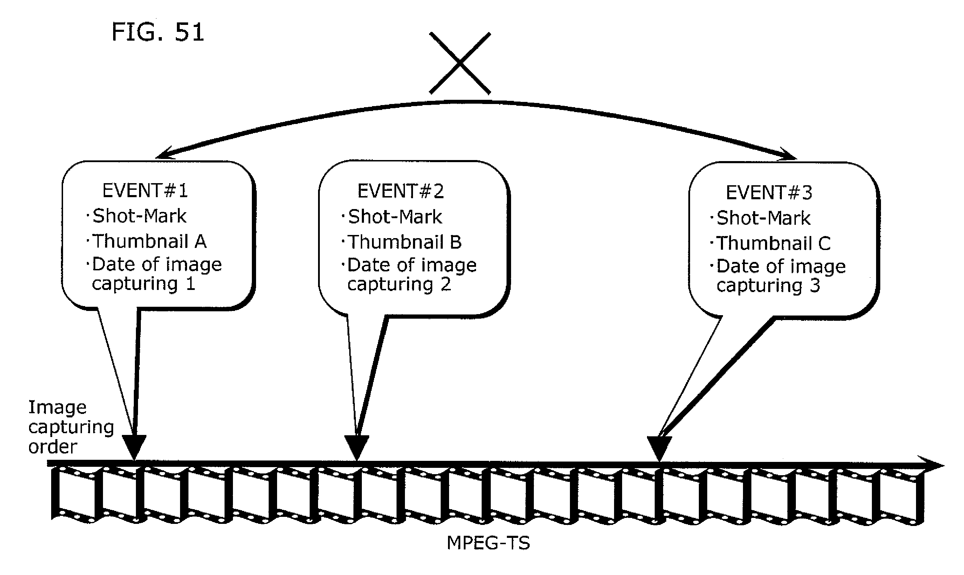

Basically, it is assumed that the storage position of metadata of a playlist (PlayList) is not changed even if it is edited. In addition, as shown in FIG. 51, it is assumed that the marks (Mark) showing the tops of shots (Shot) are arranged in the order of addition of the marks (Mark) in the PlayList, that the metadata of the marks (Mark) are recorded according to the order of capturing, and that each of the orders is not modified in the editing except for deletion.

In this way, it becomes possible to identify the capturing or recording order of the shots (Shot) recorded in the disc, based on the storage order of the metadata of the Real PlayList and the storage order of the metadata of marks (Mark) indicating the tops of shots (Shot) in the marks (Mark) managed by the Real PlayList.

In this way, it is only necessary to refer to the metadata shown in FIG. 49 in the case of generating a reproduction menu which is a list where the thumbnails and the capturing dates and time of the shots (Shot) are displayed.

In addition, it is preferable to sequentially analyze metadata of playlists (Real PlayList) as indicated by the "PL_ Type" and sequentially refer to, for menu display, the metadata of marks (Mark) which is Mark_Type=Shot-Mark (the Mark indicates the top of a Shot) in the metadata of the PlayList.

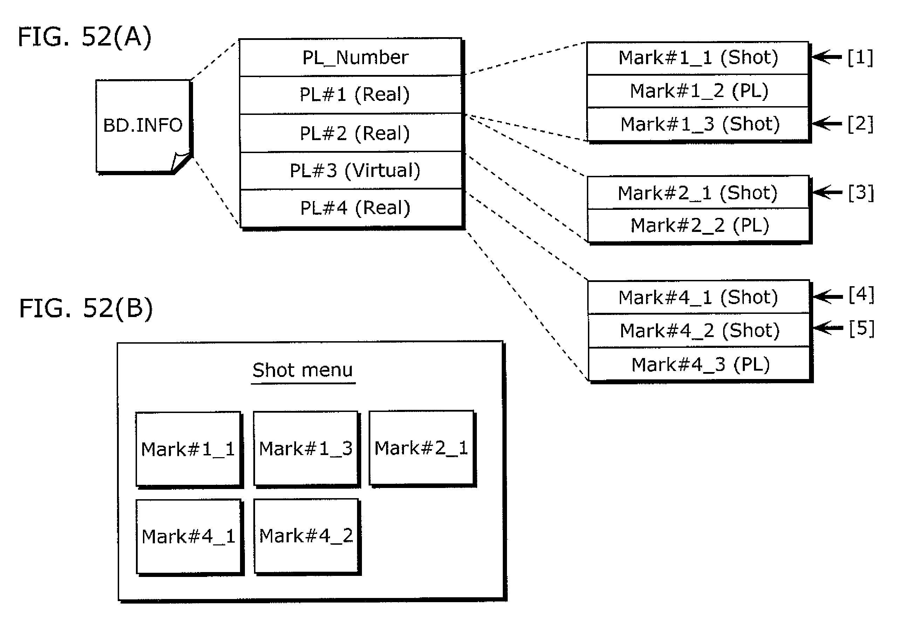

For example, assume that the metadata in this embodiment is as simply shown in FIG. 52(A). In this case, PlayList#1, PlayList#2, and PlayList#4 are real playlists (Real PlayList), and PlayList#3 is a virtual playlist (Virtual PlayList).

Accordingly, the playlists (PlayList) are recorded in the order of PlayList#1, PlayList#2, and PlayList#4.

In addition, in the diagram, the marks (Mark) to which "(Shot)" is assigned are the marks (Mark) indicating the tops of shots (Shot).

Accordingly, the extraction of the recording order of marks (Mark) indicating the tops of the shots (Shot) in each PlayList shows that the recording order of the shots (Shot) is the following listed order: Mark#1 and Mark#3 of PlayList#1, Mark#1 of PlayList#2, and Mark#1 and Mark#2 of PlayList#4.

In this way, a list menu of shots (Shot) can be finally displayed as shown in FIG. 52(B).

Note that it is possible to identify the generation order of real playlists (RealPlayList) and virtual playlists (VirtualPlayList) based on the storage order of the metadata.

In addition, by searching for a mark (PL-Mark) having Mark_Type indicating the representative thumbnail of a PlayList among the marks (Mark) managed by each PlayList, it is possible to generate a list menu where the thumbnails of the PlayList are displayed, if necessary.

The Fourth Embodiment of the present invention has been described up to this point. The recording method and data structure of this Fourth Embodiment is applicable to: an information recording medium on which metadata are recorded while maintaining the recording order of video images when captured or recorded video is recorded in BD-ROM format; a recording device which records the same; a recording method; a recording program; and a semiconductor which executes the recording method of the Fourth Embodiment.

(Fifth Embodiment)

Conventionally, there is no method for holding the capturing date and time of video having a BD-ROM format for commercial video data of a next generation optical disc in the case of recording video captured by a video camera onto a disc one-by-one.

Thus, in the Fifth Embodiment, a description is given of a recording method for recording capturing date and time information of each captured video as metadata in the extension area of a BD-ROM.

Even in the case where the video captured by the video camera is recorded in BD-ROM format using this recording method, it is possible to retain the capturing date and time of the video and display the capturing date and time of the video to a user in an appropriate form.

Note that the AV stream on which the captured video is recorded is a stream having an MPEG-TS format (refer to FIG. 42), as in the case of the Third Embodiment.

In this embodiment, a description is given of a method which is executed in a video camera or a fixed video recorder to record video which is captured or recorded in BD-ROM format.

Note that a BD-ROM Disc which is a next generation disc is taken as an example of information recording media in this embodiment, but information recording media are not limited to this.

For example, the same advantageous effect can be obtained even in the case of writing an application and a data structure in this embodiment onto an optical disc such as a DVD or another information recording medium such as a memory card (including an SD memory card and a memory stick) or a hard disc.

In addition, the same advantageous effect can be obtained in the case of distributing an application and a data structure in this embodiment via a network, instead of using an information recording medium.

The relationship between a basic capturing unit and BD management information is the same as that of the Fourth Embodiment.

The captured video and audio each is recorded in a stream having an MPEG-TS format in form of a V_PES and A_PES as shown in FIG. 42.

Here, a Shot refers to a video unit (basic capturing unit) starting from the point at which a capturing start button is pressed and ending with the point at which the button is released or a capturing pause button is pressed. A shot may be recorded as a single stream, or several shots may be stored in a single stream.

It is assumed that a Shot is managed in associated with a playlist (PlayList) on a Shot-by-Shot basis or a basis of a group such as a capturing date, and an Event managed in the playlist is set at the top of each Shot. A detailed description will be given later.

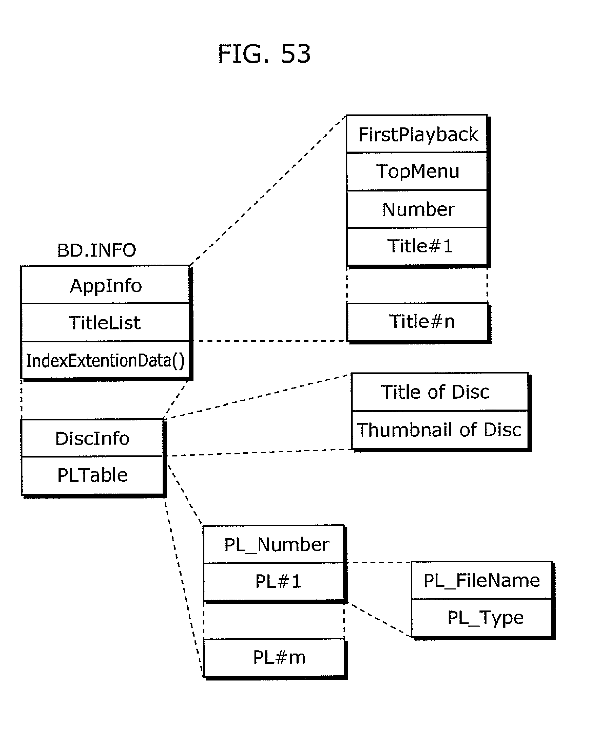

In the First Embodiment of the present invention, an example of "BD.INFO" which is one of the BD management information and which manages the information of the entire disc has been illustrated with reference to FIG. 18. In this embodiment, the format of FIG. 53 is employed.

Only a single BD.INFO shown in FIG. 53 exists on a disc, and the BD.INFO is released first at the time when the disc is inserted. The BD.INFO shown in FIG. 53 includes "AppInfo", "TitleList", and "ExtensionData". In the "AppInfo", information about the entire disc is stored.

The "TitleList" stores information of Title stored in the disc, and includes: two special Titles of "FirstPlayback" and "TopMenu"; and normal Titles.

The number of normal Titles is stored in the "Number" below the "TitleList". The "FirstPlayback", "TopMenu", and each "Title" have link information (Object ID) to an Object described later which should be executed at the time of selecting each title.

FirstPlayback is a title selected first at the time of disc insertion, and is a title for reproduction menu which is selected when a menu button on a remote controller is pressed.

Note that, in this embodiment, the data structure of "BD.PROG" in which information about objects (Object) is stored is the same as the data structure of "BD.PROG" shown in FIG. 41 described in the Third Embodiment.

Note that "BD.PROG" shown in FIG. 41 substitutes the "BD.PROG" illustrated with reference to FIG. 18 in the First Embodiment, and the "XXX.PROG" illustrated with reference to FIG. 17 is discarded.

The BD management information in this embodiment has been described above. The playlist in which the Shots are managed is associated with titles (Title) managed in a BD.INFO which is the BD management information on a playlist-by-playlist basis.

More specifically, a navigation command for reproducing a playlist corresponding to a Title is described in the Object referred to by the Title.

The playlist "XXX.PL" has been described in FIG. 16. Further, an event managed in the playlist is hereinafter referred to as Mark. As described earlier, a Mark defines an event (Mark) generated in a playlist, and the playlist manages plural marks (Mark) using IDs.

In addition, each Mark includes: the type of the Mark (Mark_Type), the ID of the Mark (Mark_ID), the generation time (Time) of the event (Mark), and the valid duration (Duration). Here, the mark types (Mark_Type) includes the two types of EntryMark and LinkPoint.

An EntryMark is a Mark which can be identified by a user as a Chapter, and a chapter number can be presented to the user by presenting the ordinal number of the EntryMark in the playlist starting with the top EntryMark.

In addition, it is possible to switch a chapter to be reproduced to a preceding or subsequent chapter by operating a remote controller.

The LinkPoint is a Mark which cannot be identified by the user, and thus it is cannot be identified as a Chapter as described earlier. The LinkPoint is mainly used as reproduction time information which is identified in a program to specify a reproduction position from the program.

The Mark has been described above. It is assumed that a playlist, which manages video captured or recorded by, for example, a video camera which is described in this embodiment, manages entry marks (EntryMark) which are set for each Shot which is a basic capturing unit to show the reproduction time corresponding to the top of a Shot.

In this way, a Shot which is a basic capturing unit is associated one-to-one with an EntryMark in the playlist. This allows the user to identify a captured Shot as a Chapter and select the Shot to be reproduced by performing switching operation of chapters (Chapter).

In addition, in this embodiment, it is assumed that the capturing dates and time of shots (Shot) and related information such as thumbnails of the shots (Shot) are also managed on an EntryMark-by-EntryMark basis. This makes clear the relationship between each Shot and the information related to the Shot, and makes easier the reference and management of the Shot.

The relationship between each Shot which is a basic capturing unit and a Mark in the BD management information has been described up to this point. However, the BD-ROM format is intended for recording and distributing a movie which has been edited in advance. Thus, in the case of recording captured video, some information such as the capturing dates and time of the shots (Shot) and the thumbnails of the shots (Shot) cannot be recorded in BD management information.

Accordingly, in this embodiment, such information which cannot be recorded in the BD management information is separately managed as metadata. It may be assumed that metadata is stored in a file other than the file in which BD management information is stored or that the metadata is stored in each extension area of the BD management information.

An extension area of the BD management information is an area corresponding to the "Extension" described in the Second Embodiment.

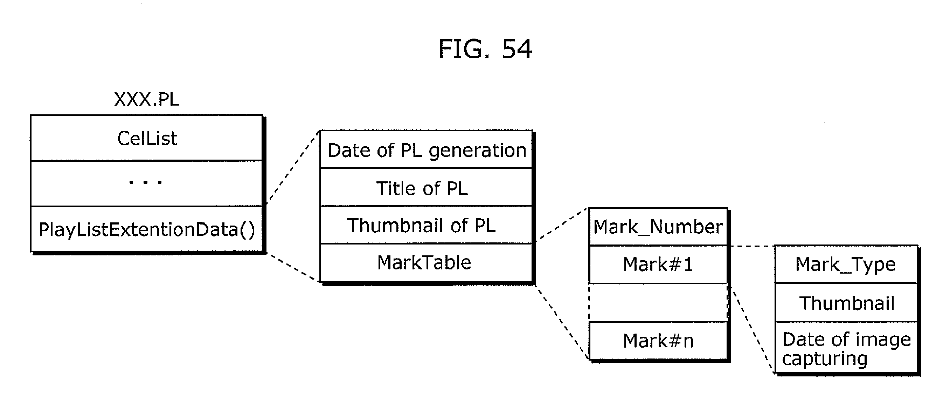

In this embodiment, BD.INFO includes IndexExtentionData() as an extension area at the end of data as shown in FIG. 53. The XXX.PL in which each playlist is stored has been illustrated in detail with reference to FIG. 16. In addition to the structure illustrated with reference to FIG. 16, the playlist XXX.PL has PlayListExtentionData() as an extension area at the end of data as shown in FIG. 54.

Thus, it is assumed in this embodiment that information which cannot be defined in the BD-ROM is defined in this IndexExtentionData() or PlayListExtentionData().

As a matter of course, a metadata storage method to be described below is a mere example. Note that the important thing is to store the following information as metadata, and thus the information may be stored in an extension area of a VOB management information file (ClipInformation), or another structure may be employed.

FIG. 53 shows an example of IndexExtentionData() defined in this embodiment.

First, two areas of a "DiscInfo" area and a "PLTable" area are prepared in the IndexExtentionData() which is present in the end of the BD management information "BD.INFO".

The "DiscInfo" area is for storing metadata about the entire disc. For example, the title information of a Disc is stored in a "Title of Disc", and information about a thumbnail image selected from the disc is stored in the "Disc thumbnail".

The "PLTable" area is an area for storing metadata about each PlayList which is one of the BD management information, and includes a "PL_Number" area and metadata areas ("PL#1" to "PL_#m" in the diagram) of playlists (PlayList).

The "PL_Number" indicates the total number of the playlist "XXX.PL", and the metadata of each PlayList (playlist "XXX.PL"). The metadata of the playlists (Playlist "XXX.PL") are stored starting with the "PL#1" in order.

For example, the metadata of each PlayList includes a "PL_FileName" area and a "PL_Type" area.

The "PL_FileName" area is information indicating the PlayList metadata stored in each of the metadata areas ("PL#1" to "PL#m"). For example, a file body "XXX" of the PlayList file "XXX.PL" is stored therein.

In addition, in the "PL_Type" area, the type of the PlayList is stored. All Videos in a BD-ROM have been subjected to authoring in advance. Thus, there is no need to define PlayList types, but play lists (PlayList) are roughly classified into two in the case where video which is captured or recorded are stored in BD-ROM format.

One is a PlayList stores a scenario for managing an original video captured or recorded and reproducing the video from the top, and the PlayList is referred to as RealPlayList hereinafter in this embodiment.

Another is a PlayList which stores a scenario describing that a user has performed editing such as modification on the reproduction order and specification of a reproduction part on the original video images. The PlayList is referred to as Virtual PlayList hereinafter in this embodiment.

Here, the relationships between: a Shot which is a basic unit of video images captured or recorded; and a Real PlayList and a Virtual PlayList are the same as those of the relationships between those illustrated with reference to FIG. 50 in the Fourth Embodiment.

As shown in FIG. 50, the Real PlayList is for reproducing the captured Shots in a stream, and basically, it is generated together with stream information when the stream is recorded. For example, a Real PlayList is added or modified, for example, after a Shot is captured.

On the other hand, a Virtual PlayList is for reproducing a part of video recorded as a result of video editing by the user according to a desired order, and it is generated at the time of editing processing by the user.

As described above, a stream captured or recorded may be referred to by plural play lists (PlayList). Thus, in the case where a stream referred to by a PlayList is deleted at the same time when the PlayList is deleted, the PlayList which refers to non-existent stream may remain.

Since a stream is referred to by at least one Real PlayList, the following may be assumed. In the case of deleting a Virtual PlayList, the referred stream and stream information of the Virtual PlayList are not deleted. In the case of deleting a Real PlayList, the referred stream and stream information of the Real PlayList are deleted, and the Virtual PlayList which refers to the stream is modified.

It is assumed that identification information of the Real PlayList and Virtual PlayList described above is stored in the "PL_Type". In addition, the following types may be prepared: a type indicating that a stream to be reproduced in the playlist is a stream for menu, and a type indicating that a stream represents a slideshow.

In addition, information indicating that the PlayList refers to the stream (InteractiveGraphics(IG) Stream) on which the program described in the illustration of FIG. 34 is multiplexed may be stored in the "PL_Type".

For example, in the case where the PL_Type of the playlist represents a slideshow, the stream may include buttons for page feeding and returning and button commands (IG Stream).

In this case, for example, when a first device generates a slideshow and a second device modifies the slideshow, the second device can judge whether the slideshow can simply be edited, or whether the slideshow includes an IG Stream and needs to be edited accordingly.

For example, in the case where the identifier specified in the PL_Type indicates that the stream is a slideshow including IG Sreams, the identifier allows the second device to detect the IG Streams first, delete all the detected IG Streams, and edit the slideshow.

Note that information about what device has recorded a disc may be stored in, for example, a "DiscInfo" in the metadata of this embodiment, although it is not shown.

This allows the recording device to determine whether the stream including the IG Sream has been generated by the device.

For example, in the case where the stream is judged to be a slideshow including an IG Stream based on the PL_Type and has been generated by the device, the stream may be directly modified.

FIG. 54 shows an example of IndexExtentionData() defined in this embodiment.

The PlayListExtentionData() includes the following four areas: a "PL generation date and time" area, a "PL title" area, a "PL thumbnail" area, and a "MarkTable" area.

The date and time at which the PlayList was generated is recorded in a "PL generation date and time" area.

The title name of the PlayList is recorded in a "PL title" area.

Reference information to a thumbnail representing the PlayList is recorded in the "PL thumbnail" area.

A "MarkTable" area is an area in which the metadata of each Mark managed by the PlayList referred to by the PlayList metadata is stored, and includes a "Mark_Number" area and the metadata area of each Mark ("Mark#1" to "Mark#n" in the diagram).

In the example shown in FIG. 54, the "Mark_Number" indicates the same number as the number of marks (Mark) managed by the PlayList, and the metadata of marks (Mark) are stored starting with the "Mark#1" according to the order managed by the PlayList.

Note that, in this embodiment, it is described that the Mark managed by the PlayList is associated one-to-one with the Mark managed as metadata, but the relationship is not limited to this.

For example, a Mark which cannot be defined in the BD management information such as a Mark indicating the position at which the reproduction is paused may be managed only in metadata.

In this case, it is necessary to provide an area for storing, for example, the following information in the metadata area of the Mark shown in FIG. 54: information indicating whether the Mark defined in the BD management information is referred to; and when it is referred to, the ID of the Mark, or when it is not referred to, the positional information of the stream specified by the Mark managed by the metadata.

For example, the metadata of each Mark includes three areas of a "Mark_Type" area, a "Thumbnail" area, and a "Capturing date and time" area.

The "Mark_Type" area is for recording the type of a Mark managed in the PlayList. For example, one of Mark_type is Shot-Mark which is the Mark showing the top of a Shot. In this case, only the Real PlayList manages this Shot-Mark.

For example, as another Mark_Type, SlideshowMark representing the start position of each still image in a slideshow may be defined, in addition to OldShotMark which will be described later.

For example, in the case where the stream which is reproduced by the Real PlayList allows coexistence of a video and a slideshow, it is possible to judge whether each Chapter is a video or a still image based on the SlideshowMark and ShotMark.

In addition, even in the case of displaying thumbnails of video shots (Shot) in menu display, it is possible to display a list of thumbnails of only an EntryMark having ShotMark as the MarkType in the metadata.

In addition, for example, a Mark for implementing a function which is unique to a maker may be employed by defining a MarkType, for example, called MakerPrivate.

Next, the "Thumbnail" area specifies an image in the stream position specified by the Mark as a thumbnail. Note that, in the case where the Mark is a Mark showing the top of a Shot, the image in the top of the Shot is basically set as a thumbnail.

However, in order that the thumbnail which is a representative Shot is referred to, the following image may be set: the image which has been extracted through a user setting or automatic judgment and is positioned at a position different from the stream position specified by the Mark, instead of the image at the stream position specified by the Mark.

In the case where the Mark is a Mark showing the top of a Shot, the capturing date and time of the Shot is recorded in the "capturing date and time" area of the Shot.

In addition, information recorded as metadata of a Mark is not limited to the information described above. For example, information about the captured information which cannot be recorded in the BD-ROM standard may be held as metadata.

The types of metadata and the storage method in this embodiment have been described up to this point. Displaying the thumbnails of shots (Shot) in the order of capturing or recording when the shots (Shot) are displayed as a menu list allows a user to easily understand the relationship between each Shot and the thumbnail. This improves userfriendliness.

In this embodiment, in the metadata shown in FIG. 53 and FIG. 54, the metadata (I1PL# 1" to "PL#m" in the diagram) of playlists (PlayList) in FIG. 53 are stored in the order of recording in order to facilitate sorting and menu display in the order of capturing or recording.

Basically, it is assumed that the storage position of metadata of a playlist (PlayList) is not changed even if it is edited. In addition, as shown in FIG. 51, it is assumed that shot marks (Shot-Mark) showing the tops of shots (Shot) are arranged in the order of capturing the shots (Shot) in a Real PlayList, and that the order of adding marks (Mark) managed in the playlist and the order of recording metadata of the marks (Mark) described in FIG. 54 are also arranged in the capturing order.

In addition, it is assumed that the order is not modified in editing except for deletion. In this way, it becomes possible to identify the capturing or recording order of the shots (Shot) recorded in the disc, based on the storage order of the metadata of the Real PlayList and the storage order of the metadata of marks (Mark) indicating the tops of shots (Shot) in the marks (Mark) managed by the Real PlayList.

In this way, it is only necessary to refer to the metadata shown in FIG. 53 and 54 in the case of generating a reproduction menu which is a list where the thumbnails and the capturing dates and time of the shots (Shot) are displayed.

In addition, it is preferable to sequentially analyze metadata of playlists (RealPlayList) as indicated by the "PL_ Type" and sequentially refer to, for menu display, the metadata of marks (Mark) which is Mark_Type=Shot-Mark (the Mark indicates the top of a Shot) in the metadata of the PlayList.

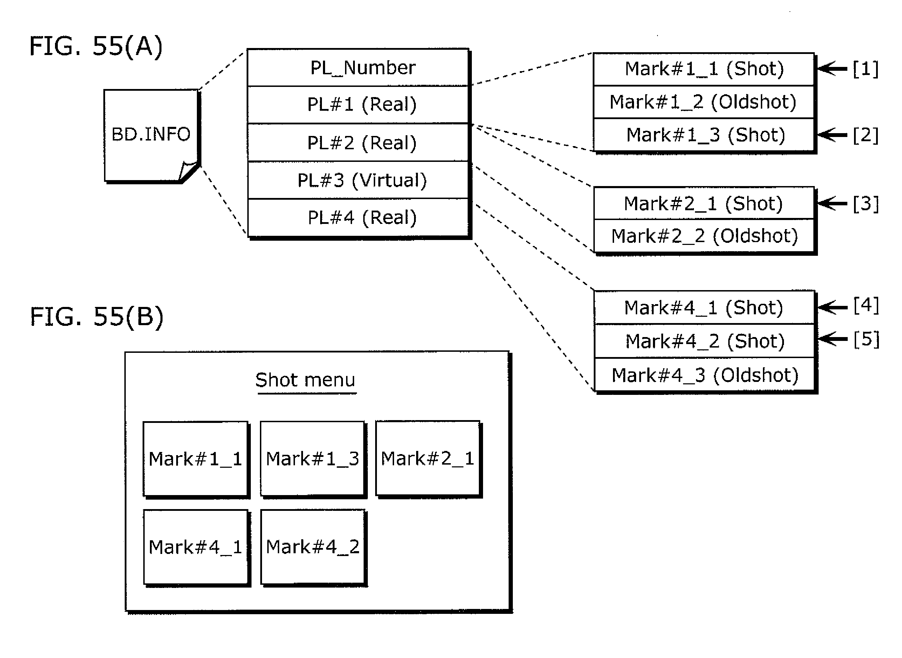

For example, assume that the metadata in this embodiment is as simply shown in FIG. 55(A). In this case, PlayList#1, PlayList#2, and PlayList#4 are real playlists (RealPlayList), and PlayList#3 is a virtual playlist (VirtualPlayList).

Accordingly, the playlists (PlayList) are recorded in the order of PlayList#1, PlayList#2, and PlayList#4.

In addition, in the diagram, the marks (Mark) to which "(Shot)" is assigned are the marks (Mark) indicating the tops of shots (Shot). In addition, in the diagram, the marks (Mark) to which "(OldShot)" is assigned are the marks (Mark) for holding to-be-lost metadata which will be described later.

Accordingly, the extraction of the recording order of marks (Mark) indicating the tops of the shots (Shot) in each PlayList shows that the recording order of shots (Shot) is the following listed order: Mark#1 and Mark#3 of PlayList#1, Mark#1 of PlayList#2, and Mark#1 and Mark#2 of PlayList#4.

In this way, a list menu of shots (Shot) can be finally displayed as shown in FIG. 55(B).

As described up to this point, with the recording method and the data structure in this embodiment, it becomes possible to manage the recording order of captured or recorded video images (Shot) and manage, as metadata, the information such as the date and time of the captured or recorded video images and the thumbnail on a Shot-by-Shot basis.

(Sixth Embodiment)

Next, a description is given of a Sixth Embodiment of the present invention.

A BD-ROM Disc which is a next-generation disc is taken as an example of an information recording medium in this embodiment, but the same advantageous effect can be obtained even in the case of writing an application and a data structure in this embodiment onto an optical disc such as a DVD or another information recording medium such as a memory card (including an SD memory card and a memory stick) or a hard disc.

In addition, the same advantageous effect can be obtained in the case of distributing an application and a data structure in this embodiment via a network, instead of using an information recording medium.

In the Fifth Embodiment, a description has been given of a method for recording, onto an information recording medium, information which cannot be recorded in the BD-ROM standard and includes the dates and time and thumbnails of captured or recorded video shots on a Shot-by-Shot basis.

In the Sixth Embodiment, a description is given of a recording method which solves a problem that information such as the capturing date and time and thumbnail of a Shot is lost in editing work of the Shot.

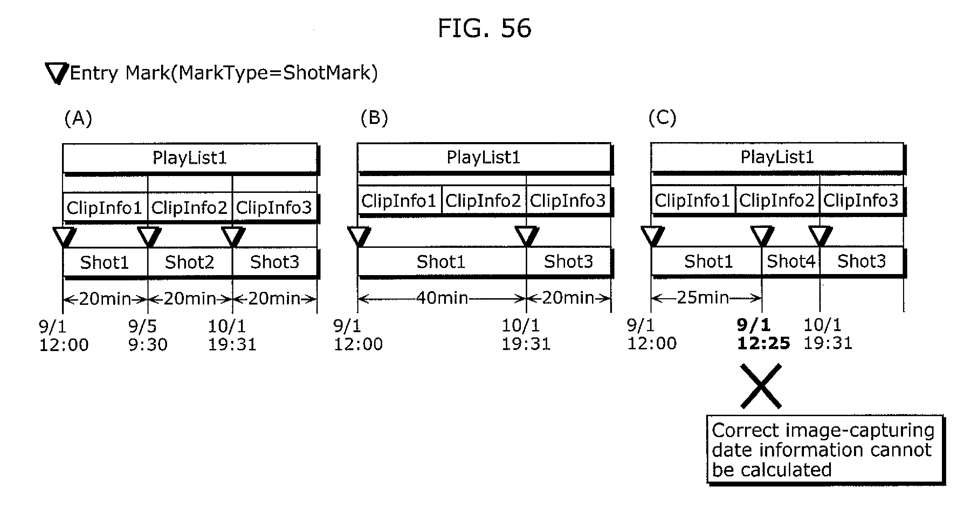

A specific example of the problem is described with reference to FIG. 56.

First, as shown in FIG. 56(A), it is assumed that a playlist (RealPlayList) manages three shots (Shot1 to Shot3) each having a capturing time of 20 minutes.

Here, as shown in FIG. 55(A), it is assumed that a Mark which is MarkType=ShotMark is assigned to the top of each Shot and that the capturing date and time and thumbnail of each Shot, and if necessary, information such as the capturing duration are managed in the metadata of the Mark as described in the Sixth embodiment.

In addition, the ShotMark is assumed to be an EntryMark which can be identified as a Chapter by a user.

Assume that a Shot1 and a Shot2 are combined in editing under the initial state described above, as shown in FIG. 56(B). In this case, the Shot2 is combined to the Shot1 at the end of the Shot1 to form a Shot 1 having a capturing duration of 40 minutes. Further, a ShotMark assigned at the top of the Shot2 is deleted.

Under this state, assume that the Shot1 is divided in editing into two at the 25-minute position after the time position corresponding to the top of the original Shot2, as shown in FIG. 56(C).

Assuming that the new Shot obtained through the division is a Shot4, an EntryMark which is MarkType=ShotMark is newly set at the top of the Shot4 and the metadata of the Mark is recorded.

In this case, it is impossible to calculate the capturing date and time of the Shot4. Here, for example, it is conceivable that the 25 minutes representing the division time point is added to the capturing date and time "September 1, 12:00" of the Shot1. However, the date and time "September 1, 12:25" obtained in this addition does not represent the correct capturing date and time of the Shot4.

As described above, combining and dividing processing of shots (Shot) produces a problem that the capturing dates and time of the shots (Shot) are lost.

Thus, in this embodiment, it is assumed that a MarkType called OldShotMark is newly provided as MarkType.

This MarkType=OldshotMark is a Mark for holding metadata to be lost by combining processing shown in FIG. 56(B), and it is not a Mark which can be identified as a Chapter by a user. Thus, in this embodiment, it is assumed that a MarkType=OldShotMark can be set only in a LinkPoint.

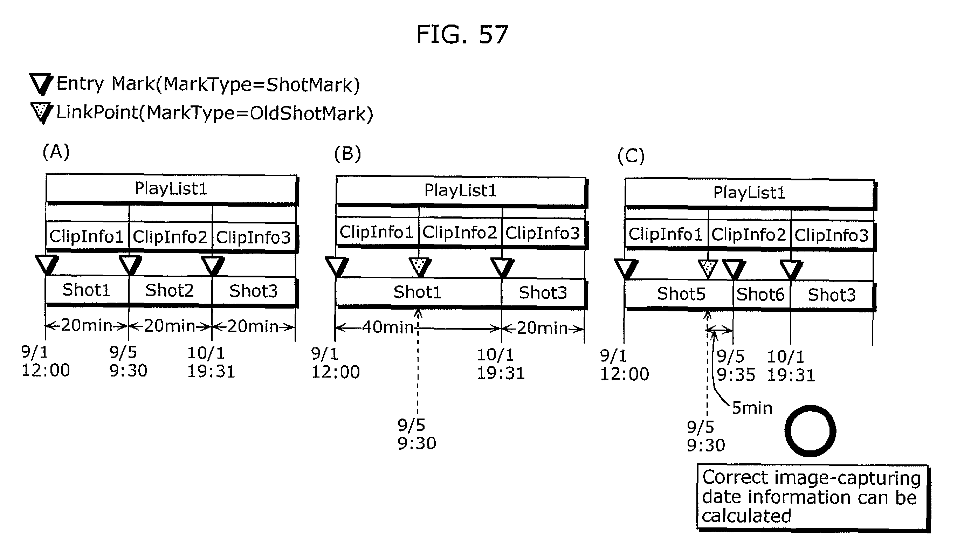

With reference to FIG. 57, a detailed description is given of this embodiment which makes it possible to hold metadata such as the dates and time of shots (Shot) in editing processing and, for example, set the correct capturing dates and time of the shots (Shot).

First, an initial state is shown in FIG. 57(A). This is the same as the initial state shown in FIG. 56(A). In addition, assume that the same editing as the editing shown in FIG, 56(B) is performed.

In other words, it is assumed that the Shot4 is generated by combining the Shot1 and the Shot2 in the editing under the initial state shown in FIG. 57(A), as shown in FIG. 57(B).

In this case, an EntryMark which should be assigned at the top of the Shot4 is the same as that of the Shot1 and no special processing is necessary for the EntryMark.

On the other hand, since the Shot2 disappears, the MarkType=ShotMark which is an EntryMark assigned to the top of the Shot2 is changed to a LinkPoint.

Next, the MarkType illustrated with reference to FIG. 54 is changed from a ShotMark to an OldShotMark. Through this, the Mark which showed the top of the Shot2 is held as a LinkPoint which is one of the management information in the BD-ROM. Thus, metadata of the Mark which is managed one-to-one with the Mark is held in the same manner.

Next, as shown in FIG. 57(C), assume that the Shot4 is divided in the editing at the 25-minute position from the starting position to form two shots (Shot) of Shot5 and Shot6.

In this case, an EntryMark which should be assigned at the top of the Shot5 is the same as that of the Shot4 and no special processing is necessary for the EntryMark.

On the other hand, since no EntryMark is set at the top of the Shot6, there is a need to newly set a MarkType=ShotMark which is an EntryMark also at the top of the Shot6. In addition, metadata of the EntryMark is newly recorded.

A description is given of a method for calculating the capturing date and time of the Shot6 in this case. First, a Mark which is present before the top of the Shot6 which is the division position is searched for in the before-division Shot4.

Here, the EntryMark of the MarkType=ShotMark is detected before the LinkPoint which is MarkType=OldShot-

Mark is detected. In other words, when a reach is made to the top of the Shot4, the capturing date and time of the Shot4 is obtained by simply adding the time corresponding to the division time point to the capturing date and time of the Shot4.

However, in the case of this example, the Shot4 is divided after the top of the original Shot2, as shown in FIG. 57(C). Thus, the LinkPoint which is the MarkType=OldShotMark is detected earlier.

In this case, first, the date and time information of "September 5, 9:30" is obtained with reference to the metadata of LinkPoint of the MarkType=OldShotMark corresponding to the top of the original Shot2.

Next, 5 minutes which is the reproduction duration from the time position of the LinkPoint of the detected MarkType=OkdShotMark (the top of the original Shot2) to the top of the Shot6 is added to the date and time information (September 5, 9:30) obtained first.

The correct date and time information of "September 5, 9:35" calculated in this way is the capturing date and time of the Shot6.

As shown in FIG. 57(B), in the case of dividing the Shot4 at the 20-minute position from the starting position, that is, dividing the Shot4 at the position corresponding to the top of the original Shot2, it is only necessary to change the LinkPoint indicating the top of the original Shot2 to an EntryMark and the MarkType in the metadata of the Mark to a Shotmark.

Note that the example illustrated with reference to FIG. 56 and FIG. 57 handles a problem which occurs in the editing such as combining and dividing shots (Shot) by changing reproduction control data of a Real PlayList specifying the reproduction position of a stream.

However, the example is applicable even in the case of editing an AV stream itself, for example, by deleting a segment in the middle of a Shot.

For example, in the case of deleting a part of the stream, it is preferable to set a Mark at the reproduction starting time immediately after the deleted part and set the capturing date and time calculated in the same approach as the one shown in FIG. 57(C) at the metadata of the Mark.

Note that judgment as to: whether a Mark should be changed to an EntryMark, and the MarkType in the metadata should be changed to a ShotMark; or whether the Mark should be changed to a LinkPoint, and the MarkType in the metadata should be changed to an OldShotMark, is made in the following manner.

In other words, the judgment is made depending on how the video shots before and after the deleted part is handled. In the case of handling the video shots before and after the deleted part as separate shots (Shot), the former setting is performed. In the other case of handling the video shots before and after the deleted part as a single shot (Shot), the latter setting is performed.

In this way, with the recording method and the data structure in this embodiment, it is possible to hold the capturing dates and time of shots (Shot) even when the shots (Shot) are combined or divided.

Note that the information such as the date and time information of a video captured and recorded can be embedded in, for example, in SEI_MESSAGE in a stream, in addition to a method where the information is stored as metadata in an extension area of management information in a BD-ROM.

In addition, in this case, it is also possible to detect the capturing date and time of the video from the stream at the position where editing such as dividing is performed.

Accordingly, in the case where shots (Shot) shown in FIG. 56(B) were combined, when the capturing date and time information of the shots (Shot) is stored in the stream, there is no need to perform the series of processing such as changing the EntryMark of the Shot2 to a LinkPoint, and changing the MarkType=ShotMark to an OldShot.

In addition, in the case where a shot (Shot) shown in FIG. 56(C) was divided, when it is checked out that the capturing date and time information is recorded in the stream, the following may be performed: detecting the capturing dates and time from the stream without calculating the capturing dates and time as illustrated with reference to FIG. 56 (C), and setting the detected capturing dates and time as metadata.

The Fifth and Sixth Embodiments of the present invention have been described up to this point. The recording methods and data structures of these embodiments are applicable to: an information recording medium on which metadata are recorded while maintaining the recording order of video when captured or recorded video is recorded in BD-ROM format; a recording device which records the same; a recording method; a recording program; and a semiconductor which executes the recording method of these embodiments.

In addition, with the recording methods and data structures of the Fifth and Sixth Embodiments, the capturing order of video can be recorded, and therefore, the present invention can be applied particularly in the industry of consumer devices.

(Seventh Embodiment)

Conventionally, in the case of recording metadata in a stream, the recording order is unknown. Thus, numerous metadata must be fully searched for and analyzed to seek out whether necessary metadata is described or not.

In addition, in the case where there are different metadata describing metadata of the same type, there is a problem that the reading device must perform complicated analysis.

Here, as a Seventh Embodiment, a description is given of an information recording device having the following features and a recording method for use with the information recording device. The information recording device codes supplementary information of video information at the same time of coding the video information. The supplementary information is assigned for each picture of the video information. A piece of supplementary information includes identification information (ID) and real information (data). In the case where the information recording device describes, in the same picture, plural pieces of supplementary information in which the information of the same type can be stored, it records the supplementary information with predetermined identification information (ID).

With this information recording device and recording method, it is possible to improve the searching efficiency of metadata, and even in the case where metadata of the same type is recorded using a different approach, it becomes possible to easily analyze the metadata in accordance with the functionality of the device.

Note that the Seventh Embodiment relates to metadata for use with a movie device. The Seventh Embodiment is basically based on the First Embodiment, and thus extended or different parts will be mainly described below.

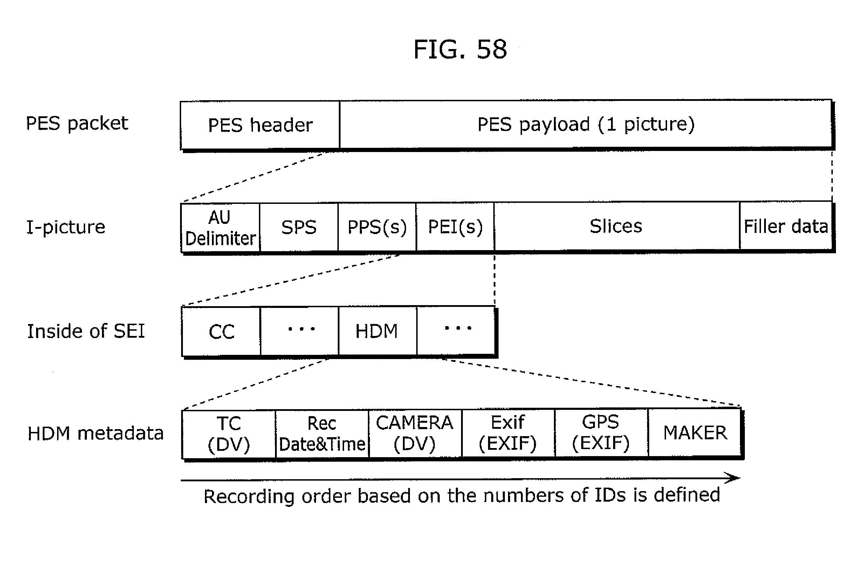

FIG.58 is a diagram showing a data structure of a PES packet and more detailed contents of the PES packet. In the case where an MPEG-2 TS is used as in a BD and digital broadcasting, it is common that a picture is stored in a PES packet.

A picture coded in the MPEG-4 AVC includes: an Access Unit Delimiter (AU Delimiter) indicating the top of an access unit, a Sequence Parameter Set (SPS) indicating the attribute of a sequence, a Picture Parameter Set (PPS) indicating the attribute of the picture, a Supplemental Enhancement Information (SEI) for storing supplemental information, and a Slice indicating a slice coding information.

A SEI for storing supplemental information stores ClosedCaption information and other information.

Here, metadata mainly for video camera recorders is stored in a SEI in form of HDM.

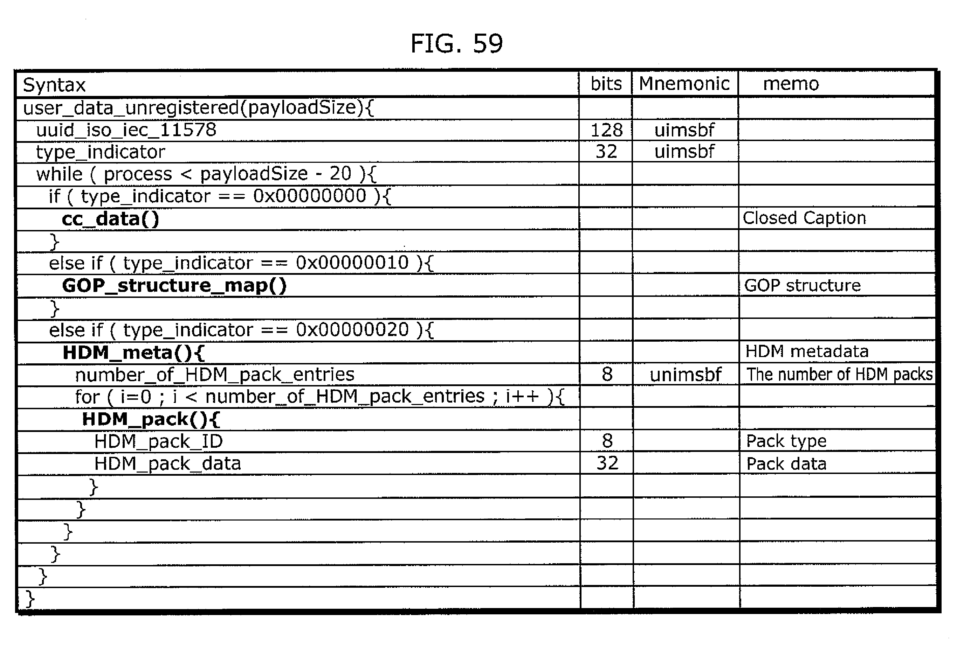

FIG. 59 shows the data structure of a SEI. As shown in the diagram, it is possible to identify the type of the stored data based on the identification information (type_indicator) indicating the supplemental information included in the SEI.

For example, "type_indicator=0x00000020" shows that HDM data is stored.

HDM data are is an assembly of an HDM_pack_ID (8 bits) and an HDM_pack_data (32 bits).

The values of the IDs show the type of supplemental information stored in the subsequent HDM_pack_data. As shown here, these HDM packs (HDM_pack) are stored in sequence in an HDM_meta().

The HDM_pack has the same data structure (made of an 8-bit ID and a 32-bit data) as a DV pack of the supplemental information used by a Digital Video (DV) camera).

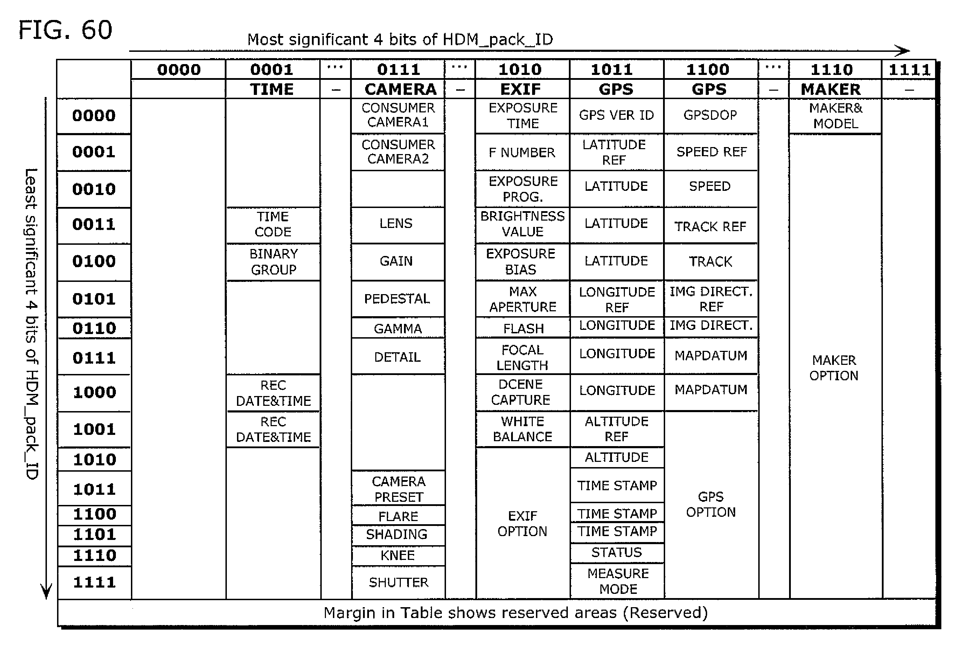

FIG. 60 is a list indicating the ID values of the HDM packs (HDM_pack) and the information stored therein.

The following is the same as those in the DV pack: TIME CODE and BINARY GROUP in the TIME column (having 0001b as the most significant 4 bits); and all the HDM packs (HDM_pack) in the CAMERA column (having 0111b as the most significant 4 bits).

REC DATE & TIME is date and time information indicating the capturing date and time of the supplemental information (picture).

Information in the EXIF column (having 1010b as the most significant 4 bits) and information in the GPS column (having 1011b or 1100b as the most significant 4 bits) are the same as that of Exif used by the digital still camera.

While Exif is described in 32 bit/32 bit RATIONAL description, note that the information is described in 16 bit/16 bit RATIONAL description to reduce the size of information.

An EXIF OPTION and a GPS OPTION are packs which are used for writing information of Exif/GPS which are not described in this list.

More specifically, it is possible to store the metadata of the Exif into the subsequent pack by: describing, into the HDM_pack_data, an Exif_Tag (16 bits) describing a Tag value of the Exif; and describing, into the Exif, RATIONAL16 which is a 16-bit description, an Exif_Type (8 bits) including newly added SRATIONAL16 with a code, and a Pack_Length (8 bits) indicating the number of subsequent packs.

Defined in the MAKER column (having 1110b as the most significant four bits) are: a MAKER&MODEL pack describing a maker code and a recorded model code in 16 bits each, and a MAKER OPTION pack which can be arbitrarily used by the maker.

In this way, it is possible to immediately identify the data stored in the pack based on the HDM_pack_ID value. However, in the case where there is no recording rule in HDM_meta(), searches must be always continued until the last pack is searched for. Thus, a high-speed search and extraction of metadata is impossible.

In addition, since a SEI is data written together with the upper-limit size of 256 bytes on a picture-by-picture basis, the metadata must be processed in real time (at high speed).

In addition, since there is no need to record all packs on a picture-by-picture basis, it is conceivable that the pack storing a desired metadata may not be searched out even when a search is performed until the last pack is searched for.

Thus, it is very important that the recording order of HDM packs (HDM_pack()) in an HDM_meta() is defined that the HDM packs (HDM_pack()) are arranged in an ascending order of the values of the HDM pack IDs (HDM_pack_ID) of the HDM packs.

With this, it becomes possible to judge whether or not further search in the HDM_meta() is necessary to search out a desired pack. In addition, in the case where a search is moved to an ID value exceeding the ID value of a desired pack, the fact shows that the desired pack does not exist at the subsequent positions. Thus, the search processing can be terminated at this earlier time point.

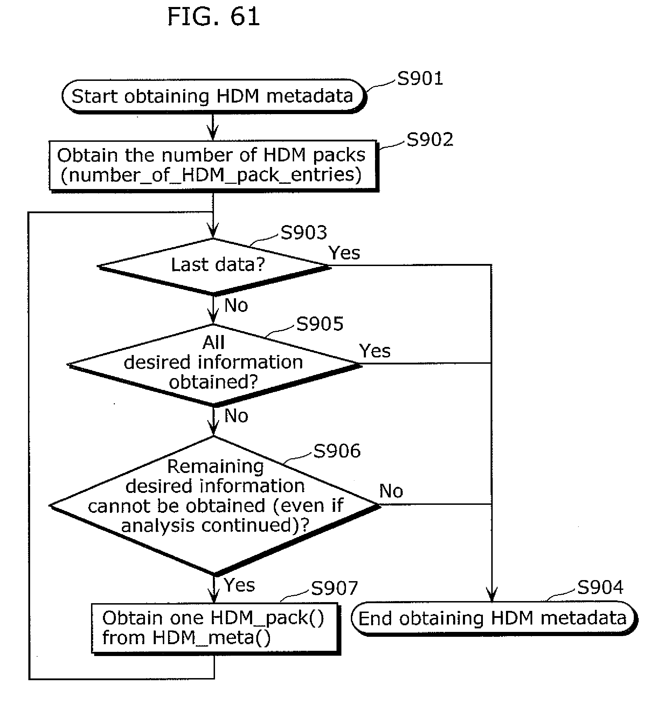

FIG. 61 is a flowchart showing a flow of the processing.

When the obtainment of HDM metadata is started (S901), the number of the HDM packs is obtained (S902). In the case where an HDM metadata is obtained and found to be the last data (Yes in S903), the obtaining processing of HDM metadata is terminated (S904).

In addition, in the case where the HDM metadata is not the last data (No in S903), whether or not all the pieces of desired information have been obtained is judged. In the case where all the pieces of information have been obtained (Yes in S905), the obtaining processing of HDM metadata is terminated (S904). In addition, in the case where all the pieces of information have not been obtained (No in S905), whether or not desired information can be obtained if the analysis is continued.

In the case where the desired information cannot be obtained (No in S906), the obtaining processing of HDM metadata is terminated (S904). In addition, in the case where the desired information can be obtained (Yes in S906), an HDM_pack() is obtained, and the on-going processing returns to the judgment as to whether the data is the last data (S903).

As shown in FIG. 61, since the packs in the HDM_meta() are written according to the order of IDs, desired packs can be searched out/extracted with a minimum processing load.

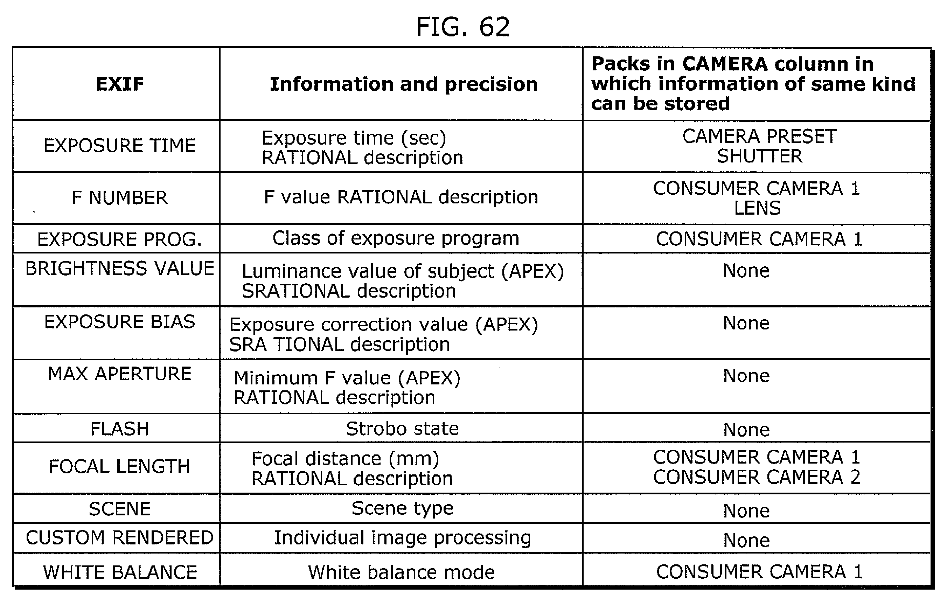

FIG. 62 compares whether the packs in a CAMERA column defined in a DV is the same as the information stored in the packs in an EXIF column defined in an EXIF.

FIG. 62 shows a case where the information stored in some of the packs in the EXIF column can be written in some of the packs in the CAMERA column. In other words, the information is doubly defined.

This shows that some of optical parameters such as focal length and the like are doubly defined because the HDM_meta() uses main metadata of the DV and Exif.

For example, a FOCAL LENGTH of the EXIF column can be written in both a CONSUMER CAMERA 1 and a CONSUMER CAMERA 2 in the CAMERA column.

An inexpensive device does not require high-quality information in the EXIF column which is for still pictures. Information in the CAMERA column used in the DV may be enough in terms of accuracy for the inexpensive device.

In addition, there is a problem that analysis processing of the HDM_meta() is complicated because the same-type information is doubly held in this way.

Thus, in the case of recording packs in an EXIF column, it is important to record packs in a CAMERA column, as long as the information stored in the packs can be written also in the CAMERA column.

Taking into consideration the rule which defines recording performed according to the order of IDs, such inexpensive device can perform a search according to the order of IDs, analyze only the packs, in the CAMERA column, which have information with a desired accuracy. Even in the case where a pack in the EXIF column is present as the subsequent data, the inexpensive device can stop the analysis processing at the time when it obtains only the information in the CAMERA column and provide the information to a user.

In addition, in the case where a desired data can be obtained with the CAMERA column, an device which can handle information in the columns up to the EXIF column can easily analyze the information in the columns up to the EXIF column and obtain supplemental information which is further accurate.

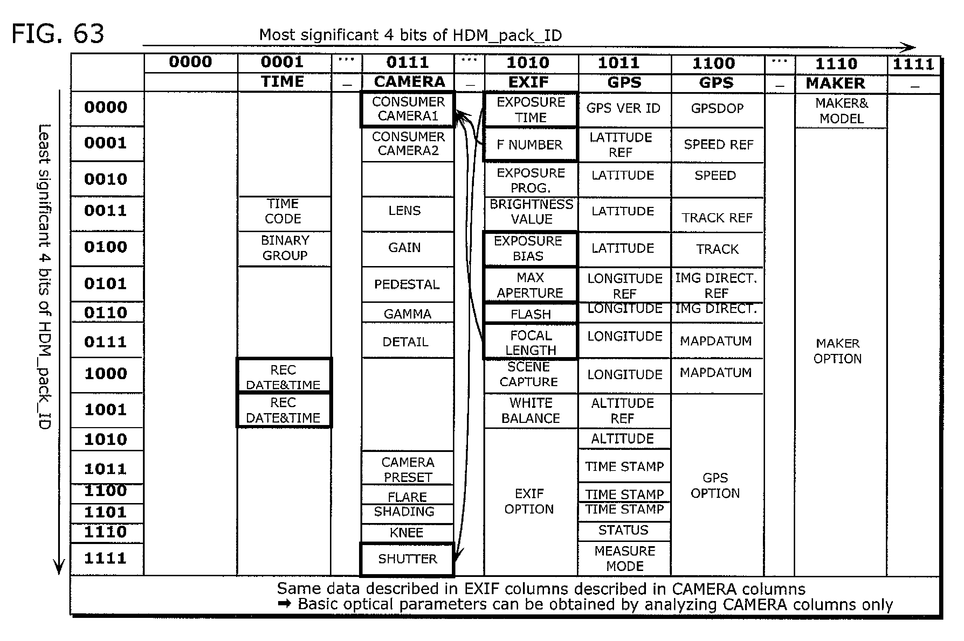

FIG. 63 is a diagram illustrating an example of recording rules in the case where information of same type is held in the DV and the EXIF. In this example, the following packs are recorded: EXPOSURE TIME, F NUMBER, EXPOSURE BIAS, MAX APERTURE, FLASH and FOCAL LENGTH in the EXIF column. Thus, the packs in the CAMERA column corresponding to the packs in the EXIF column are also recorded.

In addition, since the F NUMBER and FOCAL LENGTH are recorded, the CONSUMER CAMERA 1 is recorded, and since the EXPOSURE TIME is recorded, the SHUTTER is recorded.

As described above, in the case of recording pieces of information which are the same in type but different in accuracy, it is important that the information with a lower accuracy is recorded first in the recording order without exception.

Note that the relationship between corresponding packs becomes complicated, and that data in the CAMERA column before the EXIF column is to be added in order to add the data in the EXIF column. This may complicate insertion processing on a memory.

In this case, in recording predetermined packs in the EXIF column, it is effective to define a rule that only the CONSUMER CAMERA 1 in the CAMERA column is recorded without exception.

In FIG. 62, the predetermined packs are referred to as F NUMBER, EXPOSURE PROG., FOCAL LENGTH, and WHITE BALANCE.

In recording another information in the EXIF column in a simpler manner, the information may be recorded in a predetermined pack in the CAMERA column without exception.

In addition, it is conceivable that management information (YYY.VOBI) of the stream shows which one of the CAMERA column and the EXIF column is used.

The DV is designed as metadata for video and the EXIF is designed as metadata for still images. Thus, it is possible to record information indicating whether the VOB is video or still images in the VOBI of the VOB, and selectively use one of the CAMERA column for video and the EXIF column for still images depending on the value of the information.

With the information recording device and the recording method in this embodiment, it is possible to simplify searching processing of metadata when some of the metadata recorded on an optical disc or the like are doubly recorded, and when the types of metadata are huge. Thus, it becomes possible to widely reduce the processing time for reproduction (search). Accordingly, the device and method of the present invention are applicable also to recording in hard discs and on recording media such as semiconductor memory.

(Eighth Embodiment)

In recent years, user demand for managing still images captured by a digital still camera together with video is increasing.

Generally, a still image is captured by a digital still camera in JPEG requiring very high pixel values (1920 x 1080 or more). Thus, there is a problem that such still images are difficult to be handled by consumer AV devices intended for output video to HDTVs because of both the Codec and the size.

In addition, the next-generation DVD standard (BD-ROM standard) is basically intended for package media, while it can handle still images as a slide show. Thus, under the standard, it is difficult to perform editing work such as modifying reproduction order of the still images in the slide show and deleting one of the still pictures.

Here, as an Eighth Embodiment, a description is given of a recording method for receiving inputs of still images captured by the digital still camera as a slideshow according to the BD-ROM standard so that the still images can be easily edited.

More specifically, a description is given of the following information recording device and the recording method for use with the information recording device: the information recording device which generates a still image unit which is a system stream including a still image, and which records, onto an information recording medium, the still image unit together with the reproduction management information for managing the reproduction of the still image unit. Here, the still image unit is assumed to have a data size corresponding to an integral multiple of the size of a recording unit (sector) of the information recording medium onto which the still image unit is recorded.

With the information recording device and the recording method in this embodiment, it becomes possible to manage video and still images in parallel with each other using a slideshow of the still images, and to manage the contents (for example, video and still images captured at the event of children's athletic meet) on an event-by-event basis.

In addition, by adding resistance to editing to the still image slideshow before editing, it becomes possible to easily perform and increase efficiency in performing editing work such as the modification and deletion in the reproduction order of the still image slideshow.

The Eighth Embodiment relates to the stream structure of a still image slideshow on a BD-ROM. The Eighth Embodiment is basically based on the First Embodiment, and thus extended, or different parts will be mainly described below.

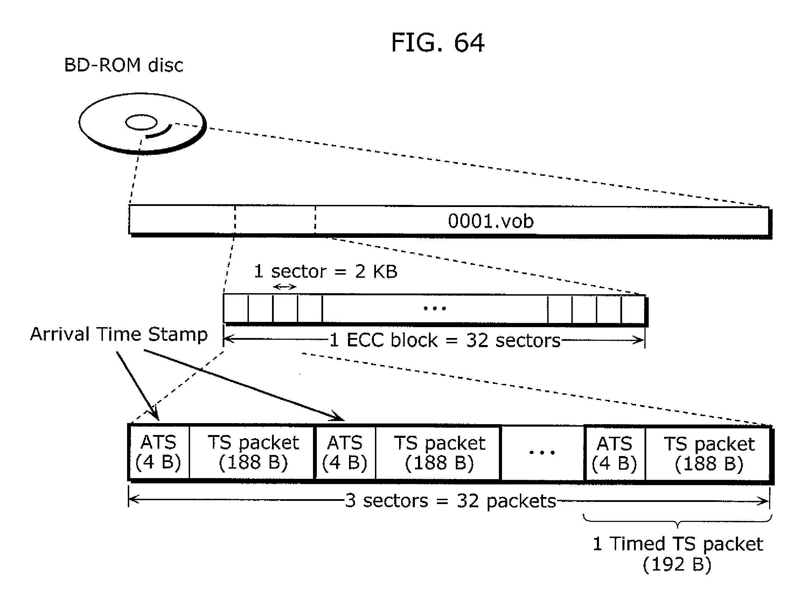

FIG. 64 shows the stream structure of the BD. A stream handled on the BD is structured with 192-bite packets called Timed TS Packet irrespective of the sector size of the medium onto which the stream is recorded. A Timed TS Packet includes a TS packet (188 bytes) and an Arrival Time Stamp (ATS, 4 bytes) for reconstructing the input time at which the TS packet was inputted to the decoder.

The BDs are designed to handle TS packets (MPEG-2 Transport Streams) in order to establish compatibility with digital broadcasting where MPEG-2 TSs are used.

A Timed TS Packet has a size of 192 bytes which is not equal to the size of 2 KB of a sector in a DVD and a BD. Thus, a unit corresponding to 32 timed Timed TS Packets (TS packets) is determined as a minimum recording unit (of 6 KB which is also called Aligned Unit).

Thus, in the case of performing editing, addition or deletion is performed on a per Aligned Unit (6 KB) basis, and a stream itself handled in the BD is handled as if it is structured with integer pieces of aligned units (Aligned Unit).

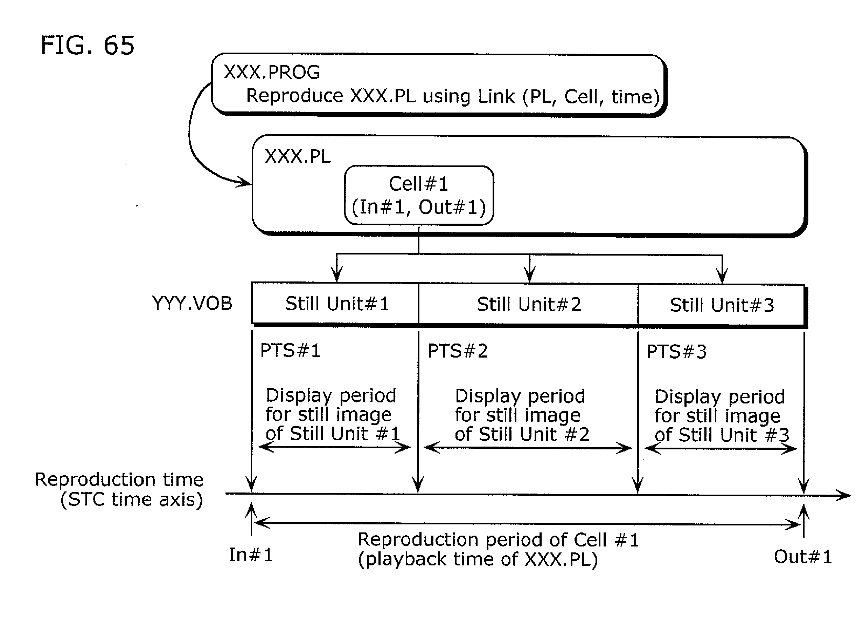

FIG. 65 shows a format structure in the case where still images captured in a digital still camera or the like are inputted as a slideshow defined for BD-ROMs.

As shown in the diagram, an "XXX.PL" is a program (reproduction management information) for reproducing an "XXX.PROG", and the "XXX.PL" is a playlist structured with a Cell.

A Cell#1 shows the entire "YYY.VOB" stream including three still units (Still Unit) (segments in an MPEG2-TS including one still image). In addition, reproduction starting time (In#1) and reproduction ending time (Out#1) are information specifying a reproduction time duration of each of the three still units (Still Unit).

The values of PTSs assigned to I-pictures in the respective still units (Still Unit) are a PTS#1, PTS#2 and PTS#3 respectively. In the case where there is no interaction such as a skip instruction from a user, the still units are automatically switched at the timings shown by the PTSs and reproduced.

Thus, in the case where the user does not perform any operation, the time duration corresponding to PTS#2 and PTS#1 is the display time of the still image of STillUnit#1.

In the case where the user performs an operation such as a skip to the next still image, it is possible to start reproduction of the next Still Unit at the timing of the operation.

In the case where the user inputs a still image in a digital still camera using a slideshow in a BD-ROM, there is a restriction that the STC time axis of a Cell (the inside standard time of an MPEG stream) must be progress continuously. For example, in the case where only the StillUnit#2 is deleted in the editing, there is a need to modify time information embedded in a stream such as a PTS#3 at the time of deleting the part from the stream.

In addition, the StillUnit#2 is not sector aligned, in other words, data length is not an integral multiple of 6 KB. Thus, complex deletion processing is needed because deletion processing on a sector-by-sector basis cannot be performed in the editing of deleting a part from a stream.

This is because the first and last timed TS packets (Timed TS Packet) in a StillUnit#2 are recorded in the same sector as the timed TS packets (Timed TS Packet) of the still units (StillUnit#1 and StillUnit#3) at the both ends.

As described above, slideshow editing involves two processes of sector alignment and changing time information. A method to solve this problem will be described below.

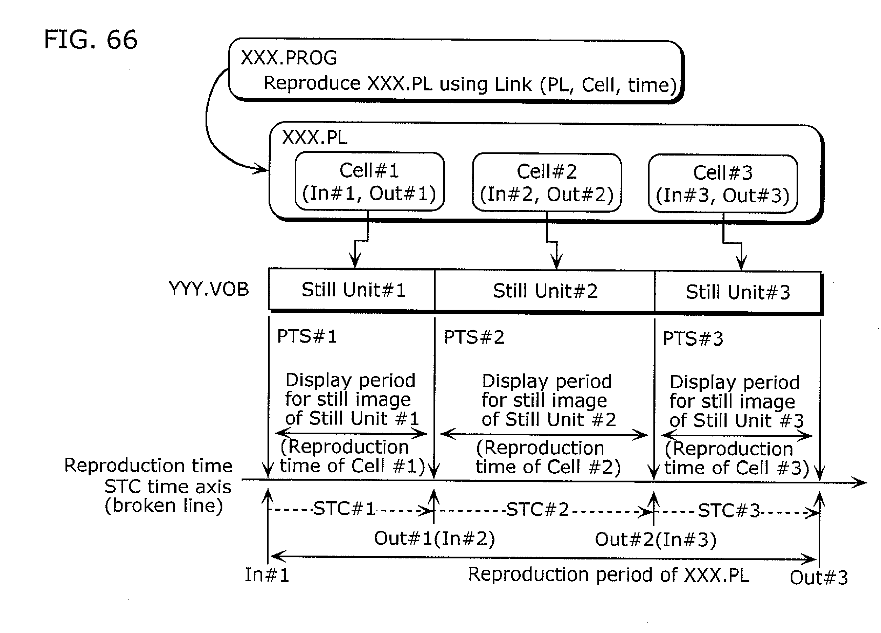

The "XXX.PROG" shown in FIG. 66 is the same as the one shown in FIG. 65, and a Cell constituting "XXX.PL" is associated one-to-one with a Still Unit. This provides an advantage of eliminating modification of a time stamp inside a stream even when a particular Still Unit is deleted (as shown in the diagram, each Cell is arranged on the STC time axis exclusive for the Cell).

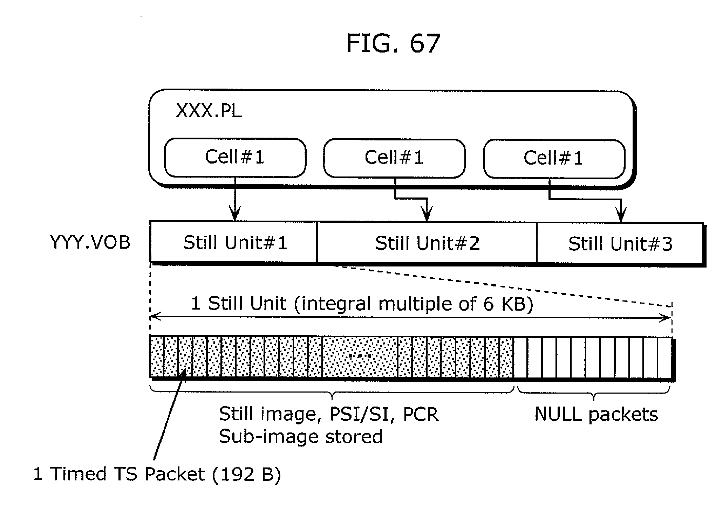

In addition, as shown in FIG. 67 in detail, it is possible to add dummy timed TS packets (Timed TS Packet which may be NULL packets) so that the data size of a Still Unit becomes an integer multiple of the data size (6 KB) of an Aligned Unit.

By doing this, it becomes possible to easily perform deletion or order modification on a per still picture basis (a StillUnit-by-StillUnit basis).

For example, in the case where an MPEG-2 Video is used, a Still Unit is structured with: a main video stream representing still images including a sequence header, a GOP header, an I-picture, and a sequence end code; a PSI/SI packet (such as a PAT, PMT and SIT) necessary for the program structure; a PCR packet carrying time information for generating a standard time STC; and a sub-video stream which is overlaid and displayed on the still images (main stream).

By adding the above-described restriction, for example, it becomes possible to perform processing of deleting the StillUnit#2 in FIG. 66 and modify the order of the StillUnit#2 and the StillUnit#3 only by simply modifying the Cell information in a playlist file and deleting or rearranging a part in a stream (Still Unit).

In other words, there is no need to analyze the part after the modified part in the stream and change the PTS value.

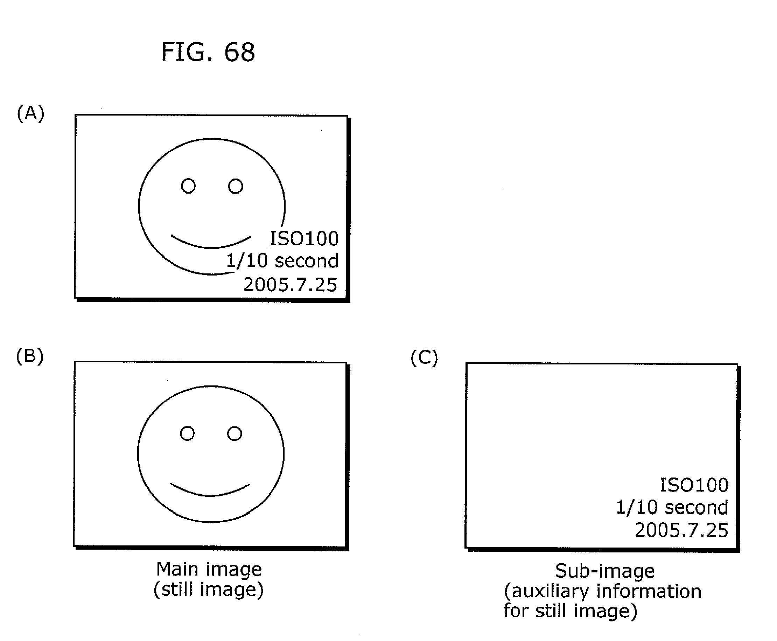

FIG. 68 shows an example of inputting Exif information which is frequently used in a digital still camera, in a form of a subtitle stream as sub-video information.

Exif information includes supplementary information related to various types of still images, and the information includes shutter speeds, ISO sensitivity, the dates of image capturing of still images.

Such supplemental information of the still images need not to be always displayed. Thus, it is conceivable that the sub-video information shown in FIG. 68(C) is multiplexed using a mechanism such as a subtitle stream in a BD-ROM (a mechanism which can be selectively displayed or not displayed by a user).

In this case, if the user wishes, the user can enjoy a still image slideshow in the format shown in FIG. 68(A) where the supplemental information is also displayed instead of the still image slideshow including still images only as shown in FIG. 68(B).

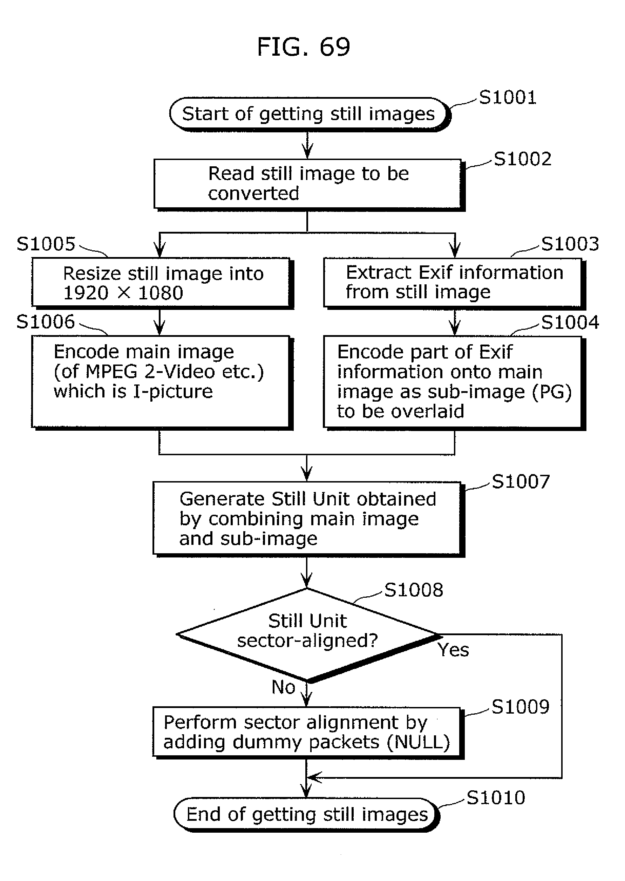

FIG. 69 is a flowchart for generating a slideshow divided into a main video image and a sub-video image as shown in FIG. 68(A) to 68(C) based on the still images and Exif information in the digital still camera.

When input of still images is started (S1001), the still images to be converted are read first (S1002). The Exif information is extracted from a still image (S1003), a part of the Exif information is encoded as sub-video image which is overlaid onto the main video image (S1004).

In addition, a still image is resized to the size of 1920 x 1080 pixels (S1005). After the resizing, the still image is encoded as main video (such as MPEG2-Video) structured with an I-picture (S1006).

As described above, the main video image and sub-video image are generated, and a Still Unit in which the main video image and the sub-video image are combined is generated (S1007).

In the case where the Still Unit has been sector aligned (Yes, in S1008), the processing for inputting still images is ended (S1010).

In the opposite case where the Still Unit has not been sector aligned (No, in S1008), the Still Unit is sector aligned by being added with dummy packets (NULL packets) (S1009). Subsequently, the processing for inputting still images is ended (S1010).

In general, most of digital still cameras handle images with pixels exceeding 1920 x 1080 pixels in a full HD, and an image is encoded as an I-picture by being resized to the HD size. In addition, predetermined Exif information is extracted and encoded as a subtitle stream (PG stream: Presentation Graphics stream).

Multiplexing is performed after the encoding; the multiplexing is ended by inserting dummy packets so that sector alignment is achieved on a StillUnit-by-StillUnit basis.

With the device for recording and reproducing an optical disc and the recording and reproducing method of the same according to this embodiment, a still image slideshow can be edited much easily by aligning a logical unit of the still image slideshow recorded on the optical disc to a recording unit (sector) of the recording medium.

In addition, the embodiment is useful also in the case of recording the still image slideshow onto recording media such as hard discs and semiconductor memories, not limited to the optical disc, and applicable to AV recorders for recording it onto various types of recording media, recording media on which it is recorded, and AV players for recording these recording media.

**Industrial Applicability**

The present invention can provide information recording media capable of easily identifying and deleting files related to existing disc menus when video contents and the like are additionally written. Information recording media are not limited to disc media, and can be implemented as recording media such as semiconductor memories. Thus, the present invention is especially useful as information recording media used in the movie industry and the industry of consumer devices where video contents are generated.

**Claims**

1. An information recording medium on which a title is recorded, the title being an audio and video (AV) content which constitutes a segment corresponding to a part of a digital stream or the entire digital stream,
   wherein the following is stored on said information recording medium:

   a playlist including information for identifying the title by specifying a position and an order of reproduction of the segment in the digital stream;
   a program for controlling the reproduction of the title by calling the playlist;
   index information including, in an associated manner, title identification information for identifying the title and program identification information for identifying the program; and
   extension information including, in an associated manner, the title identification information and the playlist identification information for identifying the playlist.

2. The information recording medium according to Claim 1,
   wherein, titles are recorded on said information recording medium, and
   the extension information further includes title numbers which are the numbers corresponding to the title identification information of the titles, the title numbers being associated with the playlist identification information of the playlists and being arranged in order of recording dates of playlists.

3. The information recording medium according to Claim 1,
   wherein, titles are recorded on the information recording medium, and
   a title among the titles is a menu allowing a user to select a title other than the title which is the menu, and
   the extension information further includes maker identification information for identifying a maker of a recording device which has recorded the menu onto the information recording medium.

4. A recording device which records a digital stream onto the information recording medium according to Claim 1,
   wherein, titles are recorded on the information recording medium,
   a title among the titles is a menu allowing a user to select a title other than the title which is the menu, and
   said recording device includes:

   a playlist identifying unit operable to identify a playlist which is called by a program which controls reproduction of the menu by using the playlist identification information associated with title identification information of the menu, the playlist identification information being included in the extension information;
a menu generating unit operable to generate a new menu to replace the stored menu and store the new menu onto the information recording medium; and
a deleting unit operable to delete the playlist identified by the playlist identifying unit in the case where the new menu is generated by said menu generating unit.

**5.** The recording device according to Claim 4,
wherein the playlist further includes management information of a title which is identified by the playlist, and
said deleting unit is further operable to delete, from the information recording medium, a segment of the digital stream which is specified by the playlist and the management information of the title, in the case where the playlist is deleted.

**6.** The recording device according to Claim 4, further comprising an editing unit operable:

to add a new title to the information recording medium: and
to add a number as a title number of the new title to the extension information, the number being subsequent to a last title number on the information recording medium so that the added title number is associated with playlist identification information of a playlist relating to the new title.

**7.** The recording device according to Claim 4,
wherein the extension information further includes title numbers which are the numbers corresponding to the title identification information of the titles, the numbers being associated with the playlist identification information of the playlists and being arranged in order of recording dates of playlists,
said recording device further comprises a number reading unit operable to read a title number included in the extension information, and
said menu generating unit is operable to generate the new menu so as to display, on the new menu, the title number read by said number reading unit and the title associated with the title number.

**8.** The recording device according to Claim 7, further comprising
an editing unit operable to edit a title recorded on the information recording medium,
wherein said playlist identifying unit is further operable, in the case where a title recorded on the information recording medium has been deleted by said editing unit, to identify a playlist related to the deleted title by using the playlist identification information associated with a title number of the deleted title, the title number being stored in the extension information, and
said editing unit is operable to replace a segment of a digital stream indicated in the playlist identified by said playlist identifying unit with a digital stream which has a content indicating that the title has been deleted.

**9.** The recording device according to Claim 4,
wherein the extension information further includes maker identification information for identifying a maker of a recording device which has recorded the menu onto the information recording medium,
said recording device further comprises a judging unit operable to judge whether or not a maker indicated in the maker identification information included in the extension information matches a maker of said recording device,
said menu generating unit is operable to generate the new menu in the case where said judging unit has judged that the maker indicated in the maker identification information does not match the maker of said recording device, and
said deleting unit is operable to delete the playlist identified by said playlist identifying unit in the case where said judging unit has judged that the maker indicated in the maker identification information does not match the maker of said recording device.

**10.** A recording method for recording a digital stream onto the information recording medium according to Claim 1,
wherein, titles are recorded on the information recording medium,
a title among the titles is a menu allowing a user to select a title other than the first title which is the menu, and
said recording method includes:

a playlist identifying step of identifying a playlist which is called by a program which controls reproduction of the menu by using the playlist identification information associated with title identification information of the menu, the playlist identification information being included in the extension information;
a menu generating step of generating a new menu to replace the menu and store the new menu onto the information recording medium; and

a deleting step of deleting the playlist identified in the playlist identifying step in the case where the new menu is generated in said menu generating step.

11. A program for recording a digital stream onto the information recording medium according to Claim 1, wherein, titles are recorded on the information recording medium, a title among the titles is a menu allowing a user to select a title other than the title which is the menu, said program causes a computer to execute:

a playlist identifying step of identifying a playlist which is called by a program which controls reproduction of the menu by using the playlist identification information associated with title identification information of the menu, the playlist identification information being included in the extension information;
a menu generating step of generating a new menu to replace the menu and store the new menu onto the information recording medium; and
a deleting step of deleting the playlist identified by the playlist identifying step in the case where the new menu is generated in said menu generating step.

12. An integrated circuit which records a digital stream onto the information recording medium according to Claim 1, wherein, titles are recorded on the information recording medium, a title among the titles is a menu allowing a user to select a title other than the title which is the menu, and said integrated circuit includes:

a playlist identifying unit operable to identify a playlist which is called by a program which controls reproduction of the menu by using the playlist identification information associated with title identification information of the menu, the playlist identification information being included in the extension information;
a menu generating unit operable to generate a new menu to replace the menu and store the new menu onto the information recording medium; and
a deleting unit operable to delete the playlist identified by the playlist identifying unit in the case where the new menu is generated by said menu generating unit.

# FIG. 1

ROOT Directory

VIDEO_TS

Group of files

VIDEO_TS.IFO

VTS_01_0.IFO

VTS_01_0.VOB

. . .

DVD navigation space

VMGI

VTSI        VTSI

Command

PGC   Cell   Cell

Logical address specification

VOB    VOB

File system    · · ·    · · ·

Lead-in    Logical address space    Lead-out

DVD disc

# FIG. 2

Highlighted area (rectangular area)

```
NV_PCK(Navi pack)

  Highlight color information
  Color palette _____
  ...
  Button information #1:
    Rectangular area information
    Highlight move information
    Button command information
  Button information #2:
  ...
```

(Overlay image)

Button 1  Button 2

(Background image)

To reproduction of Title 2

Pack

NV            NV

MPEG stream

EP 1 909 281 A1

# FIG. 3

(1)

(2)

(3)  V N V A V V A S V S

NV_PCK

(4)

Demultiplexer → Video buffer → Video decoder →

→ Audio buffer → Audio decoder →

→ Subtitle buffer → Subtitle decoder →

「あいうえお」「かきくけこ」

EP 1 909 281 A1

## FIG. 4

| |
|---|
| BD reproduction program |

— 101

| |
|---|
| BD management data (Scenario, AV management information) |

— 102

| |
|---|
| AV data (MPEG/PNG) |

— 103

| |
|---|
| BD disc |

— 104

EP 1 909 281 A1

# FIG. 5

ROOT

BDVIDEO

| BD.INFO |
| :---: |
| BD.PROG |
| XXX.PROG |
| XXX.PL |
| YYY.VOBI |
| YYY.VOB |
| ZZZ.PNG |

| Lead-in | Volume | | Lead-out |

BCA

## FIG. 6

Program storage memory (203) → Program → Program processing unit (206) ← User event

Management information storage memory (204) → Management information → Management information processing unit (207)

AV storage memory (205) → AV data → Presentation processing unit (208) → Image plane (209), Video plane (210) → (211)

202, 104

EP 1 909 281 A1

FIG. 7

FIG. 8

Global Event Handler
Program

PlayList#3
Cell#1
Program

Program

Link

Resume

Menu Call

Event
Program
Cell#2

PlayList#2
Cell#1    Cell#2

PlayList#1
Cell#1

VOBI#1
TM

VOBI#2
TM

VOBI#3
TM

VOB#1(MPEG)

VOB#2(MPEG)

VOB#3(MPEG)

# FIG. 9

Group of Pictures

B  B  I  B  B  P  B  B  P  B  B  P  B  B  P

| V_PCK | V_PCK | A_PCK | V_PCK | | V_PCK | A_PCK |
|---|---|---|---|---|---|---|

| VOBU#1 | VOBU#2 | | VOBU#M |
|---|---|---|---|

EP 1 909 281 A1

# FIG. 10

SCR     ID   PTS(/DTS)

| Pack header | Packet header | Payload |

Packet

Pack

**FIG. 11**

Control signal (drawing instruction)

308 — Image memory

311 — Image processor

104

Track buffer (FIFO) — 309

Va | Vb | SCR

Demultiplexer — 310

Video processor — 312

Sound processor — 313

VOB data file "001.VOB"

PNG file "001.PNG"

PNG file "002.PNG"

EP 1 909 281 A1

# FIG. 12

Image storage area or seek

Contiguous VOB storage area

a1         a2     a3

$B(t)$

$B(t2)$

Va-Vb

-Vb

t1       t2   t3     t

EP 1 909 281 A1

# FIG. 13

# FIG. 14

EP 1 909 281 A1

Time domain

| Duration | 12 frames | 9 frames | 15 frames | 12 frames |
|----------|-----------|----------|-----------|-----------|
| Size | 53 packs | 48 packs | 62 packs | 52 packs |

Address domain

## FIG. 15

Time

| 9 frames | 15 frames |
|----------|-----------|
| 48 packs | 62 packs |

Address

# FIG. 16

XXX.PL

CellList
EventList

| Number |
|---|
| Cell#1 |

| |
|---|
| Cell#n |

| VOBName |
|---|
| In |
| Out |
| SubtitleTable |

| Number |
|---|
| Event#1 |

| |
|---|
| Event#m |

| Type |
|---|
| ID |
| Time |
| Duration |

| Number |
|---|
| Language#1 |

| |
|---|
| Language#k |

| Lang |
|---|
| Number |
| Speech#1 |

| |
|---|
| Speech#j |

| Name |
|---|
| In |
| Out |
| Position |

EP 1 909 281 A1

## FIG. 17

```
<event_handler id="Event1">
function Event1()
{
  . . .
}
</event_handler>
```

Number | Program#1 | Program#n

XXX.PROG

## FIG. 18

## FIG. 19

EP 1 909 281 A1

BD.PROG

| Number |
|--------|
| Program#1 |
| Program#n |

```
<event_handler id="Event1">
  function Event1()
  {
    . . .
  }
</event_handler>
```

FIG. 20

PlayList#1

Pre · · · Post

Cell#1 Cell#2

Image plane

Type="TimeEvent"
ID="Ex1"
Time="t1"
Duration="0"

Program "Ex1"

Image drawing

Timeline

t1

FIG. 21

Pre    . . .    Post

PlayList#1

Cell#1     Cell#2

PlayList#2

Cell#1

Remote controller

*Type*="UserEvent"
*ID*="Ev1"
*Time*="t1"
*Duration*="T1"

Program
*"Ev1"*

T1

Timeline

t1

EP 1 909 281 A1

# FIG. 22

PlayList#3

Cell#1

*Type*="GlobalEvent"  
*ID*="menu"

Remote controller

Menu

Program  
*"menu"*

Timeline

FIG. 23

Programming function

Java(registered trademark)Script

Draw(*File*,*x*,*y*)

Link(*PL#*,*Cell#*,*time*)

Player variable

SPRM8 GPRM8
SPRM7 GPRM7
SPRM6 GPRM6
SPRM5 GPRM5
SPRM4 GPRM4
SPRM3 GPRM3
SPRM2 GPRM2
SPRM1 GPRM1
SPRM0 GPRM0

302

Program processor

303

UO manager

305

Scenario processor

311

Image processor

EP 1 909 281 A1

# FIG. 24

Player variables (System parameters)

| | | | | | | | |
|---|---|---|---|---|---|---|---|
| 0 | Language Code | 11 | Player audio mixing mode for Karaoke | 22 | reserved |
| 1 | Audio stream number | 12 | Country code for parental management | 23 | Player status |
| 2 | Subtitle stream number | 13 | Parental level | 24 | reserved |
| 3 | Angle number | 14 | Player configuration for Video | 25 | reserved |
| 4 | Title number | 15 | Player configuration for Audio | 26 | reserved |
| 5 | Chapter number | 16 | Language code for AST | 27 | reserved |
| 6 | Program number | 17 | Language code ext. for AST | 28 | reserved |
| 7 | Cell number | 18 | Language code for STST | 29 | reserved |
| 8 | Key name | 19 | Language code ext. for STST | 30 | reserved |
| 9 | Navigation timer | 20 | Player region code | 31 | reserved |
| 10 | Current playback time | 21 | reserved | 32 | reserved |

EP 1 909 281 A1

# FIG. 25

PlayList#1

Cell#1

Event List  |  *Pre*  |  *Event*  |  *Post*

```
<event_handler id="pre">
function {
    GPRM(0)=1;
    Draw("1black.png", 10, 200);
    Draw("2white.png", 330, 200);
}
</event_hander>
```

```
<event_handler id="post">
function {
    Link(-,-, 0);
}
</event_hander>
```

| 1 | 2 |

Return to cell top

FIG. 26

PlayList#1

Cell#1

Event List   Pre   Event   Post

```
<event_handler id="event1">
function {
  if(GPRM(0) == 1 && SPRM(8) =="Right") {
    GPRM(0) = 2;
    Draw("1white.png", 10, 200);
    Draw("2black.png", 330, 200);
  } else SPRM(8) =="OK" ) {
    if(GPRM(0) == 1) {
      Link(PL#2, Cell#1, 0);
    } else {
      Link(PL#3, Cell#1, 0);
    }
    .........
  }
}
</event_hander>
```

1  2  >  1  2

Reproduction of PL#2, Cell#1

Reproduction of PL#3, Cell#1

EP 1 909 281 A1

# FIG. 27

```
         ┌─────S101                              ┌─────S201
  ┌──────────────────┐              ┌────────────────────┐
  │    Insert disc   │              <  UO received?       >──── No
  └──────────────────┘              └────────────────────┘
         │                                    │ Yes
         │      S102                          │      S202
  ┌──────────────────┐              ┌────────────────────┐
  │   Read BD.INFO   │              │  Generate UO event │
  └──────────────────┘              └────────────────────┘
         │                                    │
         │      S103                          │      S203
  ┌──────────────────┐              ┌────────────────────┐
  │   Read BD.PROG   │              <      Menu?          >──── No
  └──────────────────┘              └────────────────────┘
         │                                    │ Yes
         │      S104                          │      S204
  ┌──────────────────┐              ┌────────────────────┐
  │Generate FirstEvent│             │   Generate Event   │
  └──────────────────┘              └────────────────────┘
         │                                    │
         │      S105                          │      S205
  ┌──────────────────┐              ┌────────────────────┐
  │    Execute       │              │     Execute        │
  │  EventHandler    │              │   EventHandler     │
  └──────────────────┘              └────────────────────┘
```

# FIG. 28

Start reproduction of PL — S301

↓

Read XXX.PL — S302

↓

Read XXX.PROG — S303

↓

Start reproduction of Cell — S304

↓

Start reproduction of AV — S305

Read YYY.VOBI — S402

↓

Read YYY.VOB — S403

↓

Start reproduction of VOB — S404

↓

Reproduction of VOB ended? — S405   No

Yes

Next Cell? — S406   No

Yes

END

EP 1 909 281 A1

# FIG. 29

(A)

Start reproduction of PL ⟋S501

Reproduction of PL ended? ⟋S502

Yes → END

No

Time for TimeEvent? ⟋S503

No

Yes

Generate Event ⟋S504

Execute EventHandler ⟋S505

(B)

Start reproduction of PL ⟋S601

Reproduction of PL ended? ⟋S602

Yes → END

No

UO accepted? ⟋S603

No

Yes

Generate UO event ⟋S604

Menu? ⟋S605

No

UserEvent valid? ⟋S606

No

Yes

Yes

Generate Event ⟋S607

Execute EventHandler ⟋S608

EP 1 909 281 A1

75

# FIG. 30

EP 1 909 281 A1

## FIG. 31

| | Recorder-A | Recorder-B |
|---|---|---|
| Device menu displayed on recorder | Thumbnail 1   Thumbnail 2   Thumbnail 3   ◁ ▷ <br><br> (Displayed by Recorder-A) | 1   2006.01.01 12:34:56 <br> 2   2006.01.01 23:45:01 <br> 3   2006.05.02 01:23:45 <br> 4   Not Recorded Yet <br><br> (Displayed by Recorder-B) |
| Disc menu displayed on player | **2006 Dad's Best Shots** <br><br> Button1 (Title1)   Button2 (Title2)   Button3 (Title3) <br> 2006.01.01 12:34:56   2006.01.01 23:45:01   2006:05:02 01:23:45 <br><br> Slide 1 of 1 <br><br> (Generated by Recorder-A) | **2006 Dad's Best Shots** <br><br> Button1 (Title1)   Button2 (Title2)   Button3 (Title3) <br><br> Date: 2006.01.01 23:45:01 <br> Name: New Year's Party <br><br> (Generated by Recorder-B) |

EP 1 909 281 A1

# FIG. 32

| BD.INFO | | | | |
|---|---|---|---|---|

| : |
|---|
| Index |
| : |

| FirstPlayback | → | ProgramIDRef |
|---|---|---|
| TopMenu | | ProgramIDRef |
| TitleNumber | | |
| Title#1 | | ProgramIDRef |
| : | | |
| Title#n | | |

FIG. 33

EP 1 909 281 A1

```
Program(){
  ....
  if (GPRM0==0){
    PlayPlayList(111);
  }
  else if (GPRM0==GPRM3){
    PlayPlayList(GPRM0+2);
  ....
}
```

BD.PROG

| : |
| ProgramNumber |
| Program |

| Program#1 |
| : |
| Program#m |

# FIG. 34

EP 1 909 281 A1

# FIG. 35(A)

| | Objects to be processed in addition/deletion | | | | |
|---|---|---|---|---|---|
| | BD.INFO | BD.PROG (Each program) | XXX.PL | YYY.VOBI | YYY.VOB |
| FirstPlayback | Regenerated or unchanged | Regenerated (1) | Regenerated (1) | Regenerated (2) | Regenerated (1) |
| TopMenu | Regenerated or unchanged | Regenerated (1) | Regenerated (1) | Regenerated (2) | Regenerated (1) |
| Title | Regenerated or unchanged(3) | Regenerated (1) | Unchanged (4) | Unchanged (4) | Unchanged (4) |

# FIG. 35(B)

| (1) | Original data cannot be reused because policies for reproducing menu/title are unknown, and generate new data |
|---|---|
| (2) | Generate new YYY. VOBI suitable for new YYY. VOB |
| (3) | Contents (PL/VOBI/VOB) originally recorded by user do not have to be changed |
| (4) | Problem that PlayList#m (content) referred to by Title#n is changed exists |

EP 1 909 281 A1

# FIG. 36

# FIG. 37

(A)

| Associations between titles/playlists/contents before update of menu | | |
|---|---|---|
| TitleID (title numbers of BD.INFO within Index (description order)) | PlayListID (playlist numbers associated with titles) | Description of contents (description recorded in VOB referred to by playlist) |
| 1 | 101 | Content A |
| 2 | 102 | Content B |
| 3 | 103 | Content C |

(B)

| Associations between titles/playlists/contents after update of menu (when Title 2 deleted, and newly-recorded content defined in Title 4) | | |
|---|---|---|
| TitleID (title numbers of BD.INFO within Index (description order)) | PlayListID (playlist numbers associated with titles) | Description of contents (description recorded in VOB referred to by playlist) |
| 1 | 101 | Content A |
| 2 | 102 | Description indicating deletion (example, "Deleted Title" displayed on screen) |
| 3 | 103 | Content C |
| 4 | 104 | Content D |

EP 1 909 281 A1

EP 1 909 281 A1

# FIG. 38

## FIG. 39

Start of recording/editing — S801

Read BD.INFO and BD.PROG — S802

Obtain last title number (Tn) from Index of BD.INFO — S803

Update XXX.PL/YYY.VOBI/YYY.VOB — S804

Assign titles newly recorded after Tn-th Index of BD.INFO — S805

Assign dummy data to titles deleted before Tn-th Index of BD.INFO — S806

Write updated BD.INFO and BD.RPOG — S807

End of recording/editing — S808

# FIG. 40

BD.INFO

AppInfo
TitleList
ExtensionData

FirstPlayback
TopMenu
Number
Title#1

Title#n

FIG. 41

FIG. 42

(1) Subtitles      Audio      Subtitles      Navigation

「あいうえお」

(2) V_PES      A_PES      S_PES      NV_DS

(3) | V | N | V | A | V | S | A | N |

MPEG-TS

(4)

Demultiplexer

Video buffer → Video decoder →

Audio buffer → Audio decoder →

Buffer for subtitles → Decoder for subtitles →

Buffer for navigation → Decoder for navigation →

EP 1 909 281 A1

# FIG. 43

Page information{
    Page ID
    Animation information
    Palette information
    Default selection button ID
    Default execution button ID
    Button group information
    . . . .
}

Button 1    Button 2

Page 1

NV    NV

MPEG-TS

# FIG. 44

Button information{
   Button ID
   Area information
   Automatic execution availability flag
   Button transition information
   Status information
   Execution command
}
.....

Button 1

Button 2

NV

NV

MPEG-TS

EP 1 909 281 A1

## FIG. 45

Page 1

Top menu

Page 1 off
Page 2 on

Button 1

Button 2

Page 1 off
Page 3 on

Submenu 1

Page 2

Button 3

Change chapter to be reproduced

Submenu 2

Page 3

Button 4

Transit to Object#N

Button 5

Switch subtitle streams

Object#N

Play back XXX.PL

EP 1 909 281 A1

EP 1 909 281 A1

FIG. 46

Chapter
(EVENT#1)

Chapter
(EVENT#2)

Chapter
(EVENT#3)

V_PES

I-frame
image

I-frame
image

I-frame
image

...........

Skip

Skip

Image 1

Image 2

Image 3

MPEG-TS

# FIG. 47

(A)

My son, 2 years old, in 2005

| A | B | C |

| D | E | F |

(B)

1
A B C
D E F

2
G H I
J K L

3
M N O
P Q R

## FIG. 48

BD.INFO

- AppInfo
- TitleList
- ExtensionData

- FirstPlaybackMeta()
- TopMenuMeta()
- Number
- Title#1Meta
- Title#nMeta

- Title Domain
- TitleMeta()

FirstPlayBackMeta()/
TopMenuMeta()/
TitleMeta()

- PLNameList
- ObjectIDList

- Number
- PL_Name
- . . . .

- Number
- ObjectID
- . . . .

EP 1 909 281 A1

# FIG. 49

**BD.INFO**

| TitleList |
| --- |
| . . . |
| IndexExtentionData() |

| DiscInfo |
| --- |
| PLTable |

| Disc title |
| --- |
| Disc thumbnail |

| PL_FileName |
| --- |
| PL_Type |
| Date of PL generation |
| Title of PL |
| MarkTable |

| PL_Number |
| --- |
| PL#1 |
| |
| PL#m |

| Mark_Number |
| --- |
| Mark#1 |
| |
| Mark#n |

| Mark_Type |
| --- |
| Thumbnail |
| Date of image capturing |
| PL reference information |

## FIG. 50

Mark     Mark     Mark

| Real PlayList | | Virtual PlayList |

| ClipInfo(VOBI) | ClipInfo |

| Mpeg-TS | Mpeg-TS |

Shot    Shot    Shot

Start of image capturing    Pause in image capturing

EP 1 909 281 A1

## FIG. 51

EVENT#1
·Shot-Mark
·Thumbnail A
·Date of image capturing 1

EVENT#2
·Shot-Mark
·Thumbnail B
·Date of image capturing 2

EVENT#3
·Shot-Mark
·Thumbnail C
·Date of image capturing 3

Image capturing order

MPEG-TS

EP 1 909 281 A1

## FIG. 52(A)

BD.INFO

| PL_Number |
|---|
| PL#1 (Real) |
| PL#2 (Real) |
| PL#3 (Virtual) |
| PL#4 (Real) |

| Mark#1_1 (Shot) | ← [1] |
|---|---|
| Mark#1_2 (PL) | |
| Mark#1_3 (Shot) | ← [2] |

| Mark#2_1 (Shot) | ← [3] |
|---|---|
| Mark#2_2 (PL) | |

| Mark#4_1 (Shot) | ← [4] |
|---|---|
| Mark#4_2 (Shot) | ← [5] |
| Mark#4_3 (PL) | |

## FIG. 52(B)

Shot menu

| Mark#1_1 | Mark#1_3 | Mark#2_1 |
|---|---|---|
| Mark#4_1 | Mark#4_2 | |

EP 1 909 281 A1

# FIG. 53

**BD.INFO**

| AppInfo |
|---|
| TitleList |
| IndexExtentionData() |

| FirstPlayback |
|---|
| TopMenu |
| Number |
| Title#1 |

| Title#n |
|---|

| DiscInfo |
|---|
| PLTable |

| Title of Disc |
|---|
| Thumbnail of Disc |

| PL_Number |
|---|
| PL#1 |
| PL#m |

| PL_FileName |
|---|
| PL_Type |

## FIG. 54

XXX.PL

| CelList |
| --- |
| . . . |
| PlayListExtentionData() |

| Date of PL generation |
| --- |
| Title of PL |
| Thumbnail of PL |
| MarkTable |

| Mark_Number |
| --- |
| Mark#1 |
| |
| Mark#n |

| Mark_Type |
| --- |
| Thumbnail |
| Date of image capturing |

## FIG. 55(A)

```
         ┌─────────────────────┐          ┌──────────────────────┐
         │      PL_Number      │          │  Mark#1_1 (Shot)     │ ← [1]
  ┌────┐ ├─────────────────────┤          ├──────────────────────┤
  │BD. │ │     PL#1 (Real)     │          │  Mark#1_2 (Oldshot)  │
  │INFO│ ├─────────────────────┤          ├──────────────────────┤
  └────┘ │     PL#2 (Real)     │          │  Mark#1_3 (Shot)     │ ← [2]
         ├─────────────────────┤          └──────────────────────┘
         │   PL#3 (Virtual)    │
         ├─────────────────────┤          ┌──────────────────────┐
         │     PL#4 (Real)     │          │  Mark#2_1 (Shot)     │ ← [3]
         └─────────────────────┘          ├──────────────────────┤
                                          │  Mark#2_2 (Oldshot)  │
                                          └──────────────────────┘

                                          ┌──────────────────────┐
                                          │  Mark#4_1 (Shot)     │ ← [4]
                                          ├──────────────────────┤
                                          │  Mark#4_2 (Shot)     │ ← [5]
                                          ├──────────────────────┤
                                          │  Mark#4_3 (Oldshot)  │
                                          └──────────────────────┘
```

## FIG. 55(B)

```
┌────────────────────────────────────────────────────┐
│                                                     │
│                   Shot menu                         │
│                   ─────────                         │
│                                                     │
│   ┌──────────┐  ┌──────────┐  ┌──────────┐          │
│   │ Mark#1_1 │  │ Mark#1_3 │  │ Mark#2_1 │          │
│   └──────────┘  └──────────┘  └──────────┘          │
│                                                     │
│   ┌──────────┐  ┌──────────┐                        │
│   │ Mark#4_1 │  │ Mark#4_2 │                        │
│   └──────────┘  └──────────┘                        │
│                                                     │
└────────────────────────────────────────────────────┘
```

EP 1 909 281 A1

# FIG. 56

▽ Entry Mark(MarkType=ShotMark)

(A)

| PlayList1 | | |
|---|---|---|
| ClipInfo1 | ClipInfo2 | ClipInfo3 |
| ▽ | ▽ | ▽ |
| Shot1 | Shot2 | Shot3 |

|←20min→|←20min→|←20min→|

9/1　　　9/5　　　10/1
12:00　　9:30　　19:31

(B)

| PlayList1 | | |
|---|---|---|
| ClipInfo1 | ClipInfo2 | ClipInfo3 |
| ▽ | | ▽ |
| Shot1 | | Shot3 |

|←————40min————→|←20min→|

9/1　　　　　　　　10/1
12:00　　　　　　　19:31

(C)

| PlayList1 | | |
|---|---|---|
| ClipInfo1 | ClipInfo2 | ClipInfo3 |
| ▽ | ▽ | ▽ |
| Shot1 | Shot4 | Shot3 |

|←—25min—→|

9/1　　　**9/1**　　10/1
12:00　　**12:25**　19:31

✗

Correct image-capturing date information cannot be calculated

EP 1 909 281 A1

## FIG. 57

▼ Entry Mark(MarkType=ShotMark)
▽ LinkPoint(MarkType=OldShotMark)

(A)

PlayList1

| ClipInfo1 | ClipInfo2 | ClipInfo3 |
|---|---|---|
| Shot1 | Shot2 | Shot3 |

9/1
12:00    ←20min→ 9/5    ←20min→ 10/1   ←20min→
         9:30           19:31

(B)

PlayList1

| ClipInfo1 | ClipInfo2 | ClipInfo3 |
|---|---|---|
| Shot1 | | Shot3 |

9/1
12:00    ←40min→  9/5    ←20min→
                  9:30   10/1
                         19:31

(C)

PlayList1

| ClipInfo1 | ClipInfo2 | ClipInfo3 |
|---|---|---|
| Shot5 | Shot6 | Shot3 |

9/1
12:00    9/5     9/5    10/1
         9:30    9:35   19:31
                 ←5min→

○

Correct image-capturing date information can be calculated

103

# FIG. 58

| PES packet | PES header | PES payload (1 picture) |
|------------|------------|-------------------------|

| I-picture | AU Delimiter | SPS | PPS(s) | PEI(s) | Slices | Filler data |
|-----------|--------------|-----|--------|--------|--------|-------------|

| Inside of SEI | CC | · · · | HDM | · · · |
|---------------|-----|-------|-----|-------|

| HDM metadata | TC (DV) | Rec Date&Time | CAMERA (DV) | Exif (EXIF) | GPS (EXIF) | MAKER |
|--------------|---------|---------------|-------------|-------------|------------|-------|

Recording order based on the numbers of IDs is defined

EP 1 909 281 A1

## FIG. 59

| Syntax | bits | Mnemonic | memo |
|---|---|---|---|
| user_data_unregistered(payloadSize){ | | | |
|   uuid_iso_iec_11578 | 128 | uimsbf | |
|   type_indicator | 32 | uimsbf | |
|   while ( process < payloadSize - 20 ){ | | | |
|    if ( type_indicator == 0x00000000 ){ | | | |
|     **cc_data()** | | | Closed Caption |
|    } | | | |
|    else if ( type_indicator == 0x00000010 ){ | | | |
|     **GOP_structure_map()** | | | GOP structure |
|    } | | | |
|    else if ( type_indicator == 0x00000020 ){ | | | |
|     **HDM_meta(){** | | | HDM metadata |
|      number_of_HDM_pack_entries | 8 | unimsbf | The number of HDM packs |
|      for ( i=0 ; i < number_of_HDM_pack_entries ; i++ ){ | | | |
|       **HDM_pack(){** | | | |
|        HDM_pack_ID | 8 | | Pack type |
|        HDM_pack_data | 32 | | Pack data |
|       } | | | |
|      } | | | |
|     } | | | |
|    } | | | |
|   } | | | |
| } | | | |

EP 1 909 281 A1

# FIG. 60

Most significant 4 bits of HDM_pack_ID →

Least significant 4 bits of HDM_pack_ID ↓

| | 0000 | 0001 | ··· | 0111 | ··· | 1010 | 1011 | 1100 | ··· | 1110 | 1111 |
|---|---|---|---|---|---|---|---|---|---|---|---|
| | | TIME | – | CAMERA | – | EXIF | GPS | GPS | – | MAKER | – |
| 0000 | | | | CONSUMER CAMERA1 | | EXPOSURE TIME | GPS VER ID | GPSDOP | | MAKER& MODEL | |
| 0001 | | | | CONSUMER CAMERA2 | | F NUMBER | LATITUDE REF | SPEED REF | | | |
| 0010 | | | | | | EXPOSURE PROG. | LATITUDE | SPEED | | | |
| 0011 | | TIME CODE | | LENS | | BRIGHTNESS VALUE | LATITUDE | TRACK REF | | | |
| 0100 | | BINARY GROUP | | GAIN | | EXPOSURE BIAS | LATITUDE | TRACK | | | |
| 0101 | | | | PEDESTAL | | MAX APERTURE | LONGITUDE REF | IMG DIRECT. REF | | | |
| 0110 | | | | GAMMA | | FLASH | LONGITUDE | IMG DIRECT. | | | |
| 0111 | | | | DETAIL | | FOCAL LENGTH | LONGITUDE | MAPDATUM | | MAKER OPTION | |
| 1000 | | REC DATE&TIME | | | | DCENE CAPTURE | LONGITUDE | MAPDATUM | | | |
| 1001 | | REC DATE&TIME | | | | WHITE BALANCE | ALTITUDE REF | | | | |
| 1010 | | | | | | | ALTITUDE | GPS OPTION | | | |
| 1011 | | | | CAMERA PRESET | | | TIME STAMP | | | | |
| 1100 | | | | FLARE | | EXIF OPTION | TIME STAMP | | | | |
| 1101 | | | | SHADING | | | TIME STAMP | | | | |
| 1110 | | | | KNEE | | | STATUS | | | | |
| 1111 | | | | SHUTTER | | | MEASURE MODE | | | | |

Margin in Table shows reserved areas (Reserved)

EP 1 909 281 A1

## FIG. 61

Start obtaining HDM metadata — S901

Obtain the number of HDM packs (number_of_HDM_pack_entries) — S902

Last data? — S903

No

All desired information obtained? — S905

No

Remaining desired information cannot be obtained (even if analysis continued)? — S906

Yes

Obtain one HDM_pack() from HDM_meta() — S907

Yes → End obtaining HDM metadata — S904

End obtaining HDM metadata — S904

## FIG. 62

| EXIF | Information and precision | Packs in **CAMERA** column in which information of same kind can be stored |
|---|---|---|
| EXPOSURE TIME | Exposure time (sec) RATIONAL description | CAMERA PRESET SHUTTER |
| F NUMBER | F value RATIONAL description | CONSUMER CAMERA 1 LENS |
| EXPOSURE PROG. | Class of exposure program | CONSUMER CAMERA 1 |
| BRIGHTNESS VALUE | Luminance value of subject (APEX) SRATIONAL description | None |
| EXPOSURE BIAS | Exposure correction value (APEX) SRA TIONAL description | None |
| MAX APERTURE | Minimum F value (APEX) RATIONAL description | None |
| FLASH | Strobo state | None |
| FOCAL LENGTH | Focal distance (mm) RATIONAL description | CONSUMER CAMERA 1 CONSUMER CAMERA 2 |
| SCENE | Scene type | None |
| CUSTOM RENDERED | Individual image processing | None |
| WHITE BALANCE | White balance mode | CONSUMER CAMERA 1 |

# FIG. 63

Most significant 4 bits of HDM_pack_ID →

| | 0000 | 0001 | ⋯ | 0111 | ⋯ | 1010 | 1011 | 1100 | ⋯ | 1110 | 1111 |
|---|---|---|---|---|---|---|---|---|---|---|---|
| | | TIME | – | CAMERA | – | EXIF | GPS | GPS | – | MAKER | – |
| 0000 | | | | CONSUMER CAMERA1 | | EXPOSURE TIME | GPS VER ID | GPSDOP | | MAKER& MODEL | |
| 0001 | | | | CONSUMER CAMERA2 | | F NUMBER | LATITUDE REF | SPEED REF | | | |
| 0010 | | | | | | EXPOSURE PROG. | LATITUDE | SPEED | | | |
| 0011 | | TIME CODE | | LENS | | BRIGHTNESS VALUE | LATITUDE | TRACK REF | | | |
| 0100 | | BINARY GROUP | | GAIN | | EXPOSURE BIAS | LATITUDE | TRACK | | | |
| 0101 | | | | PEDESTAL | | MAX APERTURE | LONGITUDE REF | IMG DIRECT. REF | | | |
| 0110 | | | | GAMMA | | FLASH | LONGITUDE | IMG DIRECT. | | | |
| 0111 | | | | DETAIL | | FOCAL LENGTH | LONGITUDE | MAPDATUM | | MAKER OPTION | |
| 1000 | | REC DATE&TIME | | | | SCENE CAPTURE | LONGITUDE | MAPDATUM | | | |
| 1001 | | REC DATE&TIME | | | | WHITE BALANCE | ALTITUDE REF | | | | |
| 1010 | | | | | | | ALTITUDE | | | | |
| 1011 | | | | CAMERA PRESET | | | TIME STAMP | GPS OPTION | | | |
| 1100 | | | | FLARE | | EXIF OPTION | TIME STAMP | | | | |
| 1101 | | | | SHADING | | | TIME STAMP | | | | |
| 1110 | | | | KNEE | | | STATUS | | | | |
| 1111 | | | | SHUTTER | | | MEASURE MODE | | | | |

Least significant 4 bits of HDM_pack_ID ↓

Same data described in EXIF columns described in CAMERA columns
➡ Basic optical parameters can be obtained by analyzing CAMERA columns only

EP 1 909 281 A1

# FIG. 64

BD-ROM disc

0001.vob

1 sector = 2 KB

Arrival Time Stamp

1 ECC block = 32 sectors

| ATS (4 B) | TS packet (188 B) | ATS (4 B) | TS packet (188 B) | ... | ATS (4 B) | TS packet (188 B) |
|---|---|---|---|---|---|---|

3 sectors = 32 packets

1 Timed TS packet (192 B)

EP 1 909 281 A1

# FIG. 65

XXX.PROG
Reproduce XXX.PL using Link (PL, Cell, time)

XXX.PL
Cell#1
(In#1, Out#1)

YYY.VOB | Still Unit#1 | Still Unit#2 | Still Unit#3

PTS#1

Display period
for still image
of Still Unit #1

PTS#2

Display period
for still image
of Still Unit #2

PTS#3

Display period
for still image
of Still Unit #3

Reproduction time
(STC time axis)

In#1

Reproduction period of Cell #1
(playback time of XXX.PL)

Out#1

EP 1 909 281 A1

## FIG. 66

XXX.PROG
Reproduce XXX.PL using Link (PL, Cell, time)

XXX.PL

| Cell#1<br>(In#1, Out#1) | Cell#2<br>(In#2, Out#2) | Cell#3<br>(In#3, Out#3) |

YYY.VOB

| Still Unit#1 | Still Unit#2 | Still Unit#3 |

PTS#1

Display period
for still image
of Still Unit #1

(Reproduction
time of Cell #1)

PTS#2

Display period
for still image
of Still Unit #2

(Reproduction
time of Cell #2)

PTS#3

Display period
for still image
of Still Unit #3

(Reproduction
time of Cell #3)

Reproduction time
STC time axis
(broken line)

-----STC#1----> --------STC#2--------> ----STC#3----->

Out#1(In#2)          Out#2(In#3)

In#1          Reproduction period of XXX.PL          Out#3

# FIG. 67

XXX.PL

| Cell#1 | Cell#1 | Cell#1 |

YYY.VOB

| Still Unit#1 | Still Unit#2 | Still Unit#3 |

1 Still Unit (integral multiple of 6 KB)

Still image, PSI/SI, PCR
Sub-image stored

NULL packets

1 Timed TS Packet (192 B)

EP 1 909 281 A1

# FIG. 68

(A)

ISO100
1/10 second
2005.7.25

(B)

Main image
(still image)

(C)

ISO100
1/10 second
2005.7.25

Sub-image
(auxiliary information
for still image)

EP 1 909 281 A1

# FIG. 69

Start of getting still images — S1001

Read still image to be converted — S1002

S1005 — Resize still image into 1920 × 1080

S1003 — Extract Exif information from still image

S1006 — Encode main image (of MPEG 2-Video etc.) which is I-picture

S1004 — Encode part of Exif information onto main image as sub-image (PG) to be overlaid

S1007 — Generate Still Unit obtained by combining main image and sub-image

S1008 — Still Unit sector-aligned?

Yes

No

Perform sector alignment by adding dummy packets (NULL) — S1009

End of getting still images — S1010

## INTERNATIONAL SEARCH REPORT

| International application No. |
| --- |
| PCT/JP2006/314526 |

A. CLASSIFICATION OF SUBJECT MATTER
*G11B27/00*(2006.01)i, *G11B20/10*(2006.01)i, *G11B20/12*(2006.01)i, *H04N5/85*
(2006.01)i, *H04N5/91*(2006.01)i, *H04N5/93*(2006.01)i

According to International Patent Classification (IPC) or to both national classification and IPC

B. FIELDS SEARCHED

Minimum documentation searched (classification system followed by classification symbols)
G11B27/00, G11B20/10, G11B20/12, H04N5/85, H04N5/91, H04N5/93

Documentation searched other than minimum documentation to the extent that such documents are included in the fields searched
Jitsuyo Shinan Koho      1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2003-272358 A  (NEC Corp.),<br>26 September, 2003 (26.09.03),<br>Par. Nos. [0049], [0095] to [0102]; Figs. 2 to 14<br>& US 6904227 B1 | 1-2<br>3<br>4-12 |
| Y | JP 2000-57746 A  (Toshiba Corp.),<br>25 February, 2000 (25.02.00),<br>Par. Nos. [0288] to [0359]; Figs. 12 to 29<br>& US 6215746 B1 | 3 |
| A | JP 2002-175680 A  (Canon Inc.),<br>21 June, 2002 (21.06.02),<br>Full text; all drawings<br>(Family: none) | 1-12 |

☒ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>03 August, 2006 (03.08.06) | Date of mailing of the international search report<br>15 August, 2006 (15.08.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/314526

C (Continuation).   DOCUMENTS CONSIDERED TO BE RELEVANT

| Category* | Citation of document, with indication, where appropriate, of the relevant passages | Relevant to claim No. |
|---|---|---|
| A | WO 99/40586 A1  (Sanyo Electric Co., Ltd.), 12 August, 1999 (12.08.99), Full text; all drawings & EP 0980071 A1        & US 6816666 B1 | 1-12 |
| A | JP 2000-57745 A  (Samsung Electronics Co., Ltd.), 25 February, 2000 (25.02.00), Full text; all drawings & EP 0967609 A2        & US 2002/0127004 A1 | 3 |
| A | JP 2003-178552 A  (Samsung Electronics Co., Ltd.), 27 June, 2003 (27.06.03), Full text; all drawings (Family: none) | 3 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8083478 A

- JP 2813245 B